# EUROPEAN PATENT APPLICATION

(11) **EP 4 465 563 A1**
(43) Date of publication of application: **20.11.2024**
(21) Application number: 23755656.8
(22) Date of filing: 18.01.2023
(51) Int. Cl.: H04L 1/00

(54) **ENCODING METHOD, DECODING METHOD, AND RELATED APPARATUSES**

(30) Priority: 15.02.2022 CN 202210139282
(71) Applicant: Huawei Technologies Co., Ltd., Shenzhen, Guangdong 518129 (CN)
(72) Inventor: MA, Mengyao, Shenzhen, Guangdong 518129 (CN); TANG, Zihan, Shenzhen, Guangdong 518129 (CN); LI, Jiahui, Shenzhen, Guangdong 518129 (CN); XIE, Junwen, Shenzhen, Guangdong 518129 (CN); BI, Xiaoyan, Shenzhen, Guangdong 518129 (CN); GU, Jiaqi, Shenzhen, Guangdong 518129 (CN); LIN, Wei, Shenzhen, Guangdong 518129 (CN); DU, Yinggang, Shenzhen, Guangdong 518129 (CN)
(74) Representative: Gill Jennings & Every LLP
(86) International application number: PCT/CN2023/072789
(87) International publication number: WO 2023/155652

(57) **Abstract**

Embodiments of this application disclose an encoding method, a decoding method, and a related apparatus, to reduce an amount of data transmitted by a first communication apparatus, and reduce transmission overheads. The method in embodiments of this application includes: A first communication apparatus obtains a first transport block. The first communication apparatus converts the first transport block into S information segments, where S is an integer greater than or equal to 1. The first communication apparatus performs pre-processing on the S information segments based on X processing modes, to obtain G information groups, where each of the G information groups corresponds to one of the X processing modes, G is an integer greater than or equal to 1, and X is an integer greater than or equal to 1. The first communication apparatus determines C to-be-encoded code blocks based on the G information groups, where C is an integer greater than or equal to 1, and a sum of sizes of the C to-be-encoded code blocks is less than a size of the first transport block. The first communication apparatus performs channel coding on the C to-be-encoded code blocks, to obtain an encoded code block. The first communication apparatus outputs the encoded code block.

## Description

This application claims priority to Chinese Patent Application No. 202210139282.8, filed with the China National Intellectual Property Administration on February 15, 2022 and entitled "ENCODING METHOD, DECODING METHOD, AND RELATED APPARATUS", which is incorporated herein by reference in its entirety.

### TECHNICAL FIELD

This application relates to the field of communication technologies, and in particular, to an encoding method, a decoding method, and a related apparatus.

### BACKGROUND

In a communication system, a processing procedure of a terminal device for a transport block includes: channel coding, modulation, resource mapping, antenna mapping, and the like. A processing process of the channel coding includes: The terminal device attaches a cyclic redundancy check (cyclic redundancy check, CRC) to data of the transport block. Then, block splitting, channel coding, rate matching, code block concatenation, and the like are performed.

It can be learned that, currently, a terminal device in a communication system performs channel coding on a transport block. This helps protect a channel, but an amount of transmitted data is large. Consequently, transmission overheads are large.

### SUMMARY

This application provides an encoding method, a decoding method, and a related apparatus, to reduce an amount of data transmitted by a first communication apparatus, and reduce transmission overheads.

A first aspect of this application provides an encoding method, including:
A first communication apparatus obtains a first transport block. The first communication apparatus converts the first transport block into S information segments, where S is an integer greater than or equal to 1. The first communication apparatus performs pre-processing on the S information segments based on X processing modes, to obtain G information groups, where each of the G information groups corresponds to one of the X processing modes, G is an integer greater than or equal to 1, and X is an integer greater than or equal to 1. The first communication apparatus determines C to-be-encoded code blocks based on the G information groups, where C is an integer greater than or equal to 1, and a sum of sizes of the C to-be-encoded code blocks is less than a size of the first transport block. The first communication apparatus performs channel coding on the C to-be-encoded code blocks, to obtain an encoded code block. The first communication apparatus outputs the encoded code block.

In the foregoing technical solution, the first communication apparatus converts the first transport block to obtain the S information segments. Then, the first communication apparatus performs the pre-processing on the S information segments based on the X processing modes, to obtain the G information groups. Then, the first communication apparatus determines the C to-be-encoded code blocks based on the G information groups. Therefore, the sum of the sizes of the C to-be-encoded code blocks is less than the size of the first transport block, to implement data compression. Therefore, an amount of data transmitted by the first communication apparatus is reduced, and transmission overheads are reduced.

In a possible implementation, the processing mode corresponding to each of the G information groups is determined based on at least one of data locations, data types, data importance, data correlation, and data similarities that are of the S information segments;
the processing mode corresponding to each of the G information groups is preconfigured; or
the processing mode corresponding to each of the G information groups is indicated by a second communication apparatus.

In this implementation, a manner of determining the processing mode corresponding to each of the G information groups is provided, to facilitate implementation of the solution. For example, the processing mode corresponding to each of the G information groups is determined based on at least one of the data locations, the data types, the data importance, the data correlation, and the data similarities that are of the S information segments. In this way, a proper processing mode is selected for each information group. It is beneficial to place data of a same feature or a same type together, facilitating a subsequent quantization operation. For example, large data is placed together, and small data is placed together. Quantization may be subsequently performed by using different quantization precision. When quantities of quantized bits are the same, quantization losses are smaller. Second, it is beneficial to place important data together and place non-important data together. Different quantization precision or different bit selection ratios can be subsequently used, so that less important data is lost, and more non-important data is lost. Transmission of the important data is better implemented, so that a receiving end obtains the important data through parsing.

In another possible implementation, the pre-processing includes at least one of segmentation processing, recombination processing, clustering processing, discrete cosine transform (discrete cosine transform, DCT), octree transform, K-dimensional tree transform, wavelet transform, weighting, residual calculation, fast Fourier transform (fast Fourier transform, FFT), inverse fast Fourier transform (inverse fast fourier transform, IFFT), and quantization processing.

A specific operation of the pre-processing is shown in this implementation, to facilitate implementation of the solution. The first communication apparatus may implement data compression by performing the specific operation of the pre-processing. Alternatively, the first communication apparatus performs the specific operation of the pre-processing, to facilitate subsequent data compression by the first communication apparatus, and further improve a compression rate.

In another possible implementation, a first information group corresponds to a first processing mode, the first information group is one of the G information groups, and the first processing mode includes: the first information group corresponds to one of the S information segments; and the first communication apparatus performs the pre-processing on the one of the S information segments to obtain the first information group.

In this implementation, in the first processing mode, the first communication apparatus performs the pre-processing within the information segment. The pre-processing belongs to a within-segment operation or a within-group operation. The first communication apparatus performs the pre-processing on the information segment, to eliminate correlation between data, and reduce data redundancy. For example, with reference to the related descriptions of the pre-processing, it can be learned that the first communication apparatus may perform transformation processing (for example, the DCT transform, the wavelet transform, or time-frequency transform) on data within the information segment, to obtain low-frequency information and high-frequency information in the data. Then, the first communication apparatus may quantize the high-frequency information and the low-frequency information by using different quantization precision. Compared with the high-frequency information, the low-frequency information is more important. Therefore, the first communication apparatus may quantize the low-frequency information by using high quantization precision, and quantize the high-frequency information by using low quantization precision. In this way, quantization losses are smaller when bit overheads are the same. The first communication apparatus performs operations such as quantization processing and voxelization processing on the low-frequency information obtained after the transformation processing and the high-frequency information obtained after the transformation processing, to reduce data resolution or data precision and spatial resolution or spatial precision. In this way, it can be ensured that bit overheads are reduced when precision is acceptable.

In another possible implementation, a first information group corresponds to a second processing mode, the first information group is one of the G information groups, and the second processing mode includes: the first information group corresponds to a plurality of information segments in the S information segments; and the first communication apparatus performs the pre-processing on the plurality of information segments to obtain the first information group.

In this implementation, another processing mode is provided, so that the solution is more flexible and changeable. In the second processing mode, the first communication apparatus performs the pre-processing on the plurality of information segments. The pre-processing belongs to a cross-segment operation and is not limited to within one information segment. The first communication apparatus selects a plurality of proper information segments for pre-processing, to eliminate correlation between data, and reduce data redundancy. For example, this helps the first communication apparatus place data having similar data types, similar data importance, or similar data distribution together. This helps the first communication apparatus perform, by using different quantization precision, quantization processing on data having different types, different importance, or different data distribution, to improve a compression rate.

In another possible implementation, in the second processing mode, the plurality of information segments in the S information segments include a basic information segment and a reference information segment. It can be learned that the first communication apparatus selects the reference information segment of the basic information segment, and implements data compression on the basic information segment by using the reference information segment as reference data.

In another possible implementation, a first information group corresponds to a third processing mode, the first information group is one of the G information groups, and the third processing mode includes: the first information group corresponds to one of the S information segments and one or more information groups, and the one or more information groups belong to the G information groups; and the first communication apparatus performs the pre-processing on the one or more information groups and the one of the S information segments to obtain the first information group.

In this implementation, still another processing mode is provided, so that the solution is more flexible and changeable. In the third processing mode, the first communication apparatus performs the pre-processing on the information segment and the one or more information groups. The pre-processing belongs to a cross-group operation and is not limited to within one information segment. The first communication apparatus selects one or more information groups matching the information segment for pre-processing together, to eliminate correlation between data, and reduce data redundancy. For example, the first communication apparatus performs operations such as transformation processing, quantization processing, and voxelization processing on the information segment and the one or more information groups, so that the first communication apparatus places data having similar data types, similar data importance, or similar data distribution together. This helps the first communication apparatus perform, by using different quantization precision, quantization processing on data having different types, different importance, or different data distribution, to improve a compression rate.

In another possible implementation, in the third processing mode, the one of the S information segments is a basic information segment, and the one or more information groups are a reference information group. It can be learned that the first communication apparatus selects the reference information group of the basic information segment, and implements data compression on the basic information segment by using the reference information group as reference data.

In another possible implementation, a first information group corresponds to a fourth processing mode, the first information group is one of the G information groups, and the fourth processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the first communication apparatus performs the pre-processing on the one of the S information segments and the one or more information segments or the one or more information groups corresponding to the first information group, to obtain the first information group.

In this implementation, still another processing mode is provided, so that the solution is more flexible and changeable. In the fourth processing mode, the first communication apparatus performs the pre-processing on the one of the S information segments and the one or more information segments or the one or more information groups. The pre-processing belongs to a cross-transport block operation and is not limited to within one information segment. The first communication apparatus can select at least one information segment or at least one information group that matches the information segment for pre-processing together, to eliminate correlation between data, and reduce data redundancy. For example, the first communication apparatus performs operations such as transformation processing and quantization processing on the one of the S information segments and the one or more information segments or the one or more information groups, to place data having similar data types, similar data distribution, or similar data importance together. This helps the first communication apparatus properly quantize the data. When quantization bit overheads are fixed, quantization losses are smaller.

In another possible implementation, in the fourth processing mode, the one or more information segments are also from the S information segments. In other words, the first communication apparatus may alternatively perform the pre-processing with reference to the one or more information segments in the S information segments. Therefore, it is beneficial to place data having similar data types, similar data distribution, or similar data importance together for compression, to improve a compression rate.

In another possible implementation, a first information group corresponds to a fifth processing mode, the first information group is one of the G information groups, and the fifth processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the first communication apparatus performs the pre-processing on the one of the S information segments and the at least one of the one or more information segments and the one or more information groups, to obtain the first information group.

In this implementation, still another processing mode is provided, so that the solution is more flexible and changeable. In the fifth processing mode, the first communication apparatus performs the pre-processing on the one of the S information segments and the at least one of the one or more information segments and the one or more information groups. The pre-processing is not limited to within one information segment. The first communication apparatus can select at least one information segment or at least one information group that matches the information segment for pre-processing together, to eliminate correlation between data, and reduce data redundancy. For example, the first communication apparatus performs operations such as transformation processing and quantization processing on the one of the S information segments and the at least one of the one or more information segments and the one or more information groups, to place data having similar data types, similar data distribution, or similar data importance together. This helps the first communication apparatus properly quantize the data. When quantization bit overheads are fixed, quantization losses are smaller.

In another possible implementation, in the fifth processing mode, the one or more information segments are also from the S information segments. To be specific, the first communication apparatus may perform the pre-processing with reference to a plurality of information segments in the S information segments and an information segment and/or an information group from another transport block. Therefore, it is beneficial to place data having similar data types, similar data distribution, or similar data importance together for compression, to improve a compression rate.

In another possible implementation, the method further includes:
The first communication apparatus receives first indication information from the second communication apparatus. The first indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, and an index of a transport block corresponding to the G information groups.

In this implementation, the first communication apparatus may receive the first indication information from the second communication apparatus, so that the first communication apparatus determines the foregoing information, and the first communication apparatus performs the pre-processing on each information segment to obtain the G information groups.

In another possible implementation, that the first communication apparatus determines C to-be-encoded code blocks based on the G information groups includes:
The first communication apparatus screens the G information groups based on Y screening modes to obtain B information blocks, where each of the B information blocks corresponds to one screening mode, B is an integer greater than or equal to 1, and Y is an integer greater than or equal to 1.

The first communication apparatus determines the C to-be-encoded code blocks based on the B information blocks.

In this implementation, the first communication apparatus first performs bit or symbol screening on the G information groups, and specifically should perform the bit or symbol screening with reference to a corresponding screening mode, to reduce resource overheads and improve a compression ratio while ensuring data decompression precision. Then, the first communication apparatus determines the C to-be-encoded code blocks based on the B information blocks, so that a size of the C to-be-encoded code blocks is less than the size of the first transport block.

In another possible implementation, a first information group corresponds to a sixth processing mode, the first information group is one of the G information groups, and the sixth processing mode includes: the first information group corresponds to one of the S information segments; and the first communication apparatus performs the pre-processing on the one of the S information segments to obtain the first information group.

In this implementation, in the sixth processing mode, the first communication apparatus performs the pre-processing within the information segment. The pre-processing belongs to a within-segment operation or a within-group operation. The first communication apparatus performs the pre-processing on the information segment, to eliminate correlation between data, and reduce data redundancy. For example, with reference to the related descriptions of the pre-processing, it can be learned that the first communication apparatus may perform transformation processing (for example, the DCT transform, the wavelet transform, or time-frequency transform) on data within the information segment, to obtain low-frequency information and high-frequency information in the data. Then, the first communication apparatus may quantize the high-frequency information and the low-frequency information by using different quantization precision. Compared with the high-frequency information, the low-frequency information is more important. Therefore, the first communication apparatus may quantize the low-frequency information by using high quantization precision, and quantize the high-frequency information by using low quantization precision. In this way, quantization losses are smaller when bit overheads are the same. The first communication apparatus performs operations such as quantization processing and voxelization processing on the low-frequency information obtained after the transformation processing and the high-frequency information obtained after the transformation processing, to reduce data resolution or data precision and spatial resolution or spatial precision. In this way, it can be ensured that bit overheads are reduced when precision is acceptable.

In another possible implementation, a first information group corresponds to a seventh processing mode, the first information group is one of the G information groups, and the seventh processing mode includes: the first information group corresponds to a plurality of information segments in the S information segments; and the first communication apparatus performs the pre-processing on the plurality of information segments to obtain the first information group.

In this implementation, another processing mode is provided, so that the solution is more flexible and changeable. In the seventh processing mode, the first communication apparatus performs the pre-processing on the plurality of information segments. The pre-processing belongs to a cross-segment operation and is not limited to within one information segment. The first communication apparatus selects a plurality of proper information segments for pre-processing, to eliminate correlation between data, and reduce data redundancy. For example, this helps the first communication apparatus place data having similar data types, similar data importance, or similar data distribution together. This helps the first communication apparatus perform, by using different quantization precision, quantization processing on data having different types, different importance, or different data distribution, to improve a compression rate.

In another possible implementation, in the seventh processing mode, the plurality of information segments in the S information segments include a basic information segment and a reference information segment. It can be learned that the first communication apparatus selects the reference information segment of the basic information segment, and implements data compression on the basic information segment by using the reference information segment as reference data.

In another possible implementation, a first information group corresponds to an eighth processing mode, the first information group is one of the G information groups, and the eighth processing mode includes: the first information group corresponds to one of the S information segments and one or more information groups, and the one or more information groups belong to the G information groups; and the first communication apparatus performs the pre-processing on the one or more information groups and the one of the S information segments to obtain the first information group.

In this implementation, still another processing mode is provided, so that the solution is more flexible and changeable. In the eighth processing mode, the first communication apparatus performs the pre-processing on the information segment and the one or more information groups. The pre-processing belongs to a cross-group operation and is not limited to within one information segment. The first communication apparatus selects one or more information groups matching the information segment for pre-processing together, to eliminate correlation between data, and reduce data redundancy. For example, the first communication apparatus performs operations such as transformation processing, quantization processing, and voxelization processing on the information segment and the one or more information groups, so that the first communication apparatus places data having similar data types, similar data importance, or similar data distribution together. This helps the first communication apparatus perform, by using different quantization precision, quantization processing on data having different types, different importance, or different data distribution, to improve a compression rate.

In another possible implementation, in the eighth processing mode, the one of the S information segments is a basic information segment, and the one or more information groups are a reference information group. It can be learned that the first communication apparatus selects the reference information group of the basic information segment, and implements data compression on the basic information segment by using the reference information group as reference data.

In another possible implementation, a first information group corresponds to a ninth processing mode, the first information group is one of the G information groups, and the ninth processing mode includes: the first information group corresponds to one of the S information segments and one or more information blocks, and the one or more information blocks belong to the B information blocks; and the first communication apparatus performs the pre-processing on the one or more information blocks and the one of the S information segments to obtain the first information group.

In this implementation, still another processing mode is provided, so that the solution is more flexible and changeable. In the ninth processing mode, the first communication apparatus performs the pre-processing on the information segment and the one or more information blocks. The pre-processing belongs to a cross-block operation and is not limited to within one information segment. The first communication apparatus selects one or more information blocks matching the information segment for pre-processing together, to eliminate correlation between data, and reduce data redundancy. For example, the first communication apparatus performs operations such as transformation processing and quantization processing on the information segment and the one or more information blocks, to place data having similar data types, similar data distribution, or similar data importance together. This helps the first communication apparatus properly quantize the data. When quantization bit overheads are fixed, quantization losses are smaller.

In another possible implementation, in the ninth processing mode, the one of the S information segments is a basic information segment, and the one or more information blocks are a reference information block. Based on this implementation, it can be learned that the first communication apparatus can select the reference information block of the basic information segment, and implement data compression on the basic information segment by using the reference information block as reference data.

In another possible implementation, a first information group corresponds to a tenth processing mode, the first information group is one of the G information groups, and the tenth processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the first communication apparatus performs the pre-processing on the one of the S information segments and the one or more information segments, the one or more information groups, or the one or more information blocks corresponding to the first information group, to obtain the first information group.

In this implementation, still another processing mode is provided, so that the solution is more flexible and changeable. In the tenth processing mode, the first communication apparatus performs the pre-processing on the one of the S information segments and any one of the one or more information segments, the one or more information groups, or the one or more information blocks. The pre-processing belongs to a cross-transport block operation, and is not limited to within one information segment. The first communication apparatus can select at least one information segment, at least one information group, or at least one information block that matches the information segment for pre-processing together, to eliminate correlation between data, and reduce data redundancy. For example, the first communication apparatus performs operations such as transformation processing and quantization processing on the one of the S information segments and the any one of the one or more information segments, the one or more information groups, and the one or more information blocks, to place data having similar data types, similar data distribution, or similar data importance together. This helps the first communication apparatus properly quantize the data. When quantization bit overheads are fixed, quantization losses are smaller.

In another possible implementation, in the tenth processing mode, the one or more information segments are also from the S information segments. In other words, the first communication apparatus may perform the pre-processing with reference to the one or more information segments. Therefore, it is beneficial to place data having similar data types, similar data distribution, or similar data importance together for compression, to improve a compression rate.

In another possible implementation, a first information group corresponds to an eleventh processing mode, the first information group is one of the G information groups, and the eleventh processing mode includes: the first information group corresponds to one of the S information segments, and the first information group further corresponds to at least one of the following: one or more information segments, one or more information groups, and one or one information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the first communication apparatus performs the pre-processing on the one of the S information segments and the at least one of the one or more information segments, the one or more information groups, and the one or more information blocks, to obtain the first information group.

In another possible implementation, in the eleventh processing mode, the one or more information segments are also from the S information segments. In other words, the first communication apparatus may perform the pre-processing with reference to the one or more information segments. Therefore, it is beneficial to place data having similar data types, similar data distribution, or similar data importance together for compression, to improve a compression rate.

In another possible implementation, the method further includes:
The first communication apparatus receives second indication information from the second communication apparatus. The second indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, an index of an information block corresponding to the G information groups, and an index of a transport block corresponding to the G information groups.

In this implementation, the first communication apparatus may receive the second indication information from the second communication apparatus, so that the first communication apparatus determines the foregoing information, and the first communication apparatus performs the pre-processing on each information segment to obtain the G information groups.

In another possible implementation, a first information block corresponds to a first screening mode, the first information block is one of the B information blocks, and the first screening mode includes: the first information block corresponds to one of the G information groups; and the first communication apparatus performs bit or symbol selection on the information group according to a first screening principle, to obtain the first information block.

In this implementation, specific content of the first screening mode is provided. The first information block is from the one of the G information groups. To be specific, the first communication apparatus performs bit or symbol screening on the information group according to a corresponding screening principle, to obtain the first information block. In this way, data compression is implemented. In this implementation, the first communication apparatus selects a proper information group for the first information block to perform the bit or symbol screening. This helps ensure data decompression precision, and also reduce transmission overheads by discarding a bit or a symbol, to improve a compression rate.

In another possible implementation, a first information block corresponds to a second screening mode, the first information block is one of the B information blocks, and the second screening mode includes: the first information block corresponds to a plurality of information groups in the G information groups; and the first communication apparatus performs bit or symbol selection on the plurality of information groups according to a second screening principle, to obtain the first information block.

In this implementation, specific content of the second screening mode is provided. The first information block is from the plurality of information groups in the G information groups. To be specific, the first communication apparatus performs bit or symbol screening on the plurality of information groups according to a corresponding screening principle, to obtain the first information block. In this way, data compression is implemented. In this implementation, the first communication apparatus selects a proper information group for the first information block to perform the bit or symbol screening. This helps ensure data decompression precision, and also reduce transmission overheads by discarding a bit or a symbol, to improve a compression rate.

In another possible implementation, the method further includes:
The first communication apparatus receives third indication information from the second communication apparatus. The third indication information indicates at least one of the following: sizes of the B information blocks, a screening mode, a screening principle, and an index of a corresponding information group.

In this implementation, the first communication apparatus receives the third indication information, so that the first communication apparatus determines information indicated by the third indication information, to facilitate implementation of the solution.

In another possible implementation, that the first communication apparatus determines the C to-be-encoded code blocks based on the B information blocks includes:
The first communication apparatus determines a mapping mode corresponding to the B information blocks. The first communication apparatus maps the B information blocks to the C to-be-encoded code blocks in the mapping mode.

The foregoing provides a specific implementation in which the first communication apparatus determines the C to-be-encoded code blocks based on the B information blocks. The first communication apparatus first determines the mapping mode of the B information blocks, and maps the B information blocks to the C to-be-encoded modules in the mapping mode. In other words, this application provides some possible mapping modes. This helps improve mapping flexibility and implementation diversity, and support more scenario requirements or architecture requirements.

In another possible implementation, the B information blocks correspond to a first mapping mode, and the first mapping mode includes: The first communication apparatus maps the B information blocks to the C to-be-encoded code blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

A specific implementation of the first mapping mode is provided in this implementation. The first communication apparatus can directly map the B information blocks to the C to-be-encoded code blocks, so that the first communication apparatus simply and quickly determines the C to-be-encoded code blocks. This helps reduce an encoding delay.

In another possible implementation, the B information blocks correspond to a second mapping mode, and the second mapping mode includes: The first communication apparatus maps the B information blocks to Q third transport blocks based on a second mapping relationship, where Q is an integer greater than or equal to 1. The second mapping relationship includes: the B information blocks are in one-to-one correspondence with the Q third transport blocks, and B is equal to Q; each of the Q third transport blocks corresponds to a plurality of information blocks in the B information blocks; or each of the B information blocks corresponds to a plurality of third transport blocks in the Q third transport blocks. The first communication apparatus maps the Q third transport blocks to the C to-be-encoded code blocks.

Another mapping mode is provided in this implementation. This enriches implementation of the solution to obtain more diversified solutions. The first communication apparatus may first map the B information blocks to the Q third transport blocks, and map the Q third transport blocks to the C to-be-encoded code blocks by using a procedure in which a transmitted transport block is mapped to a to-be-encoded code block.

In another possible implementation, the method further includes:
The first communication apparatus receives fourth indication information of the second communication apparatus. The fourth indication information indicates at least one of the following: the mapping mode corresponding to the B information blocks and the sizes of the C to-be-encoded code blocks.

In this implementation, the first communication apparatus can receive the fourth indication information, so that the first communication apparatus determines information indicated by the fourth indication information, to facilitate implementation of the solution.

In another possible implementation, the method further includes:
The first communication apparatus performs entropy encoding on the B information blocks, to obtain B entropy-encoded information blocks.

That the first communication apparatus determines the C to-be-encoded code blocks based on the B information blocks includes:
The first communication apparatus determines the C to-be-encoded code blocks based on the B entropy-encoded information blocks.

In this implementation, the first communication apparatus can perform entropy encoding processing on each of the B information blocks, to further compress data of the B information blocks. A compression rate is further improved.

In another possible implementation, the method further includes:
The first communication apparatus receives fifth indication information from the second communication apparatus. The fifth indication information indicates at least one of the following: enabling of the entropy encoding by the first communication apparatus and an operation corresponding to the entropy encoding.

In this implementation, the first communication apparatus can receive the fifth indication information, so that the first communication apparatus enables entropy encoding processing, to further compress data.

In another possible implementation, that the first communication apparatus converts the first transport block into S information segments includes:
The first communication apparatus segments the first transport block into the S information segments according to a segmentation criterion.

In this implementation, the first communication apparatus can segment the first transport block into the S information segments according to the segmentation criterion, so that the first communication apparatus subsequently performs compression processing on the S information segments, to improve compression performance. For example, the first communication apparatus segments the first transport block into the S information segments based on a sequence of data included in the first transport block. Alternatively, the first communication apparatus segments the first transport block into the S information segments based on locations of data bits in the first transport block. For example, the first communication apparatus places a most significant bit in an information segment, places a second most significant bit in another information segment, and places a least significant bit in an information segment by analogy. In this way, the first communication apparatus can subsequently perform quantization separately (can perform the quantization by using different quantization precision or different quantities of quantized bits). When the quantities of quantized bits are the same, quantization losses are smaller.

In another possible implementation, the method further includes:
The first communication apparatus receives sixth indication information from the second communication apparatus. The sixth indication information indicates at least one of the following: segmenting the first transport block in a segmentation manner and a segmentation parameter.

In this implementation, the first communication apparatus can receive the sixth indication information, so that the first communication apparatus segments the first transport block to obtain the S information segments. It is convenient for the first communication apparatus to better compress data subsequently.

In another possible implementation, that the first communication apparatus converts the first transport block into S information segments includes:
The first communication apparatus recombines the first transport block into the S information segments according to a recombination criterion.

In this implementation, the first communication apparatus can recombine the first transport block into the S information segments according to the recombination criterion. In this way, the first communication apparatus can place data having similar data characteristics or similar data types together, to facilitate a subsequent quantization operation. For example, the first communication apparatus places large data together, and places small data together. The first communication apparatus quantizes the data by using different quantization precision or different quantities of quantized bits. When the quantities of quantized bits are the same, quantization losses are smaller. In addition, the first communication apparatus can place important data together, and place non-important data together. Subsequently, the first communication apparatus can use the different quantization precision or different bit selection ratios, so that less important data is lost, and more non-important data is lost, to ensure compression precision of the important data.

In another possible implementation, that the first communication apparatus converts the first transport block into S information segments includes:
The first communication apparatus recombines the first transport block into the S information segments according to a transform criterion.

In this implementation, the first communication apparatus can recombine the first transport block into the S information segments according to the transform criterion. This helps the first communication apparatus place important data together and place non-important data together, to subsequently compress data of different levels by using different quantization precision or bit selection ratios, so that less important data is lost, and more non-important data is lost. Therefore, the important data can be accurately transmitted to the second communication apparatus when the data is compressed. This helps the receiving end restore the important data.

In another possible implementation, before the first communication apparatus converts the first transport block into the S information segments, the method further includes: The first communication apparatus receives seventh indication information from the second communication apparatus. The seventh indication information indicates the first communication apparatus to enable the step of converting, by the first communication apparatus, the first transport block into the S information segments.

In this implementation, the first communication apparatus can receive the seventh indication information, so that the first communication apparatus enables the step of converting, by the first communication apparatus, the first transport block into the S information segments, to implement encoding at a physical layer.

A second aspect of this application provides a decoding method, including:
A second communication apparatus obtains an encoded code block of a first communication apparatus. The second communication apparatus performs channel decoding on the encoded code block to obtain C to-be-encoded code blocks, where C is an integer greater than or equal to 1. The second communication apparatus determines G information groups based on the C to-be-encoded code blocks, where G is an integer greater than or equal to 1. The second communication apparatus performs inverse processing on the G information groups based on X' inverse processing modes, to obtain S information segments, where each of the G information groups corresponds to one of the X' inverse processing modes, and S is an integer greater than or equal to 1. The second communication apparatus determines a first transport block based on the S information segments, where a sum of sizes of the C to-be-encoded code blocks is less than a size of the first transport block.

In the foregoing technical solution, the second communication apparatus performs the channel decoding on the encoded code block to obtain the C to-be-encoded code blocks. Then, the second communication apparatus determines the G information groups based on the C to-be-encoded code blocks, and performs the inverse processing on the G information groups based on the X' inverse processing modes to obtain the S information segments. The second communication apparatus determines the first transport block based on the S information segments. The sum of the sizes of the C to-be-encoded code blocks is less than the size of the first transport block. It can be learned that compression of data on a transmitting end side reduces an amount of data transmitted by the transmitting end, and reduces transmission overheads.

In a possible implementation, the method further includes: The second communication apparatus determines the inverse processing mode corresponding to each of the G information groups. In this implementation, the second communication apparatus determines the inverse processing modes corresponding to the G information groups, to facilitate parsing of the G information groups.

In another possible implementation, a first information group corresponds to a first inverse processing mode, the first information group is one of the G information groups, and the first inverse processing mode includes: the first information group corresponds to one of the S information segments; and the second communication apparatus performs the inverse processing on the first information group to obtain the information segment.

In this implementation, in the first inverse processing mode, the second communication apparatus obtains the information segment by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a second inverse processing mode, the first information group is one of the G information groups, the first information group corresponds to the second inverse processing mode, and the second inverse processing mode includes: the first information group corresponds to a plurality of information segments in the S information segments; and the second communication apparatus performs the inverse processing on the first information group to obtain at least one information segment in the plurality of information segments.

In this implementation, another inverse processing mode is provided, so that the solution is more flexible and changeable. In the second inverse processing mode, the second communication apparatus obtains at least one information segment in the plurality of information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a third inverse processing mode, the first information group is one of the G information groups, and the third inverse processing mode includes: the first information group corresponds to one of the S information segments and one or more information groups, and the one or more information groups belong to the G information groups; and the second communication apparatus performs the inverse processing on the first information group to obtain the one of the S information segments.

In this implementation, another inverse processing mode is provided, so that the solution is more flexible and changeable. In the third inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a fourth inverse processing mode, the first information group is one of the G information groups, and the fourth inverse processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the second communication apparatus performs the inverse processing on the first information group to obtain the one of the S information segments.

In this implementation, still another inverse processing mode is provided, so that the solution is more flexible and changeable. In the fourth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, in the fourth inverse processing mode, the one or more information segments are also from the S information segments. In this implementation, the first information group is also from the S information segments. That is, a result obtained by the second communication apparatus by performing the inverse processing on the first information group may further include at least one information segment in one or more information segments corresponding to the first information group.

In another possible implementation, a first information group corresponds to a fifth inverse processing mode, the first information group is one of the G information groups, and the fifth inverse processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the second communication apparatus performs the inverse processing on the first information group to obtain the one of the S information segments.

In this implementation, still another inverse processing mode is provided, so that the solution is more flexible and changeable. In the fifth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, in the fifth inverse processing mode, the one or more information segments are also from the S information segments. In this implementation, the first information group is also from the S information segments. That is, a result obtained by the second communication apparatus by performing the inverse processing on the first information group may include at least one information segment in one or more information segments corresponding to the first information group.

In another possible implementation, the method further includes:
The second communication apparatus sends first indication information to the first communication apparatus. The first indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, and an index of a transport block corresponding to the G information groups. In this implementation, the second communication apparatus can further send the first indication information to the first communication apparatus, so that the first communication apparatus performs the technical solution of this application.

In another possible implementation, that the second communication apparatus determines G information groups based on the C to-be-encoded code blocks includes: The second communication apparatus determines B information blocks based on the C to-be-encoded code blocks, where B is an integer greater than or equal to 1. The second communication apparatus restores the B information blocks to the G information groups based on Z restoration modes, where each of the B information blocks corresponds to one of the Z restoration modes, and Z is an integer greater than or equal to 1.

The foregoing provides a specific implementation in which the second communication apparatus determines the G information groups based on the C to-be-encoded code blocks. The second communication apparatus determines the B information blocks based on the C to-be-encoded code blocks. Then, the second communication apparatus restores the B information blocks to the G information groups in a corresponding restoration mode. This process corresponds to a bit or symbol selection process of the transmitting end on the transmitting end side. This helps the transmitting end compress data.

In another possible implementation, a first information group corresponds to a sixth inverse processing mode, the first information group is one of the G information groups, and the sixth inverse processing mode includes: the first information group corresponds to one of the S information segments; and the second communication apparatus performs the inverse processing on the first information group to obtain the information segment.

In this implementation, an inverse processing mode is provided, so that the solution is more flexible and changeable. In the sixth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a seventh inverse processing mode, the first information group is one of the G information groups, the first information group corresponds to the seventh inverse processing mode, and the seventh inverse processing mode includes: the first information group corresponds to a plurality of information segments in the S information segments; and the second communication apparatus performs the inverse processing on the first information group to obtain at least one information segment in the plurality of information segments.

In this implementation, still another inverse processing mode is provided, so that the solution is more flexible and changeable. In the seventh inverse processing mode, the second communication apparatus obtains at least one information segment in the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to an eighth inverse processing mode, the first information group is one of the G information groups, and the eighth inverse processing mode includes: the first information group corresponds to one of the S information segments and one or more information groups, and the one or more information groups belong to the G information groups; and the second communication apparatus performs the inverse processing on the first information group to obtain the one of the S information segments.

In this implementation, still another inverse processing mode is provided, so that the solution is more flexible and changeable. In the eighth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a ninth inverse processing mode, the first information group is one of the G information groups, and the ninth inverse processing mode includes: the first information group corresponds to one of the S information segments and one or more information blocks, and the one or more information blocks belong to the B information blocks; and the second communication apparatus performs the inverse processing on the first information group to obtain the one of the S information segments.

In this implementation, still another inverse processing mode is provided, so that the solution is more flexible and changeable. In the ninth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, a first information group corresponds to a tenth inverse processing mode, the first information group is one of the G information groups, and the tenth inverse processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the second communication apparatus performs the inverse processing on the first information group to obtain the one of the S information segments.

In this implementation, still another inverse processing mode is provided, so that the solution is more flexible and changeable. In the tenth inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, in the tenth inverse processing mode, the one or more information segments are also from the S information segments. In this implementation, the first information group is also from the S information segments. That is, a result obtained by the second communication apparatus by performing the inverse processing on the first information group may include at least one information segment in one or more information segments corresponding to the first information group.

In another possible implementation, a first information group corresponds to an eleventh inverse processing mode, the first information group is one of the G information groups, and the eleventh inverse processing mode includes: the first information group corresponds to one of the S information segments, and the first information group further corresponds to at least one of the following: one or more information segments, one or more information groups, and one or more information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the second communication apparatus performs the inverse processing on the first information group to obtain the one of the S information segments.

In this implementation, still another inverse processing mode is provided, so that the solution is more flexible and changeable. In the eleventh inverse processing mode, the second communication apparatus obtains the one of the S information segments by performing the inverse processing (that is, restoring data by using correlation between data, where for example, the second communication apparatus restores the data through inverse quantization and inverse transform processing (inverse DCT transform or inverse wavelet transform)) on the first information group, to facilitate obtaining of raw data through parsing.

In another possible implementation, in the eleventh inverse processing mode, the one or more information segments are also from the S information segments. In this implementation, the first information group is also from the S information segments. That is, a result obtained by the second communication apparatus by performing the inverse processing on the first information group may include at least one information segment in one or more information segments corresponding to the first information group.

In another possible implementation, the method further includes:
The second communication apparatus sends second indication information to the first communication apparatus. The second indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, an index of an information block corresponding to the G information groups, and an index of a transport block corresponding to the G information groups.

In this implementation, the second communication apparatus sends the second indication information to the first communication apparatus, so that the first communication apparatus determines the foregoing information, and the first communication apparatus determines the G information groups.

In another possible implementation, a first information block corresponds to a first restoration mode, the first information block is one of the B information blocks, and the first restoration mode includes: the first information block corresponds to one of the G information groups; and the second communication apparatus performs bit or symbol restoration on the first information block according to a first restoration principle, to obtain all or a part of bits or symbols of the information group.

In this implementation, specific content of the first restoration mode is provided. This helps the second communication apparatus perform the bit or symbol restoration on the first information block, to obtain all or a part of bits or symbols of the information group. This facilitates data compression at the transmitting end and reduces transmission overheads.

In another possible implementation, a first information block corresponds to a second restoration mode, the first information block is one of the B information blocks, and the second restoration mode includes: the first information block corresponds to a plurality of information groups in the G information groups; and the second communication apparatus performs bit or symbol restoration on the first information block according to a second restoration principle, to obtain all or a part of bits or symbols of the plurality of information groups.

The foregoing provides another restoration mode, enriching the solution. This helps the second communication apparatus perform the bit or symbol restoration on the first information block, to obtain all or a part of bits or symbols of the plurality of information groups. This facilitates data compression at the transmitting end and reduces transmission overheads.

In another possible implementation, the method further includes:
The second communication apparatus sends third indication information to the first communication apparatus. The third indication information indicates at least one of the following: sizes of the B information blocks, a screening mode, a screening principle, and an index of a corresponding information group.

In this implementation, the second communication apparatus sends the third indication information to the first communication apparatus, so that the first communication apparatus determines the B information blocks.

In another possible implementation, that the second communication apparatus determines B information blocks based on the C to-be-encoded code blocks includes:
The second communication apparatus determines an inverse mapping mode corresponding to the C to-be-encoded code blocks. The second communication apparatus inversely maps the C to-be-encoded code blocks to the B information blocks in the inverse mapping mode.

In this implementation, a specific implementation process in which the second communication apparatus determines the B information blocks based on the C to-be-encoded code blocks is provided. The second communication apparatus can determine the inverse mapping mode corresponding to the C to-be-encoded code blocks, and inversely map the C to-be-encoded code blocks to the B information blocks in the inverse mapping mode. In other words, this application provides the corresponding inverse mapping mode. This helps improve mapping flexibility and implementation diversity, and support more scenario requirements or architecture requirements.

In another possible implementation, the C to-be-encoded code blocks correspond to a first inverse mapping mode, and the first inverse mapping mode includes: The second communication apparatus inversely maps the C to-be-encoded code blocks to the B information blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

A specific implementation of the first inverse mapping mode is provided in this implementation. The first communication apparatus can directly inversely map C to-be-encoded code blocks to the B information blocks, so that the second communication apparatus simply and quickly determine the B information blocks. This helps reduce a decoding delay.

In another possible implementation, the C to-be-encoded code blocks correspond to a second inverse mapping mode. The second inverse mapping mode includes: The second communication apparatus inversely maps the C to-be-encoded code blocks to Q third transport blocks based on a second mapping relationship, where Q is an integer greater than or equal to 1. The second communication apparatus inversely maps the Q third transport blocks to the B information blocks.

The foregoing provides still another inverse mapping mode, enriching implementation of the solution. A specific implementation of the second inverse mapping mode is provided in this implementation. The first communication apparatus can first map the C to-be-encoded code blocks to the Q third transport blocks, and inversely map the Q third transport blocks to the B information blocks.

In another possible implementation, the method further includes:
The second communication apparatus sends fourth indication information to the first communication apparatus. The fourth indication information indicates at least one of the following: a mapping mode of the B information blocks and the sizes of the C to-be-encoded code blocks.

In this implementation, the second communication apparatus can send the fourth indication information to the first communication apparatus, so that the first communication apparatus determines the C to-be-encoded code blocks.

In another possible implementation, the method further includes:
The second communication apparatus performs entropy decoding on the B information blocks, to obtain B entropy-decoded information blocks.

In this implementation, the transmitting end performs entropy encoding on the B information blocks. In this case, the second communication apparatus performs the entropy decoding on the B information blocks, to obtain the B entropy-decoded information blocks, so that the transmitting end side further compresses data.

In another possible implementation, the method further includes:
The second communication apparatus sends fifth indication information to the first communication apparatus. The fifth indication information indicates at least one of the following: enabling of entropy encoding by the first communication apparatus and an operation corresponding to the entropy encoding.

In this implementation, the second communication apparatus can indicate enabling of the entropy encoding by the first communication apparatus and the operation corresponding to the entropy encoding. In this way, the first communication apparatus can perform entropy coding processing on the B information blocks, to further compress data.

In another possible implementation, that the second communication apparatus determines a first transport block based on the S information segments includes:
The second communication apparatus combines the S information segments into the first transport block according to a combination criterion.

In this implementation, the second communication apparatus combines the S information segments into the first transport block according to the combination criterion, so that the second communication apparatus obtains raw data.

In another possible implementation, the method further includes:
The second communication apparatus sends sixth indication information to the first communication apparatus. The sixth indication information indicates at least one of the following: segmenting the first transport block in a segmentation manner and a segmentation parameter.

In this implementation, the second communication apparatus can send the sixth indication information to the first communication apparatus, so that the first communication apparatus segments the first transport block in the segmentation manner. It is convenient for the first communication apparatus to better compresses data, to improve compression performance.

In another possible implementation, the method further includes:
The second communication apparatus sends seventh indication information to the first communication apparatus. The seventh indication information indicates the first communication apparatus to enable a step of converting, by the first communication apparatus, the first transport block into the S information segments.

In this implementation, the second communication apparatus can send the seventh indication information to the first communication apparatus, so that the first communication apparatus enables physical layer compression.

A third aspect of this application provides a first communication apparatus, including:
a processing module, configured to: obtain a first transport block; convert the first transport block into S information segments, where S is an integer greater than or equal to 1; perform pre-processing on the S information segments based on X processing modes, to obtain G information groups, where each of the G information groups corresponds to one of the X processing modes, G is an integer greater than or equal to 1, and X is an integer greater than or equal to 1; determine C to-be-encoded code blocks based on the G information groups, where C is an integer greater than or equal to 1, and a sum of sizes of the C to-be-encoded code blocks is less than a size of the first transport block; and perform channel coding on the C to-be-encoded code blocks, to obtain an encoded code block; and
a transceiver module, configured to output the encoded code block.

In a possible implementation, the processing mode corresponding to each of the G information groups is determined based on at least one of data locations, data types, data importance, data correlation, and data similarities that are of the S information segments;
the processing mode corresponding to each of the G information groups is preconfigured; or
the processing mode corresponding to each of the G information groups is indicated by a second communication apparatus.

In another possible implementation, the pre-processing includes at least one of segmentation processing, recombination processing, clustering processing, DCT, octree transform, K-dimensional tree transform, wavelet transform, weighting, residual calculation, FFT, IFFT, and quantization processing.

In another possible implementation, a first information group corresponds to a first processing mode, the first information group is one of the G information groups, and the first processing mode includes: the first information group corresponds to one of the S information segments; and the first communication apparatus performs the pre-processing on the one of the S information segments to obtain the first information group.

In another possible implementation, a first information group corresponds to a second processing mode, the first information group is one of the G information groups, and the second processing mode includes: the first information group corresponds to a plurality of information segments in the S information segments; and the first communication apparatus performs the pre-processing on the plurality of information segments to obtain the first information group.

In another possible implementation, in the second processing mode, the plurality of information segments in the S information segments include a basic information segment and a reference information segment.

In another possible implementation, a first information group corresponds to a third processing mode, the first information group is one of the G information groups, and the third processing mode includes: the first information group corresponds to one of the S information segments and one or more information groups, and the one or more information groups belong to the G information groups; and the first communication apparatus performs the pre-processing on the one or more information groups and the one of the S information segments to obtain the first information group.

In another possible implementation, in the third processing mode, the one of the S information segments is a basic information segment, and the one or more information groups are a reference information group.

In another possible implementation, a first information group corresponds to a fourth processing mode, the first information group is one of the G information groups, and the fourth processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the first communication apparatus performs the pre-processing on the one of the S information segments and the one or more information segments or the one or more information groups corresponding to the first information group, to obtain the first information group.

In another possible implementation, in the fourth processing mode, the one or more information segments are also from the S information segments.

In another possible implementation, a first information group corresponds to a fifth processing mode, the first information group is one of the G information groups, and the fifth processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the first communication apparatus performs the pre-processing on the one of the S information segments and the at least one of the one or more information segments and the one or more information groups, to obtain the first information group.

In another possible implementation, in the fifth processing mode, the one or more information segments are also from the S information segments.

In another possible implementation, the transceiver module is further configured to:
receive first indication information from the second communication apparatus. The first indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, and an index of a transport block corresponding to the G information groups.

In another possible implementation, the processing module is specifically configured to:
screen the G information groups based on Y screening modes to obtain B information blocks, where each of the B information blocks corresponds to one screening mode, B is an integer greater than or equal to 1, and Y is an integer greater than or equal to 1; and determine the C to-be-encoded code blocks based on the B information blocks.

In another possible implementation, a first information group corresponds to a sixth processing mode, the first information group is one of the G information groups, and the sixth processing mode includes: the first information group corresponds to one of the S information segments; and the first communication apparatus performs the pre-processing on the one of the S information segments to obtain the first information group.

In another possible implementation, a first information group corresponds to a seventh processing mode, the first information group is one of the G information groups, and the seventh processing mode includes: the first information group corresponds to a plurality of information segments in the S information segments; and the first communication apparatus performs the pre-processing on the plurality of information segments to obtain the first information group.

In another possible implementation, in the seventh processing mode, the plurality of information segments in the S information segments include a basic information segment and a reference information segment.

In another possible implementation, a first information group corresponds to an eighth processing mode, the first information group is one of the G information groups, and the eighth processing mode includes: the first information group corresponds to one of the S information segments and one or more information groups, and the one or more information groups belong to the G information groups; and the first communication apparatus performs the pre-processing on the one or more information groups and the one of the S information segments to obtain the first information group.

In another possible implementation, in the eighth processing mode, the one of the S information segments is a basic information segment, and the one or more information groups are a reference information group.

In another possible implementation, a first information group corresponds to a ninth processing mode, the first information group is one of the G information groups, and the ninth processing mode includes: the first information group corresponds to one of the S information segments and one or more information blocks, and the one or more information blocks belong to the B information blocks; and the first communication apparatus performs the pre-processing on the one or more information blocks and the one of the S information segments to obtain the first information group.

In another possible implementation, in the ninth processing mode, the one of the S information segments is a basic information segment, and the one or more information blocks are a reference information block.

In another possible implementation, a first information group corresponds to a tenth processing mode, the first information group is one of the G information groups, and the tenth processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the first communication apparatus performs the pre-processing on the one of the S information segments and the one or more information segments, the one or more information groups, or the one or more information blocks corresponding to the first information group, to obtain the first information group.

In another possible implementation, in the tenth processing mode, the one or more information segments are also from the S information segments.

In another possible implementation, a first information group corresponds to an eleventh processing mode, the first information group is one of the G information groups, and the eleventh processing mode includes: the first information group corresponds to one of the S information segments, and the first information group further corresponds to at least one of the following: one or more information segments, one or more information groups, and one or one information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the first communication apparatus performs the pre-processing on the one of the S information segments and the at least one of the one or more information segments, the one or more information groups, and the one or more information blocks, to obtain the first information group.

In another possible implementation, in the eleventh processing mode, the one or more information segments are also from the S information segments.

In another possible implementation, the transceiver module is further configured to:
receive second indication information from the second communication apparatus. The second indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, an index of an information block corresponding to the G information groups, and an index of a transport block corresponding to the G information groups.

In another possible implementation, a first information block corresponds to a first screening mode, the first information block is one of the B information blocks, and the first screening mode includes: the first information block corresponds to one of the G information groups; and the first communication apparatus performs bit or symbol selection on the information group according to a first screening principle, to obtain the first information block.

In another possible implementation, a first information block corresponds to a second screening mode, the first information block is one of the B information blocks, and the second screening mode includes: the first information block corresponds to a plurality of information groups in the G information groups; and the first communication apparatus performs bit or symbol selection on the plurality of information groups according to a second screening principle, to obtain the first information block.

In another possible implementation, the transceiver module is further configured to:
receive third indication information from the second communication apparatus. The third indication information indicates at least one of the following: sizes of the B information blocks, a screening mode, a screening principle, and an index of a corresponding information group.

In another possible implementation, the processing module is specifically configured to:
determine a mapping mode corresponding to the B information blocks; and
map the B information blocks to the C to-be-encoded code blocks in the mapping mode.

In another possible implementation, the B information blocks correspond to a first mapping mode, and the first mapping mode includes: The first communication apparatus maps the B information blocks to the C to-be-encoded code blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

In another possible implementation, the B information blocks correspond to a second mapping mode, and the second mapping mode includes: The first communication apparatus maps the B information blocks to Q third transport blocks based on a second mapping relationship, where Q is an integer greater than or equal to 1. The second mapping relationship includes: the B information blocks are in one-to-one correspondence with the Q third transport blocks, and B is equal to Q; each of the Q third transport blocks corresponds to a plurality of information blocks in the B information blocks; or each of the B information blocks corresponds to a plurality of third transport blocks in the Q third transport blocks. The first communication apparatus maps the Q third transport blocks to the C to-be-encoded code blocks.

In another possible implementation, the transceiver module is further configured to:
receive fourth indication information of the second communication apparatus. The fourth indication information indicates at least one of the following: the mapping mode corresponding to the B information blocks and the sizes of the C to-be-encoded code blocks.

In another possible implementation, the processing module is further configured to:
perform entropy encoding on each of the B information blocks, to obtain B entropy-encoded information blocks; and
the processing module is specifically configured to:
   determine the C to-be-encoded code blocks based on the B entropy-encoded information blocks.

In another possible implementation, the transceiver module is further configured to:
receive fifth indication information from the second communication apparatus. The fifth indication information indicates at least one of the following: enabling of the entropy encoding by the first communication apparatus and an operation corresponding to the entropy encoding.

In another possible implementation, the processing module is specifically configured to:
segment the first transport block into the S information segments according to a segmentation criterion.

In another possible implementation, the transceiver module is further configured to:
receive sixth indication information from the second communication apparatus. The sixth indication information indicates at least one of the following: segmenting the first transport block in a segmentation manner and a segmentation parameter.

In another possible implementation, the processing module is specifically configured to:
recombine the first transport block into the S information segments according to a recombination criterion.

In another possible implementation, the processing module is specifically configured to:
recombine the first transport block into the S information segments according to a transform criterion.

In another possible implementation, the transceiver module is further configured to:
receive seventh indication information from the second communication apparatus. The seventh indication information indicates the first communication apparatus to enable the step of converting, by the processing module, the first transport block into S information segments.

A fourth aspect of this application provides a second communication apparatus, including:
a processing module, configured to: obtain an encoded code block of a first communication apparatus; perform channel decoding on the encoded code block to obtain C to-be-encoded code blocks, where C is an integer greater than or equal to 1; determine G information groups based on the C to-be-encoded code blocks, where G is an integer greater than or equal to 1; perform inverse processing on the G information groups based on X' inverse processing modes, to obtain S information segments, where each of the G information groups corresponds to one of the X' inverse processing modes, and S is an integer greater than or equal to 1; and determine a first transport block based on the S information segments, where a sum of sizes of the C to-be-encoded code blocks is less than a size of the first transport block.

In a possible implementation, the processing module is further configured to:
determining an inverse processing mode corresponding to each of the G information groups.

In another possible implementation, a first information group corresponds to a first inverse processing mode, the first information group is one of the G information groups, and the first inverse processing mode includes: the first information group corresponds to one of the S information segments; and the second communication apparatus performs the inverse processing on the first information group to obtain the information segment.

In another possible implementation, a first information group corresponds to a second inverse processing mode, the first information group is one of the G information groups, the first information group corresponds to the second inverse processing mode, and the second inverse processing mode includes: the first information group corresponds to a plurality of information segments in the S information segments; and the second communication apparatus performs the inverse processing on the first information group to obtain at least one information segment in the plurality of information segments.

In another possible implementation, a first information group corresponds to a third inverse processing mode, the first information group is one of the G information groups, and the third inverse processing mode includes: the first information group corresponds to one of the S information segments and one or more information groups, and the one or more information groups belong to the G information groups; and the second communication apparatus performs the inverse processing on the first information group to obtain the one of the S information segments.

In another possible implementation, a first information group corresponds to a fourth inverse processing mode, the first information group is one of the G information groups, and the fourth inverse processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the second communication apparatus performs the inverse processing on the first information group to obtain the one of the S information segments.

In another possible implementation, in the fourth inverse processing mode, the one or more information segments are also from the S information segments.

In another possible implementation, a first information group corresponds to a fifth inverse processing mode, the first information group is one of the G information groups, and the fifth inverse processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the second communication apparatus performs the inverse processing on the first information group to obtain the one of the S information segments.

In another possible implementation, in the fifth inverse processing mode, the one or more information segments are also from the S information segments.

In another possible implementation, the second communication apparatus further includes a transceiver module.

The transceiver module is configured to send first indication information to the first communication apparatus.

The first indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, and an index of a transport block corresponding to the G information groups.

In another possible implementation, the processing module is further configured to:
determine B information blocks based on the C to-be-encoded code blocks, where B is an integer greater than or equal to 1; and
restore the B information blocks to the G information groups based on Z restoration modes, where each of the B information blocks corresponds to one of the Z restoration modes, and Z is an integer greater than or equal to 1.

In another possible implementation, a first information group corresponds to a sixth inverse processing mode, the first information group is one of the G information groups, and the sixth inverse processing mode includes: the first information group corresponds to one of the S information segments; and the second communication apparatus performs the inverse processing on the first information group to obtain the information segment.

In another possible implementation, a first information group corresponds to a seventh inverse processing mode, the first information group is one of the G information groups, the first information group corresponds to the seventh inverse processing mode, and the seventh inverse processing mode includes: the first information group corresponds to a plurality of information segments in the S information segments; and the second communication apparatus performs the inverse processing on the first information group to obtain at least one information segment in the plurality of information segments.

In another possible implementation, a first information group corresponds to an eighth inverse processing mode, the first information group is one of the G information groups, and the eighth inverse processing mode includes: the first information group corresponds to one of the S information segments and one or more information groups, and the one or more information groups belong to the G information groups; and the second communication apparatus performs the inverse processing on the first information group to obtain at least one information segment in the S information segments.

In another possible implementation, a first information group corresponds to a ninth inverse processing mode, the first information group is one of the G information groups, and the ninth inverse processing mode includes: the first information group corresponds to one of the S information segments and one or more information blocks, and the one or more information blocks belong to the B information blocks; and the second communication apparatus performs the inverse processing on the first information group to obtain the one of the S information segments.

In another possible implementation, a first information group corresponds to a tenth inverse processing mode, the first information group is one of the G information groups, and the tenth inverse processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the second communication apparatus performs the inverse processing on the first information group to obtain the one of the S information segments.

In another possible implementation, in the tenth inverse processing mode, the one or more information segments are also from the S information segments.

In another possible implementation, a first information group corresponds to an eleventh inverse processing mode, the first information group is one of the G information groups, and the eleventh inverse processing mode includes: the first information group corresponds to one of the S information segments, and the first information group further corresponds to at least one of the following: one or more information segments, one or more information groups, and one or more information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the second communication apparatus performs the inverse processing on the first information group to obtain the one of the S information segments.

In another possible implementation, in the eleventh inverse processing mode, the one or more information segments are also from the S information segments.

In another possible implementation, the second communication apparatus further includes a transceiver module.

The transceiver module is configured to send second indication information to the first communication apparatus. The second indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, an index of an information block corresponding to the G information groups, and an index of a transport block corresponding to the G information groups.

In another possible implementation, a first information block corresponds to a first restoration mode, the first information block is one of the B information blocks, and the first restoration mode includes: the first information block corresponds to one of the G information groups; and the second communication apparatus performs bit or symbol restoration on the first information block according to a first restoration principle, to obtain all or a part of bits or symbols of the information group.

In another possible implementation, a first information block corresponds to a second restoration mode, the first information block is one of the B information blocks, and the second restoration mode includes: the first information block corresponds to a plurality of information groups in the G information groups; and the second communication apparatus performs bit or symbol restoration on the first information block according to a second restoration principle, to obtain all or a part of bits or symbols of the plurality of information groups.

In another possible implementation, the second communication apparatus further includes a transceiver module.

The transceiver module is configured to send third indication information to the first communication apparatus. The third indication information indicates at least one of the following: sizes of the B information blocks, a screening mode, a screening principle, and an index of a corresponding information group.

In another possible implementation, the processing module is specifically configured to:
determine an inverse mapping mode corresponding to the C to-be-encoded code blocks; and
inversely mapping the C to-be-encoded code blocks to the B information blocks in the inverse mapping mode.

In another possible implementation, the C to-be-encoded code blocks correspond to a first inverse mapping mode, and the first inverse mapping mode includes: The second communication apparatus inversely maps the C to-be-encoded code blocks to the B information blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

In another possible implementation, the C to-be-encoded code blocks correspond to a second inverse mapping mode. The second inverse mapping mode includes: the second communication apparatus inversely maps the C to-be-encoded code blocks to Q third transport blocks based on a second mapping relationship, where Q is an integer greater than or equal to 1; and the second communication apparatus inversely maps the Q third transport blocks to the B information blocks. The second mapping relationship includes: the B information blocks are in one-to-one correspondence with the Q third transport blocks, and B is equal to Q; each of the Q third transport blocks corresponds to a plurality of information blocks in the B information blocks; or each of the B information blocks corresponds to a plurality of third transport blocks in the Q third transport blocks.

In another possible implementation, the second communication apparatus further includes a transceiver module.

The transceiver module is configured to send fourth indication information to the first communication apparatus. The fourth indication information indicates at least one of the following: a mapping mode of the B information blocks and the sizes of the C to-be-encoded code blocks.

In another possible implementation, the processing module is further configured to:
perform entropy decoding on the B information blocks, to obtain B entropy-decoded information blocks.

In another possible implementation, the second communication apparatus further includes a transceiver module.

The transceiver module is configured to send fifth indication information to the first communication apparatus. The fifth indication information indicates at least one of the following: enabling of entropy encoding by the first communication apparatus and an operation corresponding to the entropy encoding.

In another possible implementation, the processing module is specifically configured to:
combine the S information segments into the first transport block according to a combination criterion.

In another possible implementation, the second communication apparatus further includes a transceiver module.

The transceiver module is configured to send sixth indication information to the first communication apparatus. The sixth indication information indicates at least one of the following: segmenting the first transport block in a segmentation manner and a segmentation parameter.

In another possible implementation, the second communication apparatus further includes a transceiver module.

The transceiver module is configured to send seventh indication information to the first communication apparatus. The seventh indication information indicates the first communication apparatus to enable a step of converting, by the first communication apparatus, the first transport block into the S information segments.

A fifth aspect of this application provides a first communication apparatus. The first communication apparatus includes a processor. The processor is configured to invoke a computer program or computer instructions in a memory, to enable the processor to implement any one of the implementations of the first aspect.

Optionally, the first communication apparatus further includes the memory.

Optionally, the memory and the processor are integrated together.

Optionally, the first communication apparatus further includes a transceiver. The processor is configured to control the transceiver to send or receive a signal.

A sixth aspect of this application provides a second communication apparatus. The second communication apparatus includes a processor. The processor is configured to invoke a computer program or computer instructions in a memory, to enable the processor to implement any one of the implementations of the second aspect.

Optionally, the second communication apparatus further includes the memory.

Optionally, the memory and the processor are integrated together.

Optionally, the second communication apparatus further includes a transceiver. The processor is configured to control the transceiver to send or receive a signal.

A seventh aspect of this application provides a computer program product including instructions. When the computer program product runs on a computer, the computer is enabled to perform any one of the implementations of the first aspect or the second aspect.

An eighth aspect of this application provides a computer-readable storage medium, including computer instructions. When the instructions are run on a computer, the computer is enabled to perform any one of the implementations of the first aspect or the second aspect.

A ninth aspect of this application provides a chip apparatus, including a processor, configured to invoke a computer program or computer instructions in a memory, to enable the processor to perform any one of the implementations of the first aspect.

Optionally, the processor is coupled to the memory through an interface.

A tenth aspect of this application provides a chip apparatus, including a processor, configured to invoke a computer program or computer instructions in a memory, to enable the processor to perform any one of the implementations of the second aspect.

Optionally, the processor is coupled to the memory through an interface.

An eleventh aspect of embodiments of this application provides a first communication apparatus. The first communication apparatus includes a logic circuit and an input/output interface. The logic circuit is configured to perform the processing operation in any one of the implementations of the first aspect, and the input/output interface is configured to perform the receiving/sending operation in any one of the implementations of the first aspect.

A twelfth aspect of embodiments of this application provides a second communication apparatus. The second communication apparatus includes a logic circuit. The logic circuit is configured to perform the processing operation in any one of the implementations of the second aspect.

Optionally, the second communication apparatus further includes an input/output interface. The input/output interface is configured to perform the receiving/sending operation in any one of the implementations of the second aspect.

A thirteenth aspect of embodiments of this application provides a communication system. The communication system includes the first communication apparatus according to the third aspect and the second communication apparatus according to the fourth aspect.

It can be learned from the foregoing technical solutions that embodiments of this application have the following advantages:

It can be learned from the foregoing technical solutions that the first communication apparatus obtains the first transport block. The first communication apparatus converts the first transport block into the S information segments, where S is an integer greater than or equal to 1. Then, the first communication apparatus performs the pre-processing on the S information segments based on the X processing modes, to obtain the G information groups. Each of the G information groups corresponds to one of the X processing modes, where G is an integer greater than or equal to 1, and X is an integer greater than or equal to 1. The first communication apparatus determines the C to-be-encoded code blocks based on the G information groups, where C is an integer greater than or equal to 1, and the sum of the sizes of the C to-be-encoded code blocks is less than the size of the first transport block. The first communication apparatus performs the channel coding on the C to-be-encoded code blocks, to obtain the encoded code blocks. The first communication apparatus outputs the encoded code block. It can be learned that in the technical solutions of this application, the first communication apparatus converts the first transport block to obtain the S information segments. Then, the first communication apparatus performs the pre-processing on the S information segments based on the X processing modes, to obtain the G information groups. Then, the first communication apparatus determines the C to-be-encoded code blocks based on the G information groups. Therefore, the sum of the sizes of the C to-be-encoded code blocks is less than the size of the first transport block, to implement data compression. Therefore, an amount of data transmitted by the first communication apparatus is reduced, and transmission overheads are reduced.

### BRIEF DESCRIPTION OF DRAWINGS

FIG. 1 is a diagram of a communication system according to an embodiment of this application;
FIG. 2 is a diagram of an embodiment of an encoding method and a decoding method according to an embodiment of this application;
FIG. 3A is a diagram of a physical layer compression framework according to an embodiment of this application;
FIG. 3B is a schematic flowchart of an encoding method according to an embodiment of this application;
FIG. 4 is a diagram of converting, by a first communication apparatus, a first transport block into S information segments according to an embodiment of this application;
FIG. 5A is a diagram of a first processing mode according to an embodiment of this application;
FIG. 5B is a diagram of a second processing mode according to an embodiment of this application;
FIG. 5C is a diagram of a third processing mode according to an embodiment of this application;
FIG. 5D is a diagram of a fourth processing mode according to an embodiment of this application;
FIG. 5E is another diagram of a fourth processing mode according to an embodiment of this application;
FIG. 5F is another diagram of a fourth processing mode according to an embodiment of this application;
FIG. 5G is a diagram of a fifth processing mode according to an embodiment of this application;
FIG. 5H is another diagram of a fifth processing mode according to an embodiment of this application;
FIG. 5I is a diagram of a ninth processing mode according to an embodiment of this application;
FIG. 5J is a diagram of a tenth processing mode according to an embodiment of this application;
FIG. 5K is a diagram of an eleventh processing mode according to an embodiment of this application;
FIG. 5L is another diagram of an eleventh processing mode according to an embodiment of this application;
FIG. 6A is a diagram of sensing target points by a terminal device at a current moment according to an embodiment of this application;
FIG. 6B is a diagram of first-type target points and second-type target points according to an embodiment of this application;
FIG. 6C is a diagram of target points corresponding to a transport block f, target points corresponding to a transport block fl, and target points corresponding to a transport block f2 according to an embodiment of this application;
FIG. 7A is a diagram of a first screening mode according to an embodiment of this application;
FIG. 7B is another diagram of a first screening mode according to an embodiment of this application;
FIG. 7C is a diagram of a second screening mode according to an embodiment of this application;
FIG. 7D is a diagram of entropy encoding according to an embodiment of this application;
FIG. 8A is a diagram of a first mapping mode according to an embodiment of this application;
FIG. 8B is another diagram of a first mapping mode according to an embodiment of this application;
FIG. 8C is another diagram of a first mapping mode according to an embodiment of this application;
FIG. 8D is a diagram of a second mapping mode according to an embodiment of this application;
FIG. 8E is another diagram of a second mapping mode according to an embodiment of this application;
FIG. 8F is another diagram of a second mapping mode according to an embodiment of this application;
FIG. 9A is a diagram of a third mapping mode according to an embodiment of this application;
FIG. 9B is another diagram of a third mapping mode according to an embodiment of this application;
FIG. 9C is another diagram of a third mapping mode according to an embodiment of this application;
FIG. 9D is a diagram of a fourth mapping mode according to an embodiment of this application;
FIG. 9E is another diagram of a fourth mapping mode according to an embodiment of this application;
FIG. 9F is another diagram of a fourth mapping mode according to an embodiment of this application;
FIG. 10A is a schematic flowchart of an encoding method according to an embodiment of this application;
FIG. 10B is another schematic flowchart of an encoding method according to an embodiment of this application;
FIG. 10C is another schematic flowchart of an encoding method according to an embodiment of this application;
FIG. 10D is another schematic flowchart of an encoding method according to an embodiment of this application;
FIG. 11A is a schematic flowchart of performing encoding by a first communication apparatus in a configuration manner 1 according to an embodiment of this application;
FIG. 11B is a schematic flowchart of performing encoding by a first communication apparatus in a configuration manner 2 according to an embodiment of this application;
FIG. 12 is a schematic of a structure of a first communication apparatus according to an embodiment of this application;
FIG. 13 is a schematic of a structure of a second communication apparatus according to an embodiment of this application;
FIG. 14 is a schematic of a structure of a communication apparatus according to an embodiment of this application;
FIG. 15 is a schematic of a structure of a terminal device according to an embodiment of this application;
FIG. 16 is another schematic of a structure of a first communication apparatus according to an embodiment of this application; and
FIG. 17 is another schematic of a structure of a second communication apparatus according to an embodiment of this application.

### DESCRIPTION OF EMBODIMENTS

Embodiments of this application provide an encoding method, a decoding method, and a related apparatus, to reduce an amount of data transmitted by a first communication apparatus, and reduce transmission overheads.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one item (piece) of the following" or a similar expression thereof means any combination of these items, including a singular item (piece) or any combination of plural items (pieces). For example, at least one (piece) of a, b, and c may represent: a, b, c, a and b, a and c, b and c, or a, b, and c. Each of a, b, and c may be singular or plural.

In addition, an information segment, an information group, and a number of the information segment in an example shown in this application should be understood with reference to a specific example. A same number may appear in different examples, but should be understood with reference to the specific example.

The technical solutions in this application may be used in various communication systems, for example, a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, a vehicle-to-everything (vehicle-to-everything, V2X) communication system, a device-to-device (device-to-device, D2D) communication system, a wireless local area network (wireless local area network, WLAN) communication system, and an ultra wide band (ultra wide band, UWB) communication system.

A communication system to which this application is applicable includes a first communication apparatus and a second communication apparatus. The first communication apparatus is a terminal device, and the second communication apparatus is a network device. Alternatively, the first communication apparatus is a network device, and the second communication apparatus is a terminal device. This is not specifically limited in this application.

The terminal device and the network device in this application are described below.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device is also be referred to as a user equipment (user equipment, UE), a mobile station (mobile station, MS), a mobile terminal (mobile terminal, MT), or the like. The terminal device is a device that includes a wireless communication function (providing the user with the voice/data connectivity), for example, a handheld device or a vehicle-mounted device having the wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), an uncrewed aerial vehicle, a wireless terminal in a smart city (smart city), a wireless terminal in a smart home (smart home), or the like. For example, the wireless terminal in the internet of vehicles may be a vehicle-mounted device, an entire vehicle device, an in-vehicle module, a vehicle, or the like. The wireless terminal in industrial control may be a camera, a robot, or the like. The wireless terminal in the smart home may be a television, an air conditioner, a sweeper, a sound box, a set-top box, or the like.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a satellite, an uncrewed aerial vehicle, a transmission point (transmission point, TP) or a transmission reception point

(transmission reception point, TRP), or the like, or may be a network device in a 5G mobile communication system, for example, a next generation NodeB (next generation NodeB, gNB), a transmission reception point (transmission reception point, TRP), or a TP in an NR system, or one antenna panel or one group of antenna panels (including a plurality of antenna panels) of a base station in the 5G mobile communication system. Alternatively, the network device may be a network node included in the gNB or the transmission point, for example, a distributed unit (distributed unit, DU).

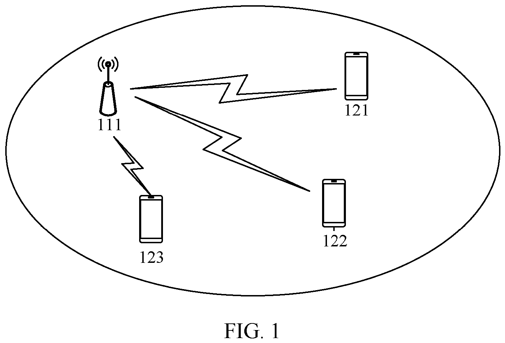

FIG. 1 is a diagram of a communication system according to an embodiment of this application. Refer to FIG. 1. The communication system includes at least one network device and at least one terminal device, for example, a network device 111, a terminal device 121, a terminal device 122, and a terminal device 123 shown in FIG. 1. The network device 111 may perform communication transmission with the terminal device 121, the terminal device 122, and the terminal device 123.

In the communication system shown in FIG. 1, as application scenarios become increasingly diversified, a large amount of native data of a radio access network (radio access network, RAN) that is oriented to a new scenario is generated in the communication system. The native data, such as sensing data, imaging data, distributed artificial intelligence (artificial intelligence, AI) data, channel feedback information, and control information from a higher layer, also brings a new requirement for transmission. The imaging data may include two-dimensional imaging data, three-dimensional imaging data, and the like. The sensing data may include environment reconstruction data, positioning data, tracking data, and the like. The distributed AI data may include an AI model, gradient update data, feature information extracted by a neural network, and the like.

It can be learned from the foregoing descriptions that the native data is characterized by a large amount of data, a large amount of redundancy, time-domain correlation, frequency-domain correlation, spatial-domain correlation, or the like. For example, the sensing data has strong sparseness, and positioning data, tracking data, or environment reconstruction data obtained within a period of consecutive time has strong time correlation. The data can be compressed by using the correlation between the data, to reduce transmission overheads. In addition, for a sensing requirement or an AI task requirement, a compression result having a loss degree can be accepted in a plurality of scenarios. In other words, raw data does not need to be completely restored.

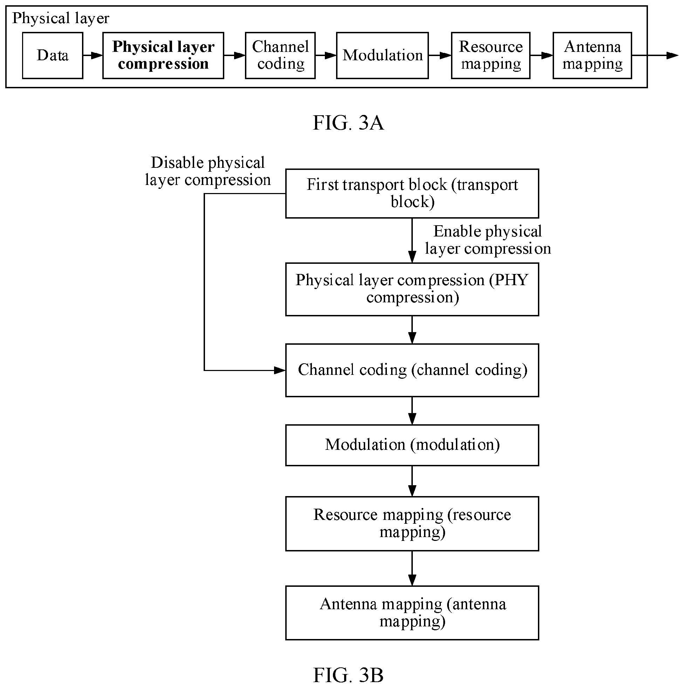

Considering a specific location at which the native data generated in the communication system is compressed, compression of the data at a physical layer is proposed in this application. Specifically, as shown in FIG. 3A, before channel coding, a process of physical layer compression is added to implement the data compression. Compared with compression of the data at an application layer, the compression of the data at the physical layer has the following advantages:
1. The native data of the RAN is from the physical layer, and is data used for communication. Therefore, compression at the physical layer is more direct.
2. Data compressed and decompressed at the physical layer may be directly used at the physical layer, and can be better used for auxiliary communication, a network for AI (network for AI, Net4AI), and AI for network (AI for network, AI4Net).
3. The direct compression at the physical layer can reduce an end-to-end transmission delay compared with a process in which the data is transmitted to the application layer for compression and decompression and returned to the physical layer.

In conclusion, for the native data, this application provides a physical layer compression framework applicable to a plurality of data types.

In the communication system shown in FIG. 1, the communication transmission may be performed between the network device and the terminal device based on the technical solution of this application. In this way, an amount of data communicated between the network device and the terminal device is reduced, and transmission overheads are reduced. For details, refer to related descriptions in the following descriptions.

The technical solutions of this application are described below with reference to specific embodiments.

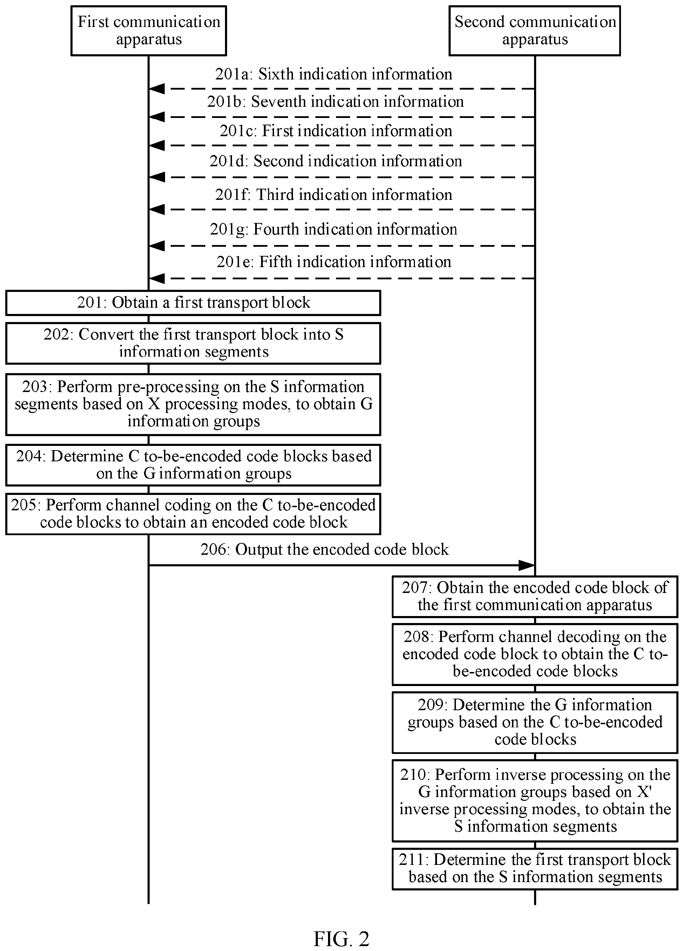

FIG. 2 is a diagram of an embodiment of an encoding method and a decoding method according to an embodiment of this application. Refer to FIG. 2. The method includes the following steps.

201: A first communication apparatus obtains a first transport block.

Optionally, data included in the first transport block is in a bit form or a symbol form. This is not specifically limited in this application. For example, the first transport block includes K symbols, and the K symbols may be integers, floating-point numbers, complex numbers, or the like.

In some implementations, the first transport block includes native data, for example, sensing data, imaging data, AI data, or data from a media access control (media access control, MAC) layer or a higher layer.

202: The first communication apparatus converts the first transport block into S information segments (information segments).

S is an integer greater than or equal to 1.

Optionally, after the first communication apparatus determines the S information segments, the first communication apparatus may attach a cyclic redundancy check (cyclic redundancy check, CRC) to each information segment.

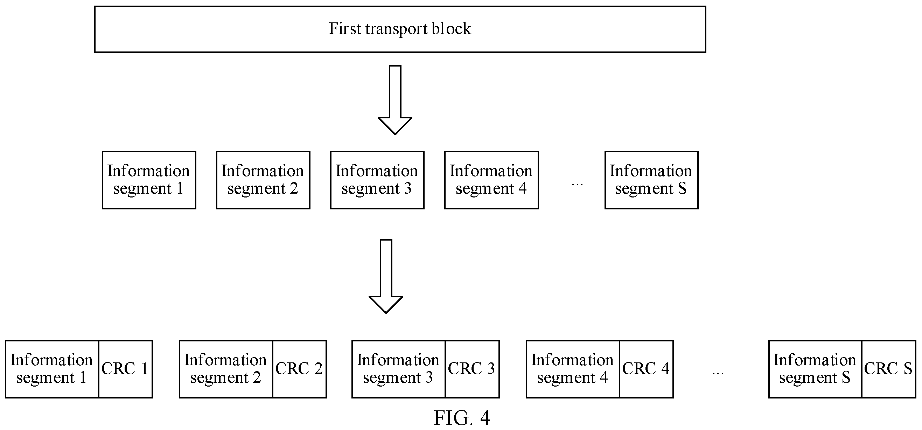

For example, as shown in FIG. 4, the first communication apparatus converts the first transport block into an information segment 1 to an information segment S. Then, the first communication apparatus attaches a corresponding CRC to each of the information segment 1 to the information segment S.

The following describes some possible implementations in which the first communication apparatus determines the S information segments in step 202.

Implementation 1: The first communication apparatus segments the first transport block into the S information segments according to a segmentation criterion.

Optionally, the segmentation criterion includes: segmenting the first transport block into the S information segments based on a sequence of data included in the first transport block; or segmenting the first transport block into the S information segments based on a size of data.

For example, the first communication apparatus switches the first transport block into the S information segments based on the sequence of the data included in the first transport block. In this way, the first communication apparatus can simply and quickly obtain the S information segments.

For example, the first communication apparatus segments the first transport block into the S information segments based on locations of data bits in the first transport block. For example, the first communication apparatus places a most significant bit of the data bits in an information segment, places a second most significant bit in another information segment, and places a least significant bit in an information segment by analogy. In this way, the first communication apparatus can subsequently perform quantization separately (can perform the quantization by using different quantization precision or different quantities of quantized bits). When the quantities of quantized bits are the same, quantization losses are smaller.

Optionally, in this implementation, the embodiment shown in FIG. 2 further includes step 201a. Step 201a may be performed before step 201.

Step 201a: A second communication apparatus sends sixth indication information to the first communication apparatus. Correspondingly, the first communication apparatus receives the sixth indication information from the second communication apparatus.

The sixth indication information indicates at least one of the following: segmenting the first transport block in a segmentation manner, a segmentation parameter, and the segmentation criterion.

Correspondingly, the first communication apparatus segments the first transport block into the S information segments based on the segmentation parameter and according to the segmentation criterion.

Implementation 2: The first communication apparatus recombines the first transport block into the S information segments according to a recombination criterion.

Optionally, the recombination criterion includes that the data included in the first transport block is recombined based on at least one of data importance, data similarities, data correlation, and data types, to obtain the S information segments.

For example, the first transport block includes a model parameter of a neural network. The first communication apparatus may recombine, based on a parameter type of the neural network, the data included in the first transport block, to obtain the S information segments. For example, model parameters of the neural network that are of a same parameter type may be placed in one information segment. Alternatively, model parameters of the neural network that are of a same parameter type may be further divided into a plurality of parts, and the plurality of parts are respectively placed in different information segments. In other words, the model parameters of the neural network that are of the same parameter type correspond to a plurality of information segments. Model parameters of the neural network that are of a same parameter type and that are of a plurality of network layers may alternatively be combined into a same information segment. For example, a neural network includes a convolution layer (Conv) 1 to a convolution layer (Conv) n, a weight (weight) of the convolution layer 1 and a weight of the convolution layer n may be assigned to a same information segment, and a bias (bias) of the convolution layer 1 and a bias of the convolution layer n may be assigned to a same information segment.

For example, the first transport block includes a model parameter of a neural network. The first communication apparatus may recombine, based on a layer or a parameter matrix of the neural network, the data included in the first transport block, to obtain the S information segments. For example, one layer or one parameter matrix of the neural network may be placed in an information segment. Alternatively, one layer or one parameter matrix of the neural network may be further divided into a plurality of parts, and the plurality of parts are respectively placed in different information segments. In other words, one layer or one parameter matrix of the neural network corresponds to a plurality of information segments. For a plurality of network layers, same layers or parameter matrices of a same type may alternatively be combined into a same information segment.

The foregoing are merely some examples. During actual application, a similar recombination manner may also be used to recombine data of another data type, for example, recombine the sensing data. For example, the first communication apparatus may combine data having similar features together. The similar features may include but is not limited to at least one of the following: similar data distribution, similar spatial locations, similar data sizes, and similar data types.

It should be noted that, optionally, the recombination criterion may be indicated by a second communication apparatus to the first communication apparatus, may be pre-configured, or may be determined by the first communication apparatus. This is not specifically limited in this application.

Optionally, the second communication apparatus may send indication information to the first communication apparatus. The indication information indicates the recombination criterion and/or indicates the first communication apparatus to recombine the first transport block in a recombination manner.

Implementation 3: The first communication apparatus transforms the first transport block into the S information segments according to a transform criterion.

Optionally, the transform criterion includes but is not limited to at least one of the following: DCT transform, wavelet transform, and octree transform.

For example, the first communication apparatus performs the DCT transform, the wavelet transform, or the octree transform on the first transport block to obtain data of different levels, for example, DCT coefficients of different frequency bands or different layers of the wavelet transform. Low frequency coefficients are usually important. Then, the first communication apparatus maps the data of different levels to different information segments. Specifically, the first communication apparatus may place low-level data together, and place high-level data together, to subsequently compress the data of different levels by using different quantization precision or bit selection ratios, so that less important data is lost, and more non-important data is lost. Therefore, the important data can be accurately transmitted to the second communication apparatus when the data is compressed. This helps a receiving end restore the important data.

It should be noted that, optionally, the transform criterion may be indicated by the second communication apparatus to the first communication apparatus, may be pre-configured, or may be determined by the first communication apparatus. This is not specifically limited in this application.

Optionally, the second communication apparatus may send indication information to the first communication apparatus. The indication information indicates the transform criterion and/or indicates the first communication apparatus to recombine the first transport block in a transformation manner.

It should be noted that, optionally, if the first communication apparatus determines, in step 202, a conversion manner and a corresponding conversion parameter for converting the first transport block into the S information segments, the first communication apparatus may indicate the conversion manner and the corresponding conversion parameter to the second communication apparatus. This helps the second communication apparatus restore the data.

Optionally, the embodiment shown in FIG. 2 further includes step 201b. Step 201b may be performed before step 201.

Step 201b: The first communication apparatus sends seventh indication information to the second communication apparatus. Correspondingly, the second communication apparatus receives the seventh indication information from the first communication apparatus.

The seventh indication information indicates the first communication apparatus to enable the step of converting, by the first communication apparatus, the first transport block into S information segments. Optionally, the seventh indication information may be carried in a media access control control element (media access control control element, MAC CE) or physical layer control signaling, for example, radio resource control (radio resource control, RRC) signaling.

The second communication apparatus may determine whether physical layer compression needs to be enabled in a current scenario. If data for transmission is not redundant, the second communication apparatus may indicate not to enable the physical layer compression. If data for transmission has a large amount of redundancy (for example, sensing data or AI data), the second communication apparatus may indicate the first communication apparatus to enable the physical layer compression, that is, indicate the first communication apparatus to perform the step of converting the first transport block into S information segments.

It should be noted that, as shown in FIG. 3A, the physical layer compression may be performed on a physical layer compression module. The physical layer compression module may work in a transparent mode (transparent mode), indicating not to enable the physical layer compression. In this way, the second communication apparatus does not need to explicitly indicate to "enable" or "not enable" the physical layer compression, but implicitly enables or does not enable the physical layer compression through configuration of the physical layer compression module.

Optionally, the physical layer compression may be performed on the physical layer compression module, or may be performed on a channel coding module. In other words, the channel coding code block further has a function of the physical layer compression. This is not specifically limited in this application.

For example, as shown in FIG. 3B, if the second communication apparatus indicates not to enable the physical layer compression, the first communication apparatus may skip the physical layer compression. If the second communication apparatus indicates to enable the physical layer compression, the first communication apparatus enables the physical layer compression, that is, performs step 202 to step 204. In the embodiment shown in FIG. 2, the technical solution of this application is described by using an example in which the second communication apparatus indicates to enable the physical layer compression.

203: The first communication apparatus performs pre-processing on the S information segments based on X processing modes, to obtain G information groups (information groups).

Each of the G information groups corresponds to one of the X processing modes, where G is an integer greater than or equal to 1, and X is an integer greater than or equal to 1.

Optionally, the pre-processing includes but is not limited to at least one of the following: segmentation processing, recombination processing, clustering processing, DCT, octree transform, K-dimensional tree transform, wavelet transform, weighting, residual calculation, FFT, IFFT, and quantization processing.

It should be noted that, in some cases, a process of step 202 may be performed in a pre-processing process of step 203. To be specific, step 202 and step 203 may be combined as: The first communication apparatus performs the pre-processing on the first transport block based on the X processing modes, to obtain the G information groups.

The first communication apparatus determines the processing mode of each of the G information groups. The X processing modes may be pre-configured in the first communication apparatus. For example, X is equal to 6. That is, the first communication apparatus may pre-configure six processing modes. Certainly, X may alternatively be another value. For example, X is equal to 8. This is not specifically limited in this application.

The following describes the processing mode with reference to two possible implementations in which the first communication apparatus determines C to-be-encoded code blocks in step 204.

A possible implementation in which the first communication apparatus determines C to-be-encoded code blocks includes: The first communication apparatus determines a mapping mode corresponding to the G information groups. The first communication apparatus maps the G information groups to the C to-be-encoded code blocks in the mapping mode corresponding to the G information groups. For detailed descriptions of this implementation, refer to related descriptions of step 204 below. Details are not described herein.

Based on this implementation, five possible processing modes provided in this application are described below. The following describes various possible processing modes by using a processing mode corresponding to a first information group.

### 1. First processing mode.

The first information group corresponds to the first processing mode, and the first information group is one of the G information groups. The first processing mode includes that the first information group corresponds to one of the S information segments; and the first communication apparatus performs the pre-processing on the one of the S information segments to obtain the first information group. The first processing mode may also be referred to as a mode 1 (Mode 1).

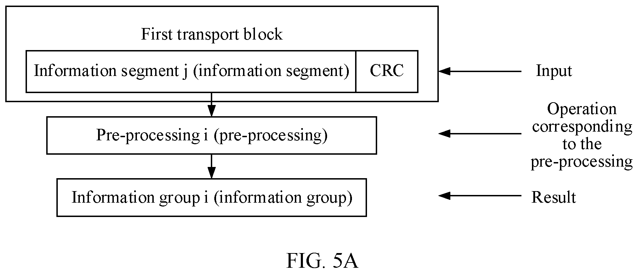

For example, as shown in FIG. 5A, a first information segment is an information segment j in the S information segments. An operation of pre-processing i (pre-processing i) is performed within the information segment j or an information group i. Therefore, the operation of the pre-processing i may be referred to as a within-segment operation (within segments) or a within-group operation (within source groups). i and j may be equal, or may not be equal. This is not specifically limited. As shown in FIG. 5A, an input of the pre-processing i is the information segment j. The operation of the pre-processing i may include at least one of the following: DCT transform, wavelet transform, time-frequency transform, octree transform, K-dimensional tree transform, FFT, IFFT, quantization processing, and voxelization processing. An output of the pre-processing i is the information group i.

The first communication apparatus obtains, through transformation, low-frequency information and high-frequency information in the data. Then, the first communication apparatus may quantize the high-frequency information and the low-frequency information by using different quantization precision. Compared with the high-frequency information, the low-frequency information is more important. Therefore, the first communication apparatus may quantize the low-frequency information by using high quantization precision, and quantize the high-frequency information by using low quantization precision. In this way, quantization losses are smaller when bit overheads are the same. The first communication apparatus performs operations such as quantization processing and voxelization processing on the low-frequency information obtained after the transformation processing and the high-frequency information obtained after the transformation processing, to reduce data resolution or data precision and spatial resolution or spatial precision. In this way, it can be ensured that bit overheads are reduced when precision is acceptable.

It should be noted that, optionally, if each of the G information groups corresponds to the first processing mode, G is equal to S. In other words, the S information segments are in one-to-one correspondence with the G information groups.

### 2. Second processing mode.

The first information group corresponds to the second processing mode, and a second information group is one of the G information groups. The second processing mode includes: the first information group corresponds to a plurality of information segments in the S information segments; and the first communication apparatus performs the pre-processing on the plurality of information segments to obtain the first information group. The second processing mode may be referred to as a mode 2 (Mode 2).

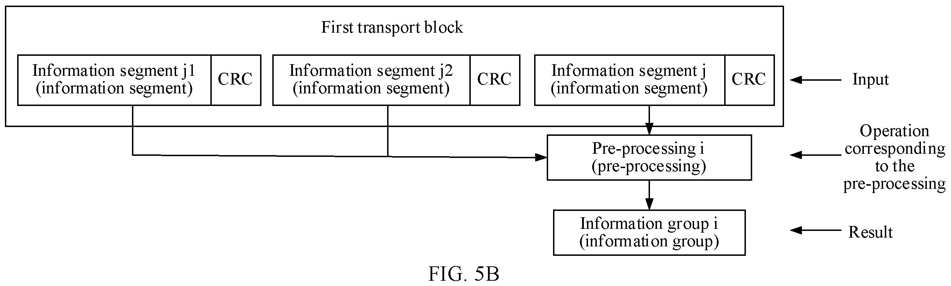

For example, as shown in FIG. 5B, a first information segment is an information segment j in the S information segments. An input of pre-processing i is from the information segment j, and is also from one or more information segments other than the information segment j in the S information segments, for example, an information segment j 1 and an information segment j2 shown in FIG. 5B. An operation of the pre-processing i is between a plurality of information segments, and may be referred to as a cross-segment operation (cross segments). The operation of the pre-processing i may include performing joint processing between the plurality of information segments, and is not limited to within one information segment. The joint processing may specifically include at least one of operations such as residual calculation, bias calculation, weighted summation, and joint transform. Optionally, the operation of the pre-processing i may further include the pre-processing operation shown in the first processing mode. To be specific, the first communication apparatus performs the joint processing on the information segment j, the information segment j 1, and the information segment j2 to obtain a corresponding result, and processes the result by performing the pre-processing operation shown in the foregoing first processing mode. It can be learned that in the second processing mode, the first communication apparatus may determine information (which may be understood as data having a similar data type or similar data importance) matching the information segment j. The matched information may be from a different information segment. The first communication apparatus may perform the joint processing on the plurality of information segments, to eliminate correlation between the data and reduce data redundancy.

For example, the first communication apparatus averages the information segment j, the information segment j 1, and the information segment j2, to obtain the first information group.

Optionally, the plurality of information segments include a basic information segment and a reference information segment, and the first communication apparatus performs the pre-processing on the basic information segment based on the reference information segment to obtain the first information group.

For example, as shown in FIG. 5B, the information segment j is a basic information segment, and the information segment j 1 and the information segment j2 may be referred to as reference information segments (reference information segments). The first communication apparatus performs the pre-processing on the information segment j by using the information segment j 1 and the information segment j2 as reference information segments, to obtain the first information group.

For example, the first communication apparatus may perform weighted averaging on the information segment j 1 and the information segment j2 to obtain A. Then, the first communication apparatus obtains B by calculating a residual between the information segment j and A, and performs the pre-processing operation shown in the first processing mode on B.

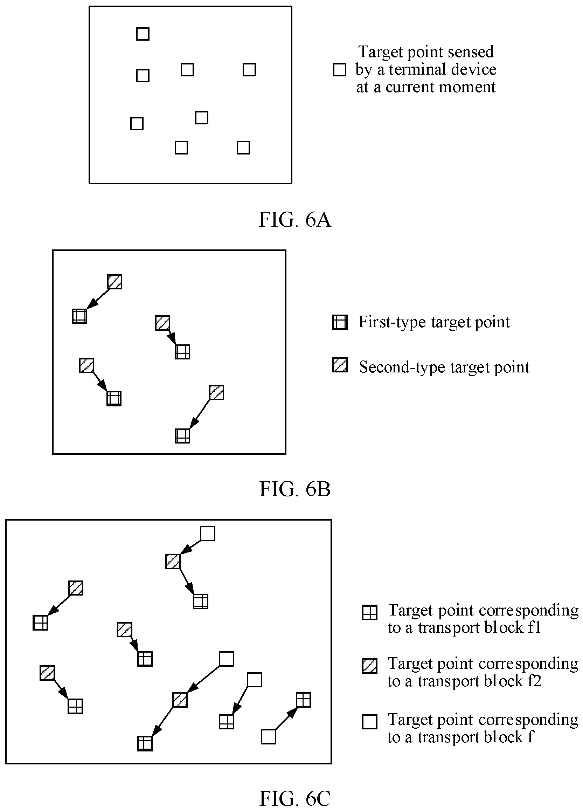

For example, as shown in FIG. 6A, the first communication apparatus is a terminal device, and the second communication apparatus is a network device. The terminal device senses target points at a current moment. The terminal device may perform compression reporting by using correlation between coordinate locations of the target points that are sensed at the current moment. A specific process includes: The terminal device first classifies the target points shown in FIG. 6A into two types of targets, which are specifically classified into first-type target points and second-type target points shown in FIG. 6B. Location coordinates of the first-type target points may be independently compressed. To be specific, compression via quantization may be performed on the coordinate location of each first-type target point by performing the pre-processing operation shown in the first processing mode. Differential compression may be performed on coordinate locations of the second-type target points. A specific process is as follows: The terminal device selects a reference target point. Then, the terminal device obtains a differential coordinate location of the second-type target point by subtracting a coordinate location of the reference target point from the coordinate location of the second-type target point. The terminal device performs compression via quantization on the differential coordinate location of the second-type target point, to obtain a quantized differential coordinate location of the second-type target point. Optionally, the reference target point may be a first-type target point, or may be a second-type target point. This is not specifically limited. For example, if a coordinate location of a first-type target point is A, and a coordinate location of a second-type target point is B, a differential coordinate location of the second-type target point may be B-A. Then, the differential coordinate location B-A is quantized. A coordinate location of another second-type target point is C, and a distance from the second-type target point whose coordinate location is B is shorter. In this case, a differential coordinate location of the another second-type target point may be C-B. Then, compression via quantization is performed on the differential coordinate location C-B.

For example, based on the examples shown in FIG. 6A and FIG. 6B, one information segment contains a coordinate location of one target point, or may contain coordinate locations of a plurality of target points. If one information segment contains coordinate locations of a plurality of target points, coordinate locations contained in the reference information segment are represented as [A1, A2, A3, A4], and coordinate locations of target points that are contained in the first information segment are represented as [B1, B2, B3, B4], the first communication apparatus may obtain the first information group in the following manner 1 or manner 2.

Manner 1: The first communication apparatus subtracts A1 from B1 to obtain B1-A1, subtracts A2 from B2 to obtain B2-A2, subtracts A3 from B3 to obtain B3-A3, and subtracts A4 from B4 to obtain B4-A4. Then, the first communication apparatus separately quantizes B1-A1, B2-A2, B3-A3, and B4-A4, and uses an obtained result as data included in the first information group. In the manner 1, the first communication apparatus compresses the data in a differential coding manner, to reduce transmission overheads.

Manner 2: The first communication apparatus determines A'=a1*A1+a2*A2+a3*A3+a4*A4 and B'=b1*A1+b2*A2+b3*A3+b4*A4, where a1 to a4 and b1 to b4 are weighting coefficients. Then, the first communication apparatus subtracts A' from B', quantizes B'-A', and uses an obtained result as data included in the first information group. It can be learned that the first communication apparatus obtains two weighted values in a weighted combination manner, and determines a differential value by using the two weighted values, so that the differential value is smaller. Therefore, in a subsequent quantization process, fewer bits may be used to quantize the differential value, to improve a compression rate and better reduce transmission overheads.

It should be noted that, optionally, the reference information segments (the information segment j 1 and the information segment j2) may be processed in the first processing mode or the second processing mode, or may participate in joint processing of other information segments than the information segment j. This is not specifically limited herein.

It should be noted that, optionally, the first communication apparatus explicitly indicates an index of the reference information segment to the second communication apparatus. For example, the first communication apparatus sends an index of the information segment j 1 and an index of the information segment j2 to the second communication apparatus. Alternatively, the first communication apparatus implicitly indicates the index of the reference information segment to the second communication apparatus. For example, j 1 and j2 are obtained through calculation based on j. For example, j 1=j-2, and j2=j-1. Alternatively, the index of the reference information segment is agreed between the first communication apparatus and the second communication apparatus in advance. In this way, synchronization between a transmitting end and a receiving end is realized.

### 3. Third processing mode.

The first information group corresponds to the third processing mode, and the first information group is one of the G information groups. The third processing mode includes: the first information group corresponds to one of the S information segments and one or more information groups, and the one or more information groups belong to the G information groups; and the first communication apparatus performs the pre-processing on the one or more information segments and the one of the S information segments, to obtain the first information group. The third processing mode may be referred to as a mode 3 (Mode 3).

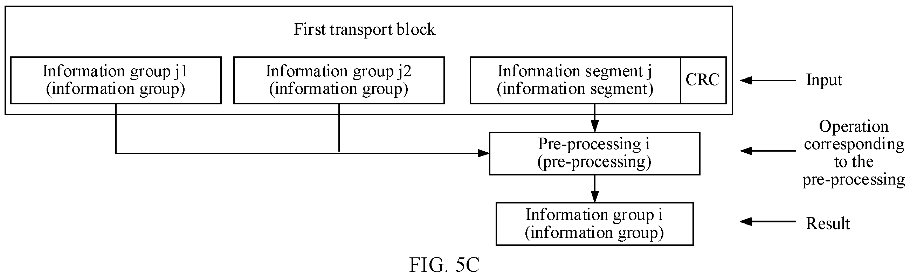

For example, as shown in FIG. 5C, the first information segment is an information segment j in the S information segments. An input of pre-processing i is from the information segment j in the S information segments, and is also from an information group j 1 and an information group j2 in the G information groups. An operation of the pre-processing i is between the information segment j and the information group j 1 and the information group j2 that are in the G information groups, and may be referred to as a cross-information group operation (cross information groups). The operation of the pre-processing i may include performing joint processing on a plurality of information groups and the information segment j, but is not limited to within one information segment. The joint processing may specifically include at least one of operations such as residual calculation, bias calculation, weighted summation, and joint transform. Optionally, the operation of the pre-processing i may further include the pre-processing operation shown in the first processing mode. To be specific, the first communication apparatus performs the joint processing on the information segment j and the information group j 1 and the information group j2 that are in the G information groups to obtain a corresponding result, and processes the result by performing the pre-processing operation shown in the foregoing first processing mode.

It can be learned that, in the third processing mode, the first communication apparatus may determine information matching the information segment j, and the matched information may be from a different information group, to facilitate selection of proper reference data. Then, the first communication apparatus performs joint processing on one of the S information segments and a plurality of information groups, to eliminate correlation between the data and reduce data redundancy.

Optionally, the information segment j is a basic information segment, and the information group j 1 and the information group j2 may be referred to as reference information groups (reference information groups). The first communication apparatus performs the pre-processing on the information segment j based on the information group j 1 and the information group j2, to obtain the first information group.

For example, based on FIG. 6A and FIG. 6B, a coordinate location of a first-type target point is A, and a quantized coordinate location is Q(A). That is, Q(A) is obtained in the first processing mode, and a quantization factor is Pa. If a coordinate location of a second-type target point is B, a differential coordinate location of the second-type target point may be represented as B-Q(A)*Pa. Then, the terminal device quantizes the differential coordinate location B-Q(A)*Pa to obtain Q(B), where a quantization factor is Pb. A coordinate location of another second-type target point is C, and a differential coordinate location of the second-type target point may be represented as C-Q(B)*Pb-Q(A)Pa. Then, the terminal device quantizes the differential coordinate location C-Q(B)*Pb-Q(A)Pa to obtain Q(C), where a quantization factor is Pc. Pa, Pb, and Pc may be the same or may be different. This is not specifically limited in this application. If Pa, Pb, and Pc are different, the first communication apparatus may indicate these quantization factors to the second communication apparatus by using indication signaling. Alternatively, the first communication apparatus and the second communication apparatus agree on values of these quantization factors in advance.

It should be noted that, optionally, the reference information groups (the information group j 1 and the information group j2) may be processed in the first processing mode or the second processing mode, or may participate in joint processing of other information segments than the information segment j. This is not specifically limited herein.

It should be noted that, optionally, a manner in which the first communication apparatus indicates the reference information group to the second communication apparatus is similar to a manner in which the first communication apparatus indicates the reference information segment to the second communication apparatus in the second processing mode. For details, refer to the foregoing related descriptions.

### 4. Fourth processing mode.

The first information group corresponds to the fourth processing mode, and the first information group is one of the G information groups. The fourth processing mode includes: the first information group corresponds to one of the S information segments, and the first information group further corresponds to one or more information segments, or one or more information groups; and the first communication apparatus performs the pre-processing on the one of the S information segments and the one or more information segments or the one or more information groups corresponding to the first information group, to obtain the first information group. The fourth processing mode may be referred to as a mode 4 (Mode 4).

The one or more information segments are from an information segment corresponding to a second transport block. The one or more information groups are from an information group corresponding to the second transport block. The second transport block is a transport block between the first communication apparatus and the second communication apparatus.

Optionally, the one or more information segments are also from the S information segments. The one or more information groups are also from the G information groups.

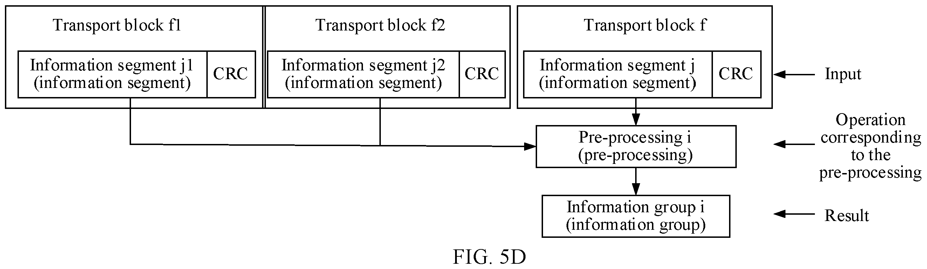

For example, as shown in FIG. 5D, the first information segment is an information segment j in the S information segments, and the first transport block is a transport block f. An input of pre-processing i is from the information segment j, and is also from an information segment j 1 of a transport block f1 and an information segment j2 of a transport block f2. The information segment j 1 and the information segment j2 may be referred to as reference information segments (reference information segments). An operation of pre-processing i is to perform joint processing on the information segment j in the S information segments, the information segment j 1, and the information segment j2, but is not limited to inside an information segment. Therefore, the operation of the pre-processing i may be referred to as a cross-transport block operation (cross transport block). The joint processing may specifically include at least one of operations such as residual calculation, bias calculation, weighted summation, and joint transform. The operation of the pre-processing i may further include the pre-processing operation shown in the first processing mode. To be specific, the first communication apparatus performs the joint processing on the information segment j in the S information segments, the information segment j 1 of the transport block f1, and the information segment j2 of the transport block f2, and performs the pre-processing operation shown in the first processing mode. It can be learned that, in the fourth processing mode, the first communication apparatus may determine information matching the information segment j, for example, a corresponding information segment from a different transport block. Then, the first communication apparatus may perform the joint processing on the plurality of information segments, to eliminate correlation between the data and reduce data redundancy.

It should be noted that, optionally, an index of the reference information segment may be dynamically notified by the first communication apparatus to the second communication apparatus. Alternatively, the index of the reference information segment is agreed between the first communication apparatus and the second communication apparatus in advance, to implement synchronization between the transmitting end and the receiving end. Optionally, the first communication apparatus may explicitly indicate the reference information segment to the second communication apparatus. For example, the first communication apparatus includes an index of the transport block f1, an index of the information segment j 1, an index of the transport block f2, and an index of the information segment j2 in indication signaling. Alternatively, the first communication apparatus may implicitly indicate the reference information segment to the second communication apparatus. For example, the index of the transport block f1, the index of the information segment j 1, the index of the transport block f2, and the index of the information segment j2 may all be obtained through calculation based on f and/or j. For example, f1=f-1, f2=f-2, j 1=j-2, and j2=j-1.

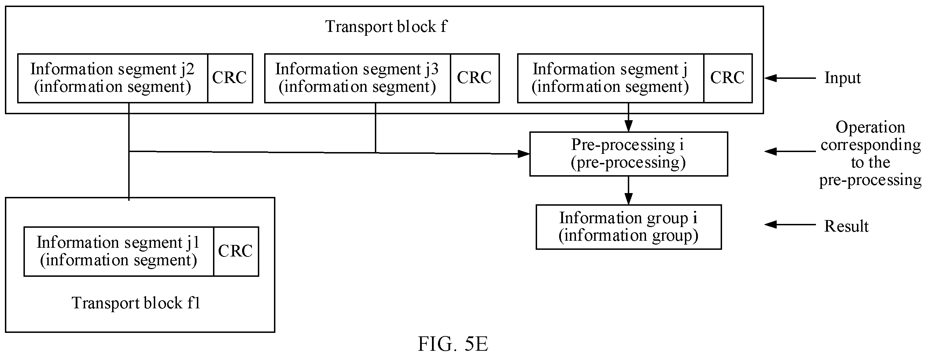

For example, as shown in FIG. 5E, the first information segment is an information segment j in the S information segments, and the first transport block is a transport block f. The input of the pre-processing i is from the information segment j in the S information segments, and is also from an information segment j2 and an information segment j3 that are in the S information segments and an information segment j 1 of the transport block f1. The information segment j2 and the information segment j3 that are in the S information segments and the information segment j 1 of the transport block f1 may be referred to as reference information segments. The transport block f1 may be referred to as a reference transport block. The operation of the pre-processing i is to perform joint processing on the information segment j, the information segment j2 and the information segment j3 in the S information segments, and the information segment j 1 of the transport block f1. The j oint processing may specifically include at least one of operations such as residual calculation, bias calculation, weighted summation, and joint transform. The operation of the pre-processing i may further include the pre-processing operation shown in the first processing mode.

It should be noted that for related descriptions of an index of the reference transport block and an indication manner of the index of the reference information segment, refer to the foregoing related descriptions. Details are not described one by one herein again.

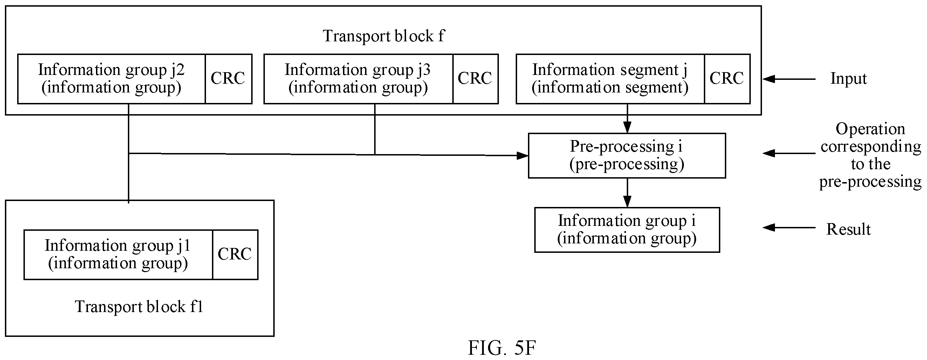

For example, as shown in FIG. 5F, the first information segment is an information segment j in the S information segments, and the first transport block is a transport block f. The input of the pre-processing i is from the information segment j of the transport block f and an information group j2 and an information group j3 that correspond to the transport block f, and is also from an information group j 1 that corresponds to a transport block f1. The information group j2 and the information group j3 corresponding to the transport block f and the information group j 1 corresponding to the transport block f1 may be referred to as reference information groups. The transport block f1 may be referred to as a reference transport block. The operation of the pre-processing i is to perform joint processing on the information segment j of the transport block f, the information group j2 and the information group j3 corresponding to the transport block f, and the information group j1 corresponding to the transport block f1. The joint processing may specifically include at least one of operations such as residual calculation, bias calculation, weighted summation, and joint transform. The operation of the pre-processing i may further include the pre-processing operation shown in the first processing mode. It should be noted that indication manners of an index of the reference transport block, an index of the reference information segment, and an index of the reference information group are similar to the foregoing indication manner of the index of the reference information segment. For details, refer to the foregoing related descriptions. Details are not described one by one herein again.

An example in which the first communication apparatus compresses the data in the fourth processing mode is described below.

For example, as shown in FIG. 6C, the transport block f, the transport block f1, and the transport block f2 each contain coordinate locations of target points. The transport block f, the transport block f1, and the transport block f2 are transport blocks at different time points. Herein, an example in which one information segment contains a coordinate location of one target point is used for description. The transport block f1 contains a coordinate location A of a target point 1, the transport block f2 contains a coordinate location B of a target point 2, and the transport block f contains a coordinate location C of a target point 3. Therefore, a differential coordinate location of the target point 3 may be represented as C-a*A-b*B. Then, the first communication apparatus performs operations such as quantization processing and bit or symbol selection on the differential coordinate location C-a*A-b*B. For indication manners of an index of the transport block and an index of the information segment, refer to the foregoing related descriptions. Details are not described herein again.

### 5. Fifth processing mode.

The first information group corresponds to the fifth processing mode, and the first information group is one of the G information groups. The fifth processing mode includes: the first information group corresponds to one of the S information segments, and the first information group further corresponds to at least one of the following: one or more information segments and one or more information groups; and the first communication apparatus performs the pre-processing on the one of the S information segments and the at least one of the one or more information segments and the one or more information groups, to obtain the first information group.

The one or more information segments are from an information segment corresponding to a second transport block. The second transport block is a transport block between the first communication apparatus and the second communication apparatus. Optionally, the one or more information segments are also from the S information segments.

The one or more information groups are from an information group corresponding to the first transport block and/or an information group corresponding to the second transport block.

Optionally, the fifth processing mode may be referred to as a hybrid mode or a mode 5 (Mode 5).

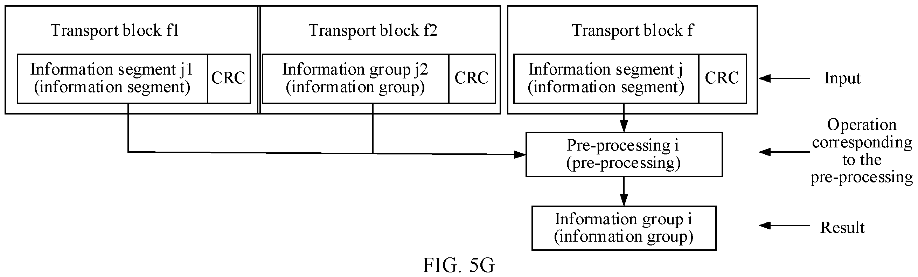

For example, as shown in FIG. 5G, the first transport block is a transport block f, and the first information segment is an information segment j (namely, an information segment j in the S information segments) corresponding to the transport block f. An input of pre-processing i is from the information segment j in the S information segments, and is also from an information segment j 1 of a transport block f1 and an information group j2 of a transport block f2. An operation of the pre-processing i is to perform joint processing on the information segment j, the information segment j 1 of the transport block f1, and the information group j2 of the transport block f2, but is not limited to inside an information segment. The fifth processing mode may also be referred to as the hybrid mode, or may be referred to as the mode 5. The joint processing may specifically include at least one of operations such as residual calculation, bias calculation, weighted summation, and joint transform. The operation of the pre-processing i may further include the pre-processing operation shown in the first processing mode. To be specific, the first communication apparatus performs the joint processing on the information segment j, the information segment j1 of the transport block f1, and the information group j2 of the transport block f2, and then performs the pre-processing operation shown in the first processing mode.

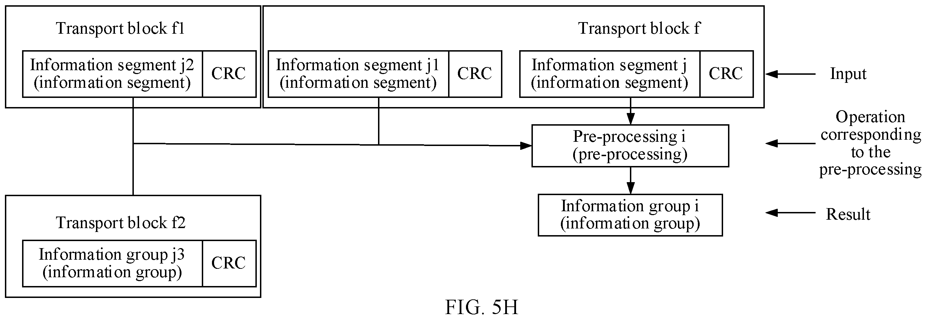

For example, as shown in FIG. 5H, the first transport block is a transport block f, and the first information segment is an information segment j of the transport block f. An input of pre-processing i is from the information segment j in the S information segments, and is also from an information segment j 1 of a transport block f, an information segment j2 of a transport block f1, and an information group j3 of a transport block f2. An operation of the pre-processing i is to perform joint processing on the information segment j and the information segment j 1 that are of the transport block f, the information segment j2 of the transport block f1, and the information group j3 of the transport block f2, but is not limited to inside an information segment. The joint processing may specifically include at least one of operations such as residual calculation, bias calculation, weighted summation, and joint transform. The operation of the pre-processing i may further include the pre-processing operation shown in the first processing mode. To be specific, the first communication apparatus performs the joint processing on the information segment j and the information segment j 1 that are of the transport block f, the information segment j2 of the transport block f1, and the information group j3 of the transport block f2, and then performs the pre-processing operation shown in the first processing mode.

Optionally, the one or more information segments may be referred to as a reference information segment, and the one or more information groups may be referred to as a reference information group.

For example, as shown in FIG. 5G, the information segment j 1 of the transport block f1 may be referred to as the reference information segment, and the information group j2 of the transport block f2 may be referred to as the reference information group. Therefore, correspondingly, the transport block f1 and the transport block f2 may be referred to as reference transport blocks.

Optionally, based on this implementation, the embodiment shown in FIG. 2 further includes step 201c. Step 201c may be performed before step 201.

201c: The second communication apparatus sends first indication information to the first communication apparatus. Correspondingly, the first communication apparatus receives the first indication information from the second communication apparatus.

The first indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, and an index of a transport block corresponding to the G information groups.

Another possible implementation in which the first communication apparatus determines the C to-be-encoded code blocks includes: The first communication apparatus screens the G information groups based on Y screening modes, to obtain B information blocks. The first communication apparatus determines the C to-be-encoded code blocks based on the B information blocks. For a detailed process of the implementation, refer to the following related descriptions. Details are not described herein.

Based on the implementation 2, six possible processing modes provided in this application are described below. The following describes various possible processing modes by using a processing mode corresponding to the first information group.
1. Sixth processing mode. The sixth processing mode is similar to the foregoing first processing mode. For details, refer to the foregoing related descriptions of the first processing mode. Details are not described herein again.
2. Seventh processing mode. The seventh processing mode is similar to the foregoing second processing mode. For details, refer to the foregoing related descriptions of the second processing mode. Details are not described herein again.
3. Eighth processing mode. The eighth processing mode is similar to the foregoing third processing mode. For details, refer to the foregoing related descriptions of the third processing mode. Details are not described herein again.
4. Ninth processing mode.

The first information group corresponds to a tenth processing mode, and the first information group is one of the G information groups. The ninth processing mode includes: the first information group corresponds to one of the S information segments and one or more information blocks, and the one or more information blocks belong to the B information blocks; and the first communication apparatus performs the pre-processing on the one or more information blocks and the one of the S information segments, to obtain the first information group. For the information block, refer to the following related descriptions.

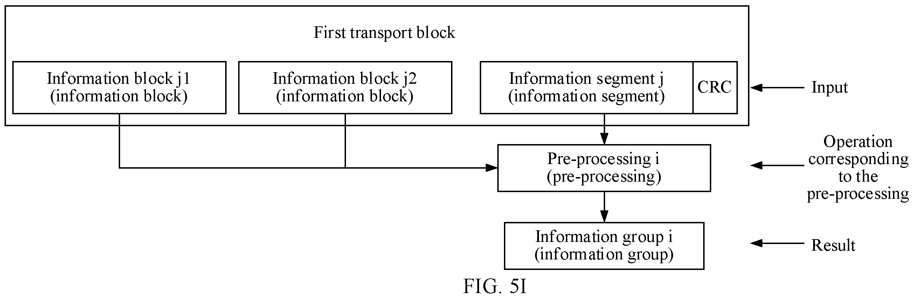

For example, as shown in FIG. 5I, the first information segment is an information segment j. An input of pre-processing i is from the information segment j, and is also from an information block j 1 and an information block j2 that correspond to the first transport block. An operation of the pre-processing i is performed within the information segment j, the information block j 1, and the information block j2, and may be referred to as a cross-block operation (cross information blocks). The operation of the pre-processing i may include joint processing on the information segment and the information block j 1 and the information block j2 that correspond to the first transport block, but is not limited to within one information segment. The joint processing may specifically include at least one of operations such as residual calculation, bias calculation, weighted summation, and joint transform. Optionally, the operation of the pre-processing i may further include the pre-processing operation shown in the first processing mode. To be specific, the first communication apparatus performs the joint processing on the information segment j and the information block j 1 and the information block j2 that correspond to the first transport block, to obtain a corresponding result, and processes the result by performing the pre-processing operation shown in the foregoing first processing mode.

It can be learned that, in the ninth processing mode, the first communication apparatus may determine information matching the information segment j, and the matched information may be from one or more information blocks. Then, the first communication apparatus performs joint processing on one or more information blocks corresponding to the first transport block and one of the S information segments, to eliminate correlation between the data and reduce data redundancy.

Optionally, the information block j 1 and the information block j2 may be referred to as reference information blocks (reference information blocks). The first communication apparatus performs the pre-processing on the information segment j based on the information block j 1 and the information block j2, to obtain the first information group.

For example, based on FIG. 6A and FIG. 6B, a coordinate location of a first-type target point is A. The first communication apparatus quantizes the coordinate location, and performs bit or symbol selection to obtain a result E(A). The information block j 1 contains the E(A). If a coordinate location of a second-type target point is B, a differential coordinate location of the second-type target point may be B-F(E(A)), and F(x) is a preset function. Then, the first communication apparatus performs operations such as quantization processing and bit or symbol selection on the differential coordinate location B-F(E(A)), to obtain a result E(B_). A coordinate location of another second-type target point is C, a differential coordinate location of the target point may be represented as C-G(E(B_), E(A)), and G(x) is a preset function. Then, the first communication apparatus performs operations such as quantization processing and bit or symbol selection on the differential coordinate location C-G(E(B_), E(A)) to obtain E(C_). Alternatively, the differential coordinate location of the another second-type target point may be represented as C-T(E(B_)). Then, the first communication apparatus performs operations such as quantization processing and bit or symbol selection on the differential coordinate location C-T(E(B_)) to obtain E(C_)'.

It should be noted that, optionally, the reference information blocks (the information block j 1 and the information block j2) may be processed in the first processing mode, the second processing mode, or the third processing mode, or may participate in joint processing of other information segments than the information segment j. This is not specifically limited herein.

It should be noted that, optionally, a manner in which the first communication apparatus indicates the reference information block to the second communication apparatus is similar to a manner in which the first communication apparatus indicates the reference information segment to the second communication apparatus in the second processing mode. For details, refer to the foregoing related descriptions.

### 5. Tenth processing mode.

The first information group corresponds to the tenth processing mode, and the first information group is one of the G information groups. The tenth processing mode includes: the first information group corresponds to one of the S information segments, and the first information group further corresponds to one or more information segments, one or more information groups, or one or more information blocks; and the first communication apparatus performs the pre-processing on the one of the S information segments and the one or more information segments, the one or more information groups, or the one or more information blocks corresponding to the first information group, to obtain the first information group. The one or more information segments are from an information segment corresponding to a second transport block. The one or more information groups are from an information group corresponding to the second transport block. The one or more information blocks are from an information block corresponding to the second transport block. The second transport block is a transport block between the first communication apparatus and the second communication apparatus.

Optionally, the one or more information segments are also from the S information segments. The one or more information groups are also from the G information groups. The one or more information blocks are also from an information block corresponding to the first transport block.

It should be noted that the tenth processing mode is similar to the foregoing fourth processing mode, and a difference lies in that in the tenth processing mode, the first information group may further correspond to the one or more information blocks.

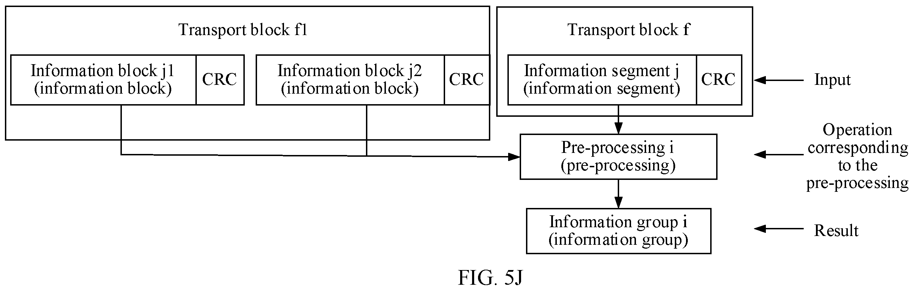

For example, as shown in FIG. 5J, the first information segment is an information segment j in the S information segments, and the first transport block is a transport block f. An input of pre-processing i is from an information block j 1 and an information block j2 of a transport block f1. The information block j 1 and the information block j2 of the transport block f1 may be referred to as reference information blocks, and the transport block f1 may be referred to as a reference transport block. An operation of the pre-processing i is to perform joint processing on the information segment j of the transport block f and the information block j 1 and the information block j2 of the transport block f1. The joint processing may specifically include at least one of operations such as residual calculation, bias calculation, weighted summation, and joint transform. The operation of the pre-processing i may further include the pre-processing operation shown in the first processing mode. It should be noted that indication manners of an index of the reference transport block, an index of the reference information segment, an index of the reference information group, and an index of a reference information block are similar to the foregoing indication manner of the index of the reference information segment. For details, refer to the foregoing related descriptions. Details are not described one by one herein again.

### 6. Eleventh processing mode.

The first information group corresponds to the eleventh processing mode, and the first information group is one of the G information groups. The eleventh processing mode includes: the first information group corresponds to one of the S information segments, and the first information group further corresponds to at least one of the following: one or more information segments, one or more information groups, and one or more information blocks; and the first communication apparatus performs the pre-processing on the one of the S information segments and the at least one of the one or more information segments, the one or more information groups, and the one or more information blocks, to obtain the first information group.

The one or more information segments are from an information segment corresponding to a second transport block. The second transport block is a transport block between the first communication apparatus and the second communication apparatus. Optionally, the one or more information segments are also from the S information segments.

The one or more information groups are from an information group corresponding to the first transport block and/or an information group corresponding to the second transport block.

The one or more information blocks are from an information block corresponding to the first transport block and/or an information block corresponding to the second transport block.

It should be noted that the eleventh processing mode is similar to the foregoing fifth processing mode, and a difference lies in that in the eleventh processing mode, the first information group may further correspond to the one or more information blocks.

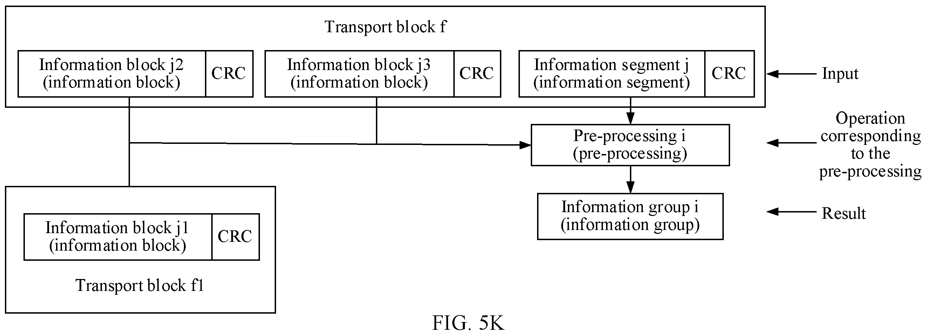

For example, as shown in FIG. 5K, the first information segment is an information segment j in the S information segments, and the first transport block is a transport block f. An input of pre-processing i is from an information block j2 and an information block j3 of the transport block f, and an information block j 1 of a transport block f1. An operation of the pre-processing i is to perform joint processing on the information segment j of the transport block f, the information block j2 and the information block j3 of the transport block f, and the information block j 1 of the transport block f1. The joint processing may specifically include at least one of operations such as residual calculation, bias calculation, weighted summation, and joint transform. The operation of the pre-processing i may further include the pre-processing operation shown in the first processing mode. It should be noted that indication manners of an index of the reference transport block, an index of the reference information segment, an index of the reference information group, and an index of a reference information block are similar to the foregoing indication manner of the index of the reference information segment. For details, refer to the foregoing related descriptions. Details are not described one by one herein again.

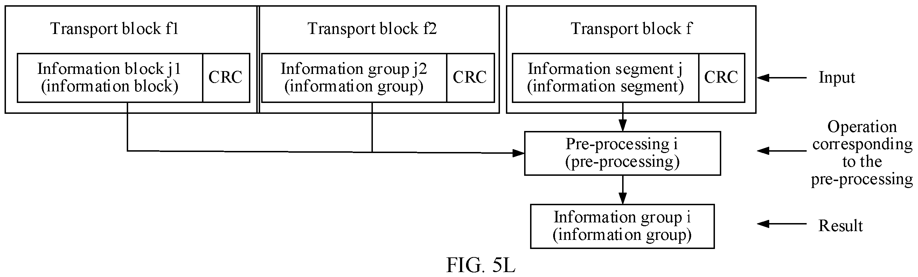

For example, as shown in FIG. 5L, the first transport block is a transport block f, and the first information segment is an information segment j of the transport block f. An input of pre-processing i is from the information segment j, and is also from an information block j 1 of a transport block f1 and an information group j2 of a transport block f2. The information block j 1 of the transport block f1 may be referred to as a reference information block, and an information group j2 of the transport block f2 may be referred to as a reference information group. The transport block f1 and the transport block f2 may be referred to as reference transport blocks. An operation of the pre-processing i is to perform joint processing on the information segment j, the information block j 1 of the transport block f1, and the information group j2 of the transport block f2. The joint processing may specifically include at least one of operations such as residual calculation, bias calculation, weighted summation, and joint transform. The operation of the pre-processing i may further include the pre-processing operation shown in the first processing mode. To be specific, the first communication apparatus performs the joint processing on the information segment j, the information block j 1 of the transport block f1, and the information group j2 of the transport block f2, and then performs the pre-processing operation shown in the first processing mode.

Based on this implementation, optionally, the embodiment shown in FIG. 2 further includes step 201d. Step 201d may be performed before step 201.

201d: The second communication apparatus sends second indication information to the first communication apparatus. Correspondingly, the second communication apparatus receives the second indication information from the first communication apparatus.

The second indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, an index of an information block corresponding to the G information groups, and an index of a transport block corresponding to the G information groups.

The following describes some possible manners of determining the processing mode corresponding to each of the G information groups.
1. The processing mode corresponding to each of the G information groups is determined based on at least one of data locations, data types, data importance, data correlation, and data similarities that are of the S information segments.
   In this implementation, the first communication apparatus may determine, with reference to the information shown above, the processing mode corresponding to each information group. The first communication apparatus may indicate, to the second communication apparatus, the processing mode corresponding to each of the G information groups, so that the second communication apparatus parses received data.
2. The processing mode corresponding to each of the G information groups is pre-configured.
3. The processing mode corresponding to each of the G information groups is indicated by the second communication apparatus.

204: The first communication apparatus determines the C to-be-encoded code blocks based on the G information groups.

There are a plurality of manners in which the first communication apparatus determines the C to-be-encoded code blocks. The following describes some possible implementations of step 204.

Implementation 1: The following describes the implementation 1 with reference to step 2001 and step 2002.

2001: The first communication apparatus screens the G information groups based on the Y screening modes, to obtain the B information blocks.

Each of the B information blocks corresponds to a screening mode, B is an integer greater than or equal to 1, and Y is an integer greater than or equal to 1. The Y screening modes are used to perform bit or symbol selection on the information group.

Specifically, the first communication apparatus determines the screening mode of each of the B information blocks. Then, the first communication apparatus performs, in the screening mode of the information block, the bit or symbol selection on the information group corresponding to the information block.

It should be noted that, in step 2001, when the first communication apparatus performs the bit or symbol selection on the G information groups, the following two restrictions should be met: 1. Resources occupied by the B information blocks do not exceed available resources. In addition, an error in restoring the G information groups by the receiving end by using the B information blocks is as small as possible. Some bits or symbols may be discarded in a process of the bit or symbol selection.

The Y screening modes may be pre-configured in the first communication apparatus. For example, a value of Y is 2. That is, the first communication apparatus may pre-configure two screening modes. Certainly, Y may alternatively have another value. For example, the value of Y is 4. This is not specifically limited in this application.

The following describes two possible screening modes provided in this application. The following describes various possible screening modes by using a screening mode corresponding to a first information block.

### 1. First screening mode.

The first screening mode includes: the first information block corresponds to one of the G information groups; and the first communication apparatus performs bit or symbol selection on the information block according to a first screening principle, to obtain the first information block.

The first screening principle includes performing the bit or symbol selection based on at least one of content importance, bit importance, information importance, metric values of physical parameters corresponding to the content, metric values of physical parameters corresponding to the bits, and metric values of physical parameters corresponding to the information. The first communication apparatus performs the bit or symbol selection on the information group according to the first screening principle. This helps the first communication apparatus perform the bit or symbol selection based on the importance, the metric values, and the like, and may discard a bit or a symbol that is less important or has less impact, to reduce resource overheads and improve a compression ratio while ensuring data decompression precision.

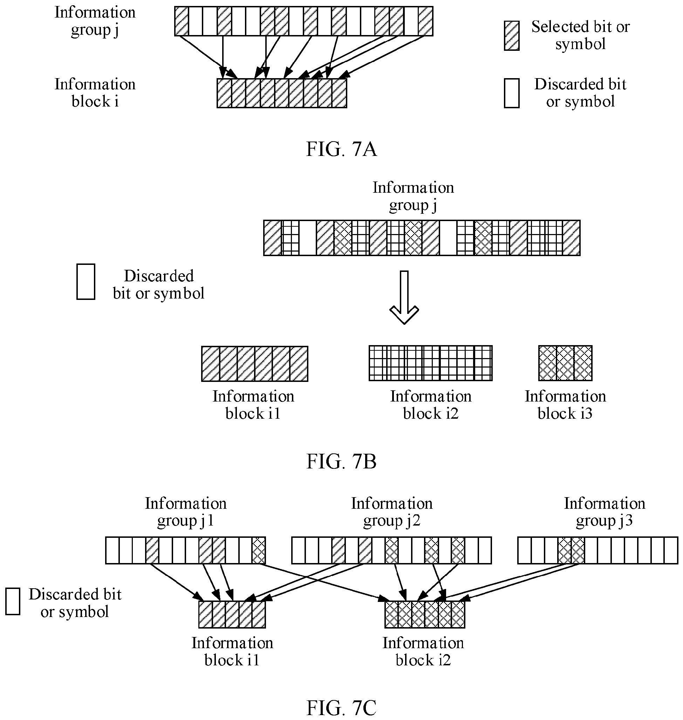

For example, as shown in FIG. 7A, the first information block is an information block i. The information block i is mainly from a part of content of the information group j. Therefore, a bit or symbol selection operation performed by the first communication apparatus on the information group j may be referred to as a within-group operation (within information groups). As shown in FIG. 7A, the first communication apparatus discards some bits or symbols in the information group j according to the first screening principle, to obtain the information block i.

For example, as shown in FIG. 7B, the first information block is an information block i1. The information block i1 is mainly from a part of content of the information group j. Therefore, a bit or symbol selection operation performed by the first communication apparatus on the information group j may be referred to as a within-group operation (within source groups). The first communication apparatus may first discard some bits or symbols in the information group j. Then, the first communication apparatus divides remaining bits or symbols in the information group j into three information blocks according to a corresponding screening principle: the information block i1, an information block i2, and an information block i3. It can be learned that, in this implementation, the first communication apparatus may divide the remaining bits or symbols into corresponding information blocks based on data importance. For example, the first communication apparatus assigns a bit or a symbol of highest importance to the information block i1, assigns a bit or a symbol of medium importance to the information block i2, and assigns a bit or a symbol of lower importance to the information block i3. This facilitates transmission of an information block of higher importance when transmission resources are limited subsequently.

### 2. Second screening mode.

The first information block corresponds to the second screening mode, and the first information block is one of the B information blocks. The second screening mode includes: the first information block corresponds to a plurality of information groups in the G information groups; and the first communication apparatus performs bit or symbol selection on the plurality of information groups according to a second screening principle, to obtain the first information block.

The second screening principle includes reorganizing, sorting, and screening content, information, or bits based on at least one of content importance, bit importance, information importance, metric values of physical parameters corresponding to the content, metric values of physical parameters corresponding to the bits, and metric values of physical parameters corresponding to the information.

The first communication apparatus performs the bit or symbol selection on the information group according to the first screening principle. This helps the first communication apparatus performs the bit or symbol selection based on the importance, the metric values, and the like, and may discard a bit or a symbol that is less important or has less impact, to reduce resource overheads and improve a compression rate while ensuring data decompression precision. In addition, the first communication apparatus places data having similar distribution together, so that entropy encoding performance can be improved in a subsequent entropy encoding processing process. The first communication apparatus places important bits together, and subsequently maps these important bits to an encoded code block. The first communication apparatus may perform transmission of the encoded code block at a lower bit rate. This helps improve transmission performance. If less important bits are placed together, these less important bits may be mapped to another encoded code block, and the first communication apparatus may perform transmission of the encoded code block at a higher code rate.

For example, as shown in FIG. 7C, the first communication apparatus may perform bit screening on an information group j 1 and an information group j2 to obtain an information block i1, and the first communication apparatus performs bit screening on the information group j2 and an information group j3 to obtain an information block i2.

For example, the G information groups include an information group j 1 to an information group jG, and each information group contains N quantized values. The first communication apparatus may place a most significant bit of all quantized values of the information group j 1 to the information group jG in an information block 1, place a second most significant bit of all the quantized values in an information block 2, and place a B^{th} bit of all the quantized values of the information group j 1 to the information group jG in an information block B by analogy. If a quantity of bits of the quantized values in the information group is greater than B, the first communication apparatus may discard a remaining bit in the quantized values.

It can be learned that the first communication apparatus places data (same bit locations) having similar distribution together, and entropy encoding performance can be improved in a subsequent entropy encoding processing process. The first communication apparatus places important bits together, and subsequently maps these important bits to an encoded code block. The first communication apparatus may perform transmission of the encoded code block at a lower bit rate. This helps improve transmission performance. If less important bits are placed together, these less important bits may be mapped to another encoded code block, and the first communication apparatus may perform transmission of the encoded code block at a higher code rate.

For example, the G information groups include an information group j 1 to an information group j G, and each information group contains a DC coefficient and an AC coefficient. The first communication apparatus places all DC coefficients of the information group j 1 to the information group jG in an information block 1, and places all AC coefficients of the information group j 1 to the information group jG in an information block 2. Alternatively, the AC coefficients in the information group j 1 to the information group jG are split into a plurality of information blocks based on indexes of the AC coefficients. For example, AC coefficients indexed 1 to 5 are placed in an information block 2, AC coefficients indexed 6 to 10 are placed in an information block 3, and DC coefficients and AC coefficients whose quantized values are 0 are discarded, to reduce a quantity of bits to be sent, and improve a compression ratio.

For example, the G information groups include an information group j 1 to an information group jG, and each information group contains a point cloud coordinate contained in each leaf node that is obtained by performing octree transform and quantization processing. The first communication apparatus may place x coordinates of all point cloud coordinates of the information group j 1 to the information group jG in an information block 1, place y coordinates of the all point cloud coordinates of the information group j 1 to the information group jG in an information block 2, and place z coordinates of all the point cloud coordinates of the information group j 1 to the information group jG in an information block 3.

Optionally, the first communication apparatus performs entropy encoding on the B information blocks, to obtain B entropy-encoded information blocks.

An operation corresponding to entropy encoding includes any one of the following: arithmetic coding (arithmetic coding), Huffman coding (Huffman coding), and run length coding (run length coding).

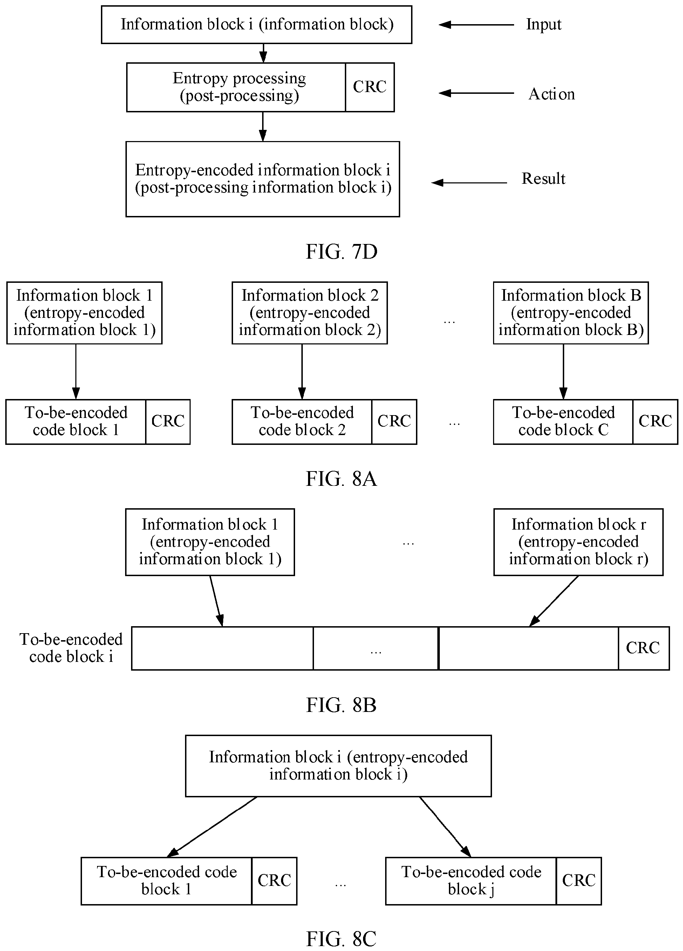

The first communication apparatus further compresses the B information blocks by performing the entropy encoding on the B information blocks. For example, as shown in FIG. 7D, the first communication apparatus performs entropy encoding on an information block i, and attaches a CRC to obtain an entropy-encoded information block i (Post-processing block i).

It should be noted that an operation corresponding to the entropy encoding on each of the B information blocks may be the same or may be different. This is not specifically limited in this application.

Optionally, the first communication apparatus and the second communication apparatus may agree in advance to perform the entropy coding on the B information blocks. Alternatively, the second communication apparatus may indicate the first communication apparatus to enable the entropy coding. This is not specifically limited in this application.

Optionally, the embodiment shown in FIG. 2 further includes step 201e. Step 201e may be performed before step 201.

201e: The second communication apparatus sends fifth indication information to the first communication apparatus. Correspondingly, the first communication apparatus receives the fifth indication information from the second communication apparatus.

The fifth indication information indicates at least one of the following: enabling of the entropy encoding by the first communication apparatus and an operation corresponding to the entropy encoding on each of the B information blocks.

2002: The first communication apparatus determines the C to-be-encoded code blocks based on the B information blocks.

The first communication apparatus determines a mapping mode corresponding to the B information blocks. Then, the first communication apparatus maps the B information blocks to the C to-be-encoded code blocks in the mapping mode corresponding to the B information blocks.

The first communication apparatus may pre-configure one or more mapping modes. For example, the first communication apparatus pre-configures two possible mapping modes, or may pre-configure more mapping modes. This is not specifically limited in this application.

The following describes two possible mapping modes provided in this application.

### 1. First mapping mode.

The B information blocks correspond to the first mapping mode. The first mapping mode includes: the first communication apparatus maps the B information blocks to the C to-be-encoded code blocks based on a first mapping relationship.

The first mapping relationship includes that the B information blocks are in one-to-one correspondence with the C to-be-encoded code blocks, and B is equal to C. Alternatively, each of the C to-be-encoded code blocks corresponds to a plurality of information blocks in the B information blocks. Alternatively, each of the B information blocks corresponds to a plurality of to-be-encoded code blocks in the C to-be-encoded code blocks.

For example, as shown in FIG. 8A, the B information blocks are in one-to-one correspondence with the C to-be-encoded code blocks, and one information block corresponds to one to-be-encoded code block. In this implementation, B is equal to C. As shown in FIG. 8A, an information block 1 (or an entropy-encoded information block 1) corresponds to a to-be-encoded code block 1, an information block 2 (or an entropy-encoded information block 2) corresponds to a to-be-encoded code block 2, and the information block B (or an entropy-encoded information block B) corresponds to a to-be-encoded code block C by analogy.

For example, as shown in FIG. 8B, a plurality of information blocks correspond to one to-be-encoded code block. This implementation may be referred to as a concatenation manner. In this implementation, B is greater than C. As shown in FIG. 8B, an information block 1 (or an entropy-encoded information block 1) to an information block r (or an entropy-encoded information block r) are mapped to a to-be-encoded code block i.

For example, as shown in FIG. 8C, one information block corresponds to a plurality of to-be-encoded code blocks. This implementation may be referred to as a splitting manner. In this implementation, B is less than C. As shown in FIG. 8C, an information block i (or an entropy-coded information block i) is mapped to a to-be-encoded code block 1 to a to-be-encoded code block j.

It should be noted that, the foregoing descriptions are provided by using an example in which the B information blocks use a same mapping relationship. During actual application, different information blocks may use different mapping relationships. For example, the first communication apparatus determines, based on a mapping relationship in which the information blocks are in one-to-one correspondence with the to-be-encoded code blocks, a to-be-encoded code block corresponding to the information block 1. The first communication apparatus determines, in the concatenation manner, a to-be-encoded code block corresponding to both the information block 2 and the information block 3. The first communication apparatus determines, in the splitting manner, a plurality of to-be-encoded code blocks corresponding to the information block 4.

### 2. Second mapping mode.

The B information blocks correspond to a second mapping mode. The second mapping mode includes: The first communication apparatus maps the B information blocks to Q third transport blocks, and Q is an integer greater than or equal to 1; and the first communication apparatus determines the Q third transport blocks as the C to-be-encoded code blocks.

The B information blocks are in one-to-one correspondence with the Q third transport blocks; each of the Q third transport blocks corresponds to a plurality of information blocks in the B information blocks; or each of the B information blocks corresponds to a plurality of third transport blocks in the Q third transport blocks.

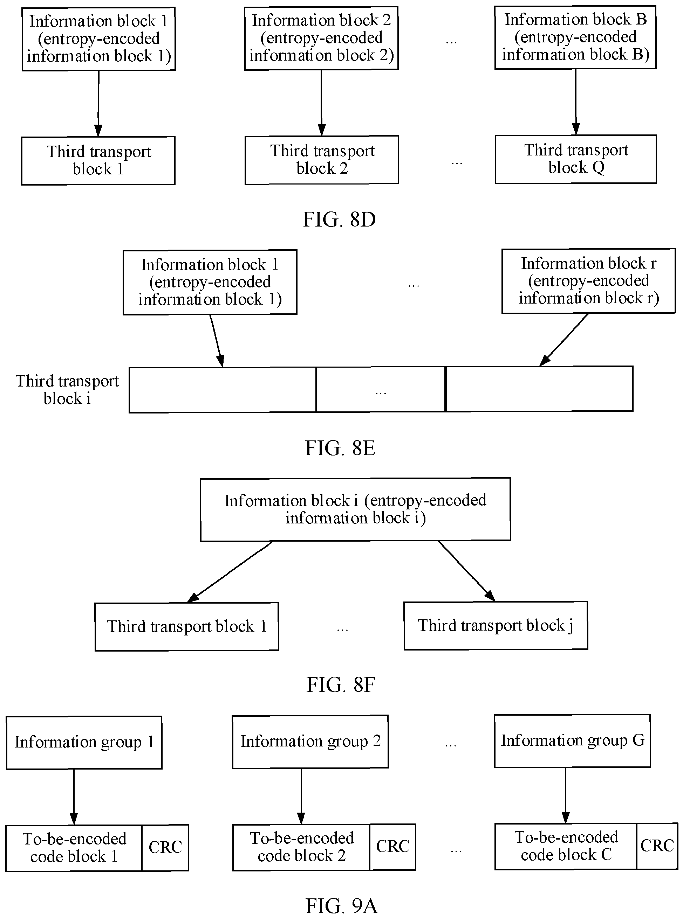

For example, as shown in FIG. 8D, the B information blocks are in one-to-one correspondence with the Q third transport blocks, and one information block corresponds to one third transport block. In this implementation, B is equal to Q. As shown in FIG. 8D, an information block 1 (or an entropy-encoded information block 1) corresponds to a third transport block 1, an information block 2 (or an entropy-encoded information block 2) corresponds to a third transport block 2, and an information block B corresponds to a third transport block Q by analogy. The first communication apparatus may map the Q third transport blocks to the C to-be-encoded code blocks in an existing channel coding manner.

For example, as shown in FIG. 8E, a plurality of information blocks correspond to one third transport block. In this implementation, B is greater than Q. As shown in FIG. 8E, an information block 1 (or an entropy-encoded information block 1) to an information block r (or an entropy-encoded information block r) are mapped to a third transport block i. The first communication apparatus may map the Q third transport blocks to the C to-be-encoded code blocks in an existing channel coding manner.

For example, as shown in FIG. 8F, one information block corresponds to a plurality of third transport blocks. In this implementation, B is less than Q. As shown in FIG. 8F, an information block i (or an entropy-encoded information block i) is mapped to a third transport block 1 to a third transport block j. The first communication apparatus may map the Q third transport blocks to the C to-be-encoded code blocks in an existing channel coding manner.

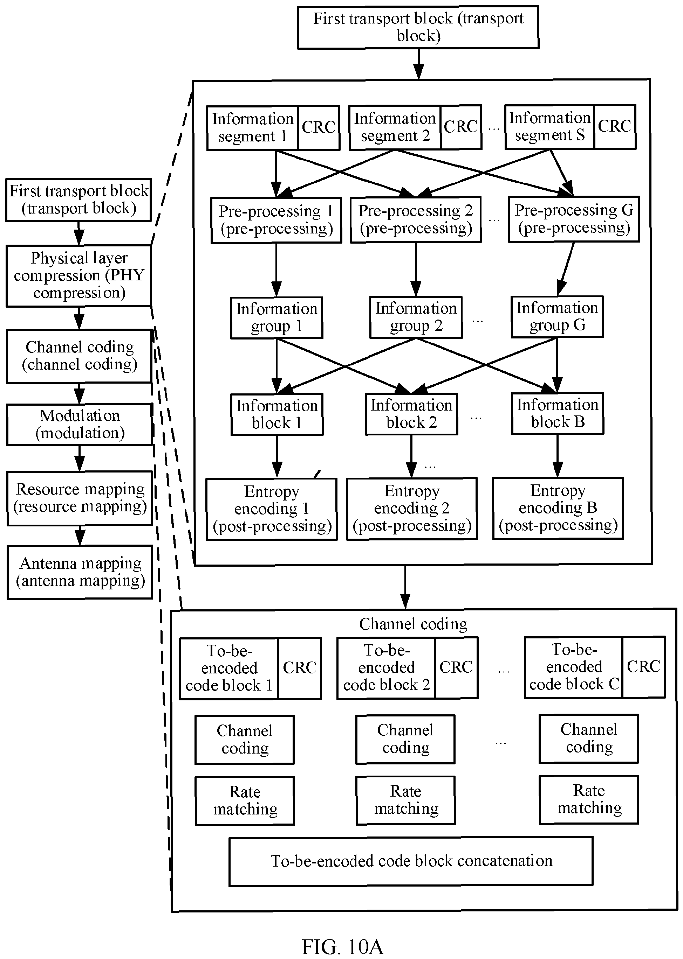

For example, FIG. 10A shows a process in which the first communication apparatus compresses and encodes the data at the physical layer. The first communication apparatus converts the first transport block into the S information segments. Then, the first communication apparatus determines the G information groups based on the S information segments. The first communication apparatus determines the B information blocks in the manner of step 2001, and determines the C encoded code blocks in the manner of step 2002. The first communication apparatus performs channel coding on the C to-be-encoded code blocks. Optionally, after determining the B information blocks, the first communication apparatus may first perform entropy encoding on the B information blocks, and perform a process of step 2002.

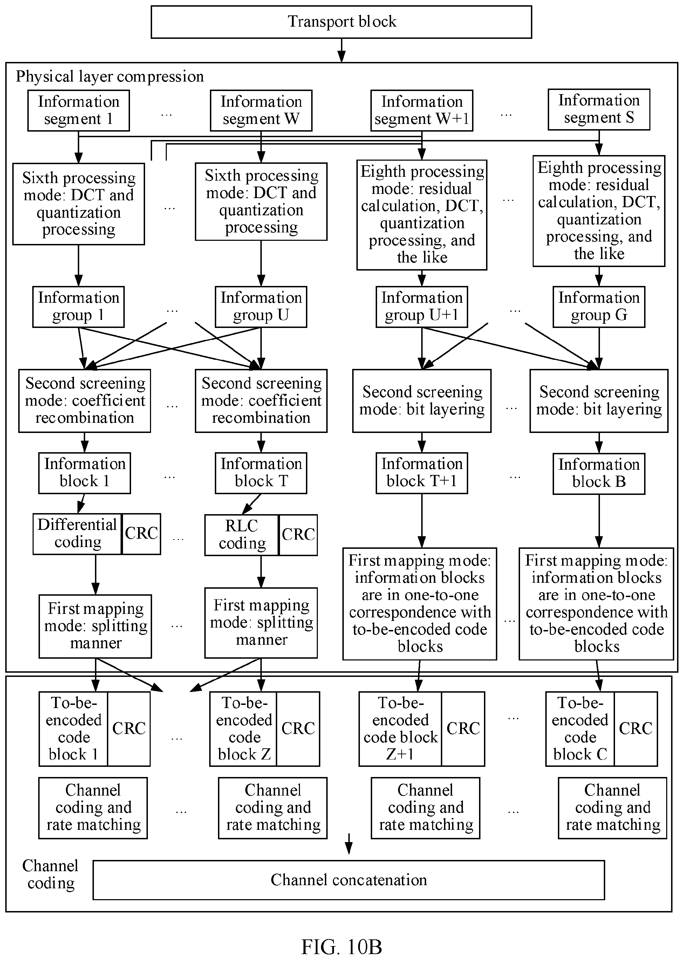

For example, as shown in FIG. 10B, a transport block includes imaging data generated at the physical layer. The imaging data is redundant in space. The first communication apparatus performs physical layer compression on the transport block by using the technical solution provided in this application. For a specific execution operation of each process, refer to a procedure in FIG. 10B.

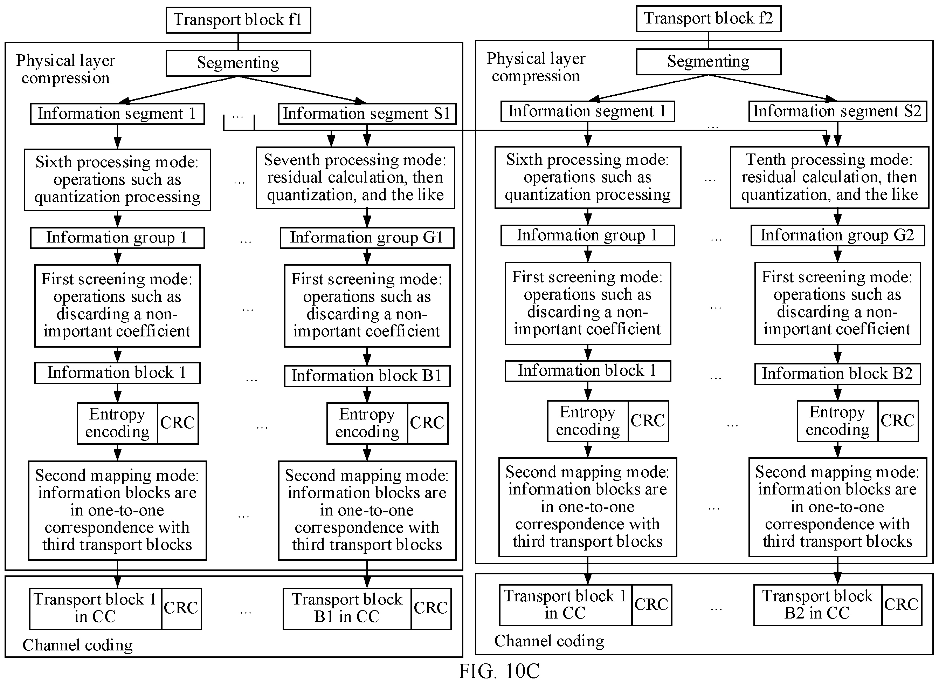

For example, as shown in FIG. 10C, a transport block f1 and a transport block f2 are location data, radar data, and the like generated at the physical layer. The data is redundant in time and space. The first communication apparatus performs physical layer compression on the transport block by using the technical solution provided in this application. For a specific execution operation of each process, refer to a procedure in FIG. 10C. CC in FIG. 10C is an abbreviation of channel coding (channel coding).

Optionally, the embodiment shown in FIG. 2 further includes step 201f. Step 201f may be performed before step 201.

201f: The second communication apparatus sends third indication information to the first communication apparatus. Correspondingly, the first communication apparatus receives the third indication information from the second communication apparatus.

The third indication information indicates at least one of the following: sizes of the B information blocks, a screening mode, a screening principle, and an index of a corresponding information group.

Optionally, the embodiment shown in FIG. 2 further includes step 201g. Step 201g may be performed before step 201.

201g: The second communication apparatus sends fourth indication information to the first communication apparatus. Correspondingly, the first communication apparatus receives the fourth indication information from the second communication apparatus.

The fourth indication information indicates at least one of the following: the mapping mode corresponding to the B information blocks and the sizes of the C to-be-encoded code blocks.

Implementation 2: The first communication apparatus determines a mapping mode corresponding to the G information groups. The first communication apparatus maps the G information groups to the C to-be-encoded code blocks in the mapping mode corresponding to the G information groups.

The following describes two possible mapping modes provided in this application.

### 1. Third mapping mode.

The G information groups correspond to the third mapping mode. The third mapping mode includes: The first communication apparatus maps the G information groups to the C to-be-encoded code blocks based on a second mapping relationship.

The second mapping relationship includes that the G information groups are in one-to-one correspondence with the C to-be-encoded code blocks, and G is equal to C; each of the C to-be-encoded code blocks corresponds to one of the G information groups; or each of the G information groups corresponds to a plurality of to-be-encoded code blocks in the C to-be-encoded code blocks.

For example, as shown in FIG. 9A, the G information groups are in one-to-one correspondence with the C to-be-encoded code blocks, and one information group corresponds to one to-be-encoded code block. In this implementation, G is equal to C. As shown in FIG. 9A, an information group 1 corresponds to a to-be-encoded code block 1, an information group 2 corresponds to a to-be-encoded code block 2, and an information group G corresponds to a to-be-encoded code block C by analogy.

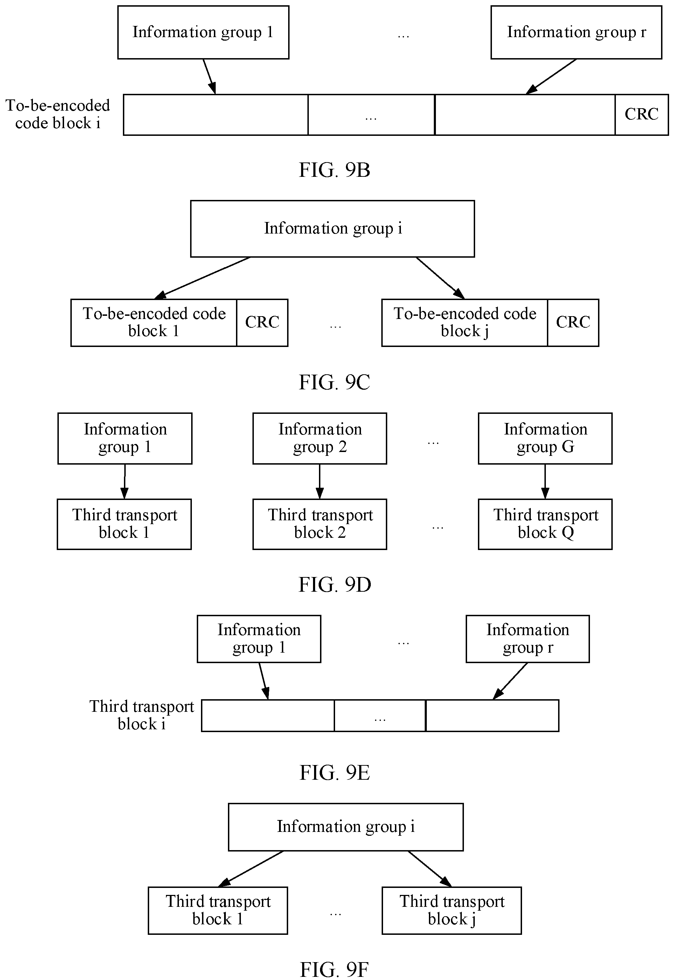

For example, as shown in FIG. 9B, a plurality of information groups correspond to one to-be-encoded code block. In this implementation, G is greater than C. As shown in FIG. 9B, an information group 1 to an information group r are mapped to a to-be-encoded code block i.

For example, as shown in FIG. 9C, one information group corresponds to a plurality of to-be-encoded code blocks. In this implementation, G is less than C. As shown in FIG. 9C, an information group i is mapped to a to-be-encoded code block 1 to a to-be-encoded code block j.

### 2. Fourth mapping mode.

The G information groups correspond to the fourth mapping mode. The fourth mapping mode includes: The first communication apparatus maps the G information groups to Q third transport blocks, and Q is an integer greater than or equal to 1; and the first communication apparatus determines the Q third transport blocks as the C to-be-encoded code blocks.

The G information groups are in one-to-one correspondence with the Q third transport blocks; each of the Q third transport blocks corresponds to a plurality of information groups in the G information group; or each of the G information groups corresponds to a plurality of third transport blocks in the Q third transport blocks.

For example, as shown in FIG. 9D, the G information groups are in one-to-one correspondence with the Q third transport blocks, and one information block corresponds to one third transport block. In this implementation, G is equal to Q. As shown in FIG. 9D, an information group 1 corresponds to a third transport block 1, an information group 2 corresponds to a third transport block 2, and an information group G corresponds to a third transport block G by analogy. Then, the first communication apparatus may map the G third transport blocks to the C to-be-encoded code blocks in an existing channel coding manner.

For example, as shown in FIG. 9E, a plurality of information groups correspond to one third transport block. In this implementation, G is greater than Q. As shown in FIG. 9E, an information group 1 to an information group r are mapped to a third transport block i. Then, the first communication apparatus may map the Q third transport blocks to the C to-be-encoded code blocks in an existing channel coding manner.

For example, as shown in FIG. 9F, one information group corresponds to a plurality of third transport blocks. In this implementation, G is less than Q. As shown in FIG. 9F, an information group i is mapped to a third transport block 1 to a third transport block r. Then, the first communication apparatus may map the Q third transport blocks to the C to-be-encoded code blocks in an existing channel coding manner.

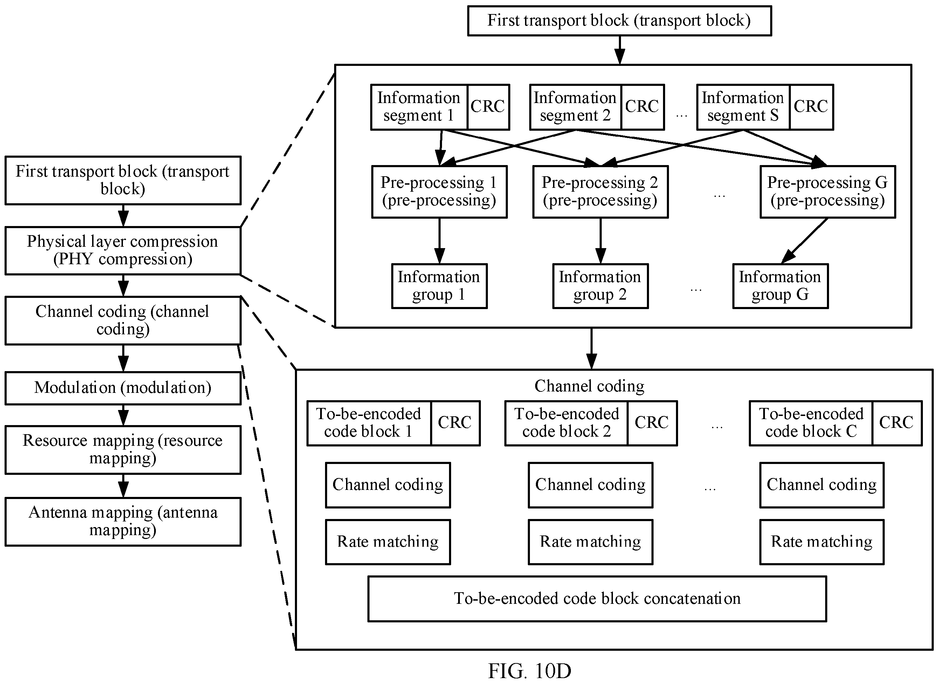

For example, FIG. 10D shows a process in which the first communication apparatus compresses and encodes the data at the physical layer. The first communication apparatus converts the first transport block into the S information segments. Then, the first communication apparatus determines the G information groups based on the S information segments. The first communication apparatus maps the G information groups to the C to-be-encoded code blocks by performing the implementation 2.

205: The first communication apparatus performs channel coding on the C to-be-encoded code blocks to obtain an encoded code block.

Optionally, the channel coding includes any one of the following: conventional channel coding, joint source and channel coding (joint source and channel coding, JSCC), and source aware channel coding (source aware channel coding, SACC). The JSCC or the SACC may further enhance transmission performance of the C to-be-encoded code blocks. For example, in a 5G communication system, the conventional channel coding includes polar (Polar) channel coding or low density parity check code (low density parity check code, LDPC) channel coding. In a 4G communication system, the conventional channel coding includes turbo (Turbo) channel coding. In a Wi-Fi communication system, the conventional channel coding includes LDPC channel coding.

It should be noted that, in some low-delay scenarios, the first communication apparatus may not enable entropy encoding, and the first communication apparatus may directly perform channel coding on the C to-be-encoded code blocks in a JSCC or SACC manner, to implement channel protection. In addition, an error transfer problem caused by the entropy encoding is avoided, to reduce a retransmission delay. In addition, the JSCC coding or the SACC coding has a compression function, and can be used to implement both data compression and channel protection.

For example, as shown in FIG. 10A, the first communication apparatus attaches a CRC to each of the C to-be-encoded code blocks, and performs operations such as channel coding, rate matching, and code block concatenation, to obtain the encoded code block.

It should be noted that the encoding method provided in this application is described in detail by using the foregoing process of step 202 to step 205. During actual application, a part or all of step 202 to step 205 may be combined. This is not specifically limited in this application. For example, step 202 and step 203 may be combined to one step. To be specific, the first communication apparatus performs the pre-processing on the first transport block based on the X processing modes, to obtain the G information groups. For example, step 203 and step 204 may be combined. That is, the first communication apparatus processes the S information segments based on the X processing modes, to obtain the C to-be-encoded code blocks. For example, step 202 to step 204 may be combined to one step. To be specific, the first communication apparatus performs the pre-processing on the first transport block based on the X processing modes, to obtain the C to-be-encoded code blocks.

206: The first communication apparatus outputs the encoded code block.

For example, as shown in FIG. 10A, after the first communication apparatus outputs the encoded code block, the first communication apparatus may perform operations such as modulation, resource mapping, and antenna mapping on the encoded code block, to obtain a first signal. Then, the first communication apparatus sends the first signal to the second communication apparatus.

207: The second communication apparatus obtains the encoded code block of the first communication apparatus.

The second communication apparatus receives the first signal from the first communication apparatus, and parses the first signal to obtain the encoded code block.

208: The second communication apparatus performs channel decoding on the encoded code block to obtain the C to-be-encoded code blocks.

209: The second communication apparatus determines the G information groups based on the C to-be-encoded code blocks.

Based on the implementation 1 in step 204, optionally, step 209 specifically includes step 209a and step 209b.

209a: The first communication apparatus determines the B information blocks based on the C to-be-encoded code blocks, where B is an integer greater than or equal to 1.

The second communication apparatus determines an inverse mapping mode corresponding to the C to-be-encoded code blocks. Then, the second communication apparatus inversely maps the C to-be-encoded code blocks to the B information blocks in the inverse mapping mode corresponding to the C to-be-encoded code blocks.

The following describes two possible inverse mapping modes provided in this application.
1. First inverse mapping mode. The first inverse mapping mode corresponds to the first mapping mode in step 2002.

The C to-be-encoded code blocks correspond to the first inverse mapping mode. The first inverse mapping mode includes: The second communication apparatus inversely maps the C to-be-encoded code blocks to the B information blocks based on a first mapping relationship.

The first mapping relationship includes that the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

For example, as shown in FIG. 8A, the second communication apparatus inversely maps each of the C to-be-encoded code blocks to a corresponding information block. In this implementation, B is equal to C. The to-be-encoded code block 1 is inversely mapped to the information block 1, the to-be-encoded code block 2 is inversely mapped to the information block 2, and the to-be-encoded code block C is inversely mapped to the information block B by analogy.

For example, as shown in FIG. 8B, one to-be-encoded code block corresponds to a plurality of information blocks. In this implementation, B is greater than C. As shown in FIG. 8B, the to-be-encoded code block i is inversely mapped to the information block 1.

For example, as shown in FIG. 8C, a plurality of to-be-encoded code blocks correspond to one information block. In this implementation, B is less than C. As shown in FIG. 8C, the to-be-encoded code block 1 to the to-be-encoded code block j are inversely mapped to the information block i.

It should be noted that, the foregoing descriptions are provided by using an example in which the C to-be-encoded code blocks use a same inverse mapping relationship. During actual application, an inverse mapping relationship used by different to-be-encoded code blocks may be determined based on the mapping relationship used by the information blocks in step 2002. Details are not described one by one herein.

### 2. Second inverse mapping mode.

The C to-be-encoded code blocks correspond to the second inverse mapping mode. The second inverse mapping mode includes: the second communication apparatus inversely maps the C to-be-encoded code blocks to Q third transport blocks, and Q is an integer greater than or equal to 1; and the second communication apparatus inversely maps the Q third transport blocks to the B information blocks.

A process in which the second communication apparatus maps the C to-be-encoded code blocks to the Q third transport blocks is similar to a process in which a to-be-encoded code block is mapped to a transport block in an existing procedure. Details are not described herein.

The B information blocks are in one-to-one correspondence with the Q third transport blocks; each of the Q third transport blocks corresponds to a plurality of information blocks in the B information blocks; or each of the B information blocks corresponds to a plurality of third transport blocks in the Q third transport blocks.

For example, as shown in FIG. 8D, the Q third transport blocks are in one-to-one correspondence with the B information blocks, and one third transport block corresponds to one information block. The second communication apparatus inversely maps the Q third transport blocks to the B information blocks. In this implementation, B is equal to Q. As shown in FIG. 8D, the third transport block 1 is inversely mapped to the information block 1 (or the entropy-encoded information block 1), the second transport block 2 is inversely mapped to the information block 2 (or the entropy-encoded information block 2), and the third transport block Q is inversely mapped to the information block B by analogy.

For example, as shown in FIG. 8E, one third transport block corresponds to a plurality of information blocks. In this implementation, B is greater than Q. For example, the second communication apparatus inversely maps the third transport block i to the information block 1 (or the entropy-encoded information block 1) to the information block r (or the entropy-encoded information block r).

For example, as shown in FIG. 8F, a plurality of third transport blocks correspond to one information block. In this implementation, B is less than Q. For example, as shown in FIG. 8F, the second communication apparatus inversely maps the third transport block 1 to the third transport block j to the information block i (or the entropy-encoded information block i).

Optionally, the second communication apparatus performs entropy decoding on the B information blocks, to obtain B entropy-decoded information blocks.

An operation corresponding to the entropy decoding is an inverse process of an operation corresponding to the entropy encoding performed by the first communication apparatus. For details, refer to the foregoing descriptions related to the entropy encoding.

209b: The second communication apparatus restores the B information blocks to the G information groups based on Z restoration modes.

Each of the B information blocks corresponds to one of the Z restoration modes, and Z is an integer greater than or equal to 1. The Z restoration modes are used to perform bit or symbol restoration on the B information blocks.

Specifically, the second communication apparatus determines the restoration mode of each of the B information blocks. Then, the second communication apparatus performs the bit or symbol restoration on the information block in the restoration mode of the information block. The restoration mode of each information block corresponds to the screening mode of the information block in step 2001.

The Z restoration modes are pre-configured in the second communication apparatus. For example, a value of Z is 2. Certainly, Z may alternatively have another value. For example, the value of Z is 4. This is not specifically limited in this application.

The following describes two possible restoration modes provided in this application. The following describes various possible restoration modes by using a restoration mode corresponding to the first information block.

### 1. First restoration mode.

The first information block corresponds to the first restoration mode, and the first information block is one of the B information blocks. The first restoration mode includes: the first information block corresponds to one of the G information groups; and the second communication apparatus performs the bit or symbol restoration on the first information block according to a first restoration principle, to obtain a part or all of bits or symbols of the information group.

The first restoration principle includes performing the bit or symbol restoration based on at least one of content importance, bit importance, information importance, metric values of physical parameters corresponding to the content, metric values of physical parameters corresponding to the bits, and metric values of physical parameters corresponding to the information. The second communication apparatus performs the bit or symbol restoration on the first information block according to the first restoration principle.

For example, as shown in FIG. 7A, the first information block is the information block i. The information block i is mainly from a part of content of the information group j. As shown in FIG. 7A, the second communication apparatus restores the discarded bits or symbols in the information block i according to the first restoration principle, to obtain the information group j.

For example, as shown in FIG. 7B, the first information block is the information block i1. The second communication apparatus performs the bit or symbol restoration on the information block i1 according to the first restoration principle, to obtain a part of bits or symbols of the information group j. Operations on the information block i2 and the information block i3 are also similar, so that the discarded bits or symbols of the information group j are obtained through restoration. Then, the second communication apparatus combines the discarded bits or symbols and bits or symbols of the information block i1, the information block i2, and the information block i3 according to a corresponding restoration principle, to obtain the information group j.

### 2. Second restoration mode.

The first information block corresponds to the second restoration mode, and the first information block is one of the B information blocks. The second restoration mode includes: the first information block corresponds to a plurality of information groups in the G information groups; and the second communication apparatus performs the bit or symbol restoration on the first information block according to a second restoration principle, to obtain a part or all of bits or symbols of the plurality of information groups.

The second restoration principle includes restoring content, information, or bits based on at least one of content importance, bit importance, information importance, metric values of physical parameters corresponding to the content, metric values of physical parameters corresponding to the bits, and metric values of physical parameters corresponding to the information. The second communication apparatus performs the bit or symbol restoration on the first information block according to the second restoration principle.

For example, the B information blocks include an information block 1 to an information block 3. The information block 1 includes an x coordinate of a point cloud coordinate contained in each leaf node that is obtained by performing octree transform and quantization processing. The information block 2 includes a y coordinate of the point cloud coordinate contained in each leaf node that is obtained by performing the octree transform and the quantization processing. The information block 3 includes a z coordinate of the point cloud coordinate contained in each leaf node that is obtained by performing the octree transform and the quantization processing. Therefore, the second communication apparatus may restore coordinates in the information block 1, the information block 2, and the information block 3 according to the second restoration principle, to obtain an information group j 1 to an information group jG. Each information group contains the point cloud coordinate contained in each leaf node that is obtained by performing the octree transform and the quantization processing.

It should be noted that, optionally, the Z restoration modes are in one-to-one correspondence with the foregoing Y screening modes. In other words, Z is equal to Y For example, for an information block, the information block corresponds to the first screening mode, and the first screening mode corresponds to the first restoration mode. In this case, the second communication apparatus may perform the bit or symbol restoration on the information block in the first restoration mode. Alternatively,
each of the Z restoration modes corresponds to one or more screening modes. For example, the information block 1 corresponds to the first screening mode, the information block 2 corresponds to the second screening mode, and the first screening mode and the second screening mode correspond to the first restoration mode. In this case, the second communication apparatus may perform the bit or symbol restoration on the information block 1 and the information block 2 in the first restoration mode.

Based on the implementation 2 in step 204, optionally, step 209 specifically includes: The second communication apparatus determines an inverse mapping mode corresponding to the G information groups. The second communication apparatus inversely maps the C to-be-encoded code blocks to the G information groups in the inverse mapping mode corresponding to the G information groups.

The inverse mapping mode corresponding to the G information groups corresponds to the mapping mode corresponding to the G information groups in the implementation 2 in step 204.

The following describes two possible inverse mapping modes provided in this application.

### 1. Third inverse mapping mode.

The G information groups correspond to the third inverse mapping mode. The third inverse mapping mode includes: The second communication apparatus maps the C to-be-encoded code blocks to the G information groups based on a third mapping relationship.

The third mapping relationship includes that the G information groups are in one-to-one correspondence with the C to-be-encoded code blocks, and G is equal to C; each of the C to-be-encoded code blocks corresponds to one of the G information groups; or each of the G information groups corresponds to a plurality of to-be-encoded code blocks in the C to-be-encoded code blocks.

For example, as shown in FIG. 9A, the C to-be-encoded code blocks are in one-to-one correspondence with the G information groups. In other words, G is equal to C. The second communication apparatus may inversely map the to-be-encoded code block 1 to the information group 1, inversely map the to-be-encoded code block 2 to the information group 2, and inversely map the to-be-encoded code block C to the information group G by analogy.

For example, as shown in FIG. 9B, one to-be-encoded code block corresponds to a plurality of information groups. In this implementation, G is greater than C. As shown in FIG. 9B, the second communication apparatus may inversely map the to-be-encoded code block i to the information group 1 to the information group r.

For example, as shown in FIG. 9C, a plurality of to-be-encoded code blocks correspond to one information group. In this implementation, G is less than C. As shown in FIG. 9C, the second communication apparatus may inversely map the to-be-encoded code block 1 to the to-be-encoded code block j to the information group i.

### 2. Fourth inverse mapping mode.

The G information groups correspond to the fourth inverse mapping mode. The fourth inverse mapping mode includes: the second communication apparatus determines the C to-be-encoded code blocks as Q third transport blocks, and Q is an integer greater than or equal to 1; and the second communication apparatus determines to inversely map the Q third transport blocks to the G information groups.

A process in which the second communication apparatus determines the C to-be-encoded code blocks as the Q third transport blocks is similar to a process of conversion between an existing to-be-encoded code block and a transport block. Details are not described herein again.

The G information groups are in one-to-one correspondence with the Q third transport blocks; each of the Q third transport blocks corresponds to a plurality of information groups in the G information group; or each of the G information groups corresponds to a plurality of third transport blocks in the Q third transport blocks.

For example, as shown in FIG. 9D, the Q third transport blocks are in one-to-one correspondence with the G information groups. In this implementation, G is equal to Q. As shown in FIG. 9D, the second communication apparatus may inversely map the third transport block 1 to the information group 1, inversely map the third transport block 2 to the information group 2, and inversely map the third transport block G to the information group G by analogy.

For example, as shown in FIG. 9E, one third transport block corresponds to a plurality of information groups. In this implementation, G is greater than Q. As shown in FIG. 9E, the second communication apparatus may inversely map the third transport block i to the information group 1 to the information group r.

For example, as shown in FIG. 9F, a plurality of third transport blocks correspond to one information group. In this implementation, G is less than Q. As shown in FIG. 9F, the second communication apparatus may inversely map the third transport block 1 to the third transport block r to the information group i.

210: The second communication apparatus performs inverse processing on the G information groups based on X' inverse processing modes, to obtain the S information segments.

Each of the G information groups corresponds to one of the X' inverse processing modes, where X' is an integer greater than or equal to 1, and S is an integer greater than or equal to 1.

Optionally, the inverse processing and the pre-processing shown in step 203 are inverse processes of each other. For details, refer to the foregoing related descriptions of the pre-processing.

The X' inverse processing modes may be pre-configured in the second communication apparatus. For example, X' is equal to 6. Certainly, X' may alternatively be another value. For example, X' is equal to 8. This is not specifically limited in this application.

Based on the first processing mode to the fifth processing mode in step 203, this application provides five possible inverse processing modes. The following describes various possible inverse processing modes by using an inverse processing mode corresponding to the first information group.

### 1. First inverse processing mode.

The first information group corresponds to the first inverse processing mode, and the first information group is one of the G information groups. The first inverse processing mode includes: the first information group corresponds to one of the S information segments; and the second communication apparatus performs inverse processing on the first information group, to obtain the one of the S information segments.

The first inverse processing mode corresponds to the first processing mode in step 203, and an operation of the inverse processing and the operation of the pre-processing in the first processing mode are inverse processes of each other. For details, refer to the foregoing related descriptions.

### 2. Second inverse processing mode.

The first information group corresponds to the second inverse processing mode, and the first information group is one of the G information groups. The first information group corresponds to the second inverse processing mode. The second inverse processing mode includes: the first information group corresponds to a plurality of information segments in the S information segments; and the second communication apparatus performs inverse processing on the first information group, to obtain at least one information segment in the plurality of information segments.

The second inverse processing mode corresponds to the second processing mode in step 203, and an operation of the inverse processing and the operation of the pre-processing in the second processing mode are inverse processes of each other. For details, refer to the foregoing related descriptions.

In a possible implementation, the plurality of information segments include a basic information segment and a reference information segment. The second communication apparatus performs the inverse processing on the first information group, to obtain the basic information segment.

Optionally, the second communication apparatus performs the inverse processing on the first information group, to further obtain the reference information segment.

For example, as shown in FIG. 6B, a coordinate location of a first-type target point is A, and a coordinate location of a second-type target point is B. In this case, a differential coordinate location of the second-type target point may be B-A. Then, the differential coordinate location B-A is quantized to obtain quantized B-A. The second communication apparatus may first dequantize the quantized B-A to obtain (B_). If a value of the coordinate location A restored by the second communication apparatus is A', a restored value of the coordinate location B is B'=B_+A'.

In another possible implementation, the basic information segment and the reference information segment are not distinguished in the plurality of information segments. The second communication apparatus performs the inverse processing on the first information group, to obtain the plurality of information segments.

For example, the coordinate location A is close to the coordinate location B. The first communication apparatus obtains V=(A+B)/2 through calculation based on the coordinate location A and the coordinate location B. Then, the first communication apparatus quantizes V to obtain Q(V), which is used as a value of one information group. In this case, the second communication apparatus dequantizes Q(V) to obtain V'. Then, the second communication apparatus uses V' as both a value of the coordinate location A and a value of the coordinate location B.

### 3. Third inverse processing mode.

The first information group corresponds to the third inverse processing mode, and the first information group is one of the G information groups. The third inverse processing mode includes: the first information group corresponds to one of the S information segments and one or more information groups, and the one or more information groups belong to the G information groups; and the second communication apparatus performs inverse processing on the first information group, to obtain the one of the S information segments. Optionally, the second communication apparatus performs the inverse processing on the first information group, to further obtain the one or more information groups.

The third inverse processing mode corresponds to the third processing mode in step 203, and an operation of the inverse processing and the operation of the pre-processing in the third processing mode are inverse processes of each other. For details, refer to the foregoing related descriptions.

### 4. Fourth inverse processing mode.

The first information group corresponds to the fourth inverse processing mode, and the first information group is one of the G information groups. The fourth inverse processing mode includes: the first information group corresponds to one of the S information segments, and the first information group further corresponds to one or more information segments, or one or more information groups; and the second communication apparatus performs inverse processing on the first information group, to obtain the one of the S information segments.

Optionally, the second communication apparatus performs the inverse processing on the first information group, to further obtain the one or more information segments or the one or more information groups corresponding to the first information group.

The one or more information segments are from an information segment corresponding to a second transport block. The one or more information groups are from an information group corresponding to the second transport block. The second transport block is a transport block between the first communication apparatus and the second communication apparatus.

Optionally, the one or more information segments are also from the S information segments. The one or more information groups are also from the G information groups.

The fourth inverse processing mode corresponds to the fourth processing mode in step 203, and an operation of the inverse processing and the operation of the pre-processing in the fourth processing mode are inverse processes of each other. For details, refer to the foregoing related descriptions.

### 5. Fifth inverse processing mode.

The first information group corresponds to the fifth processing mode, and the first information group is one of the G information groups. The fifth inverse processing mode includes: the first information group corresponds to one of the S information segments, and the first information group further corresponds to at least one of the following: one or more information segments and one or more information groups; and the second communication apparatus performs inverse processing on the first information group, to obtain the one of the S information segments.

Optionally, the second communication apparatus performs the inverse processing on the first information group, to further obtain the at least one of the one or more information segments and the one or more information groups.

The one or more information segments are from an information segment corresponding to a second transport block. The one or more information groups are from an information group corresponding to the first transport block and/or an information group corresponding to the second transport block. The second transport block is a transport block between the first communication apparatus and the second communication apparatus.

The fifth inverse processing mode corresponds to the fifth processing mode in step 203, and an operation of the inverse processing and the operation of the pre-processing in the fifth processing mode are inverse processes of each other. For details, refer to the foregoing related descriptions.

Based on the sixth processing mode to the eleventh processing mode in step 203, this application provides six possible inverse processing modes. The following describes various possible inverse processing modes by using an inverse processing mode corresponding to the first information group.

### 1. Sixth inverse processing mode.

The sixth inverse processing mode is similar to the foregoing first inverse processing mode. For details, refer to the foregoing related descriptions of the first inverse processing mode. Details are not described herein again.

### 2. Seventh inverse processing mode.

The seventh inverse processing mode is similar to the foregoing second inverse processing mode. For details, refer to the foregoing related descriptions of the second inverse processing mode. Details are not described herein again.

### 3. Eighth inverse processing mode.

The eighth inverse processing mode is similar to the foregoing third inverse processing mode. For details, refer to the foregoing related descriptions of the third inverse processing mode. Details are not described herein again.

### 4. Ninth inverse processing mode.

The first information group corresponds to the ninth inverse processing mode, and the first information group is one of the G information groups. The ninth inverse processing mode includes: the first information group corresponds to one of the S information segments and one or more information blocks, and the one or more information blocks belong to the B information blocks; and the second communication apparatus performs inverse processing on the first information group, to obtain the one of the S information segments.

Optionally, the second communication apparatus performs the inverse processing on the first information group, to further obtain the one or more information blocks.

The ninth inverse processing mode corresponds to the ninth processing mode in step 203, and an operation of the inverse processing in the ninth inverse processing mode and an operation of the pre-processing in the ninth processing mode are inverse processes of each other. For details, refer to the foregoing related descriptions.

### 5. Tenth inverse processing mode.

The first information group corresponds to the tenth inverse processing mode, and the first information group is one of the G information groups. The tenth inverse processing mode includes: the first information group corresponds to one of the S information segments, and the first information group further corresponds to one or more information segments, one or more information groups, or one or more information blocks; and the second communication apparatus performs inverse processing on first information, to obtain the one of the S information segments.

Optionally, the second communication apparatus performs the inverse processing on the first information group, to further obtain the one or more information segments, the one or more information groups, or the one or more information blocks.

The tenth inverse processing mode corresponds to the tenth processing mode in step 203, and an operation of the inverse processing in the tenth inverse processing module and an operation of the pre-processing in the tenth processing mode are inverse processes of each other. For details, refer to the foregoing related descriptions.

### 6. Eleventh inverse processing mode.

The first information group corresponds to the eleventh inverse processing mode, and the first information group is one of the G information groups. The eleventh inverse processing mode includes: the first information group corresponds to one of the S information segments, and the first information group further corresponds to at least one of the following: one or more information segments, one or more information groups, and one or more information blocks; and the second communication apparatus performs inverse processing on the first information, to obtain the one of the S information segments.

The one or more information segments are from an information segment corresponding to a second transport block. The second transport block is a transport block between the first communication apparatus and the second communication apparatus. Optionally, the one or more information segments are also from the S information segments.

The one or more information groups are from an information group corresponding to the first transport block and/or an information group corresponding to the second transport block.

The one or more information blocks are from an information block corresponding to the first transport block and/or an information block corresponding to the second transport block.

Optionally, the second communication apparatus performs the inverse processing on the first information group, to further obtain the at least one of the following: the one or more information segments, the one or more information groups, and the one or more information blocks.

The eleventh inverse processing mode corresponds to the eleventh processing mode in step 203, and an operation of the inverse processing in the eleventh inverse processing module and an operation of the pre-processing in the eleventh processing mode are inverse processes of each other. For details, refer to the foregoing related descriptions.

It should be noted that, optionally, the X' inverse processing modes are in one-to-one correspondence with the foregoing X inverse processing modes. In other words, X' is equal to X. For example, for an information group, the information group corresponds to the first processing mode, and the first processing mode corresponds to the first inverse processing mode. In this case, the second communication apparatus may perform inverse processing on the information group in the first inverse processing mode. Alternatively, each of the X' inverse processing modes corresponds to one or more processing modes. For example, the information group 1 corresponds to the first processing mode, the information group 2 corresponds to the second processing mode, and the first processing mode and the second processing mode correspond to the first inverse processing mode. In this case, the second communication apparatus may perform inverse processing on the information group 1 and the information group 2 in the first inverse processing mode.

Optionally, the second communication apparatus removes the CRC on each of the S information segments.

211: The second communication apparatus determines the first transport block based on the S information segments.

S is an integer greater than or equal to 1.

A process in which the second communication apparatus determines the first transport block is an inverse process of step 202. For details, refer to the foregoing related descriptions. Details are not described herein.

In this embodiment of this application, the first communication apparatus obtains the first transport block. The first communication apparatus converts the first transport block into the S information segments, where S is an integer greater than or equal to 1. Then, the first communication apparatus performs the pre-processing on the S information segments based on the X processing modes, to obtain the G information groups. Each of the G information groups corresponds to one of the X processing modes, where G is an integer greater than or equal to 1, and X is an integer greater than or equal to 1. The first communication apparatus determines the C to-be-encoded code blocks based on the G information groups, where C is an integer greater than or equal to 1, and a sum of the sizes of the C to-be-encoded code blocks is less than a size of the first transport block. The first communication apparatus performs the channel coding on the C to-be-encoded code blocks, to obtain the encoded code blocks. The first communication apparatus outputs the encoded code block. It can be learned that in the technical solutions of this application, the first communication apparatus converts the first transport block to obtain the S information segments. Then, the first communication apparatus performs the pre-processing on the S information segments based on the X processing modes, to obtain the G information groups. Then, the first communication apparatus determines the C to-be-encoded code blocks based on the G information groups. Therefore, the sum of the sizes of the C to-be-encoded code blocks is less than the size of the first transport block, to implement data compression. Therefore, an amount of data transmitted by the first communication apparatus is reduced, and transmission overheads are reduced.

In this embodiment of this application, optionally, step 201a to step 201c may be sent simultaneously, or may be sent separately. This is not specifically limited in this application. In addition, the foregoing first indication information, the foregoing sixth indication information, and the foregoing seventh indication information may be same indication information, or may be different indication information. This is not specifically limited in this application. Alternatively, step 201a, step 201b, step 201d, and step 201e to step 201g may be sent simultaneously, or may be sent separately. This is not specifically limited in this application. The foregoing second indication information to the foregoing seventh indication information may be same indication information, or may be different indication information. This is not specifically limited in this application.

Optionally, information indicated by each of the first indication information, the sixth indication information, and the seventh indication information may be referred to as a specific configuration. Alternatively, information indicated by each of the second indication information to the seventh indication information may be referred to as a specific configuration. The second communication apparatus may indicate different configurations to the first communication apparatus for different data types.

Optionally, the second communication apparatus may indicate a corresponding configuration to the first communication apparatus in a static manner, a dynamic manner, or a hybrid manner (where that is, both the static manner and the dynamic manner are used). Specifically, the second communication apparatus may send configuration information to the first communication apparatus by using MAC layer signaling, RRC layer signaling, or physical layer signaling.

The data types include any one of the following: imaging data, sensing data, positioning data, tracking data, radar data, AI data, and data from each layer above the physical layer.

A plurality of configurations are pre-configured in the first communication apparatus. The second communication apparatus may indicate a corresponding configuration to the first communication apparatus based on a data type of the first transport block. For example, the second communication apparatus sends an index of the configuration to the first communication apparatus. The first communication apparatus may determine the configuration based on the index of the configuration.

For example, as shown in Table 1, a data type 1 corresponds to two configurations: a configuration 1-1 and a configuration 1-2. A data type 2 corresponds to one configuration: a configuration -2.

**Table 1**

| Data type | Configuration |
|---|---|
| Data type 1 | {Configuration 1-1 and configuration 1-2} |
| Data type 2 | {Configuration 2} |

The following describes the configuration 1-1 with reference to Table 2.

**Table 2**

| Configuration 1-1 | |
|---|---|
| 1 | Sixth processing mode: operations corresponding to the pre-processing: segmentation processing, DCT transform, and quantization processing; and pre-processing parameters: (8x8, 8x8, a) |
| 2 | Second screening mode: operation corresponding to the screening: coefficient recombination; and screening parameters: (quantity of groups is 2: <(0, 1), others>) |
| 3 | Enabling of entropy encoding: operations corresponding to the entropy encoding: group 1 (differential coding, Huffman) and group 2 (RLC, Huffman) |
| 4 | First mapping mode: action: (splitting manner); and parameter: threshold d |
| 5 | Channel coding manner: (CC) |

The following describes the configuration 1-2 with reference to Table 3.

**Table 3**

| Configuration 1-2 | |
|---|---|
| 1 | Eighth processing mode: operations corresponding to the pre-processing: segmentation processing, differential processing, DCT transform, and quantization processing; and pre-processing parameters: (8x8, ref offset=0, 8x8, e) |
| 2 | Second screening mode: operation corresponding to the screening: bit layering; and screening parameter: (quantity of layers is 8) |
| 3 | Disabling of entropy encoding |
| 4 | First mapping mode: action: (information blocks are in one-to-one correspondence with to-be-encoded code blocks) |
| 5 | Channel coding manner: (JSCC) |

The first communication apparatus may perform physical layer compression on the transport block of the data type 1 based on the configuration 1-1 and the configuration 1-2. For a specific encoding process, refer to the procedure shown in FIG. 10B.

The following describes the configuration -2 with reference to Table 4.

**Table 4**

| Configuration -2 | |
|---|---|
| 1 | Supporting {sixth processing mode, seventh processing mode, and tenth processing mode}: operations corresponding to the pre-processing: { (segmentation)}-> { (quantization), (differential, quantization), (differential, quantization)}; and pre-processing parameters: {(3x20}}-> { (a1), (max offset=d2, a2), (max offset=d3, a3)} |
| 2 | First screening mode: operation corresponding to the screening: (discarding a non-important coefficient); and screening parameter: (threshold b) |
| 3 | Enabling of entropy encoding: operation corresponding to the entropy encoding: (arithmetic coding) |
| 4 | Second mapping mode: action: (information blocks are in one-to-one correspondence with third transport blocks) |
| 5 | Channel coding manner: (CC) |

Supporting {sixth processing mode, seventh processing mode, and tenth processing mode} indicates that one processing mode may be selected from the sixth processing mode, the seventh processing mode, and the tenth processing mode.

The second communication apparatus may send a configuration to the first communication apparatus in a static manner (for example, an RRC message), a dynamic manner (for example, a MAC CE or physical layer signaling), or a hybrid manner.

For a plurality of configurations, the second communication apparatus may configure the plurality of configurations for the first communication apparatus in a static configuration manner. The second communication apparatus then indicates indexes of the configurations to the first communication apparatus in the dynamic manner, for example, an index of the configuration 1-1 and an index of the configuration 1-2 shown in Table 1.

The first communication apparatus may perform physical layer compression on the transport block of the data type 2 based on the configuration -2 shown in Table 4. For a specific encoding process, refer to the procedure shown in FIG. 10C.

Optionally, in addition to the following configuration, the first communication apparatus further generates some dynamic parameters in a physical layer compression process. The first communication apparatus may send these dynamic parameters to the second communication apparatus.

For example, in the configuration -2 shown in Table 3, the first communication apparatus needs to select a processing mode, an operation corresponding to the pre-processing, and a bias. For example, in the configuration -2 shown in Table 3, the first communication apparatus needs to indicate a quantity of remaining parameters or locations of the remaining parameters after discarding the non-important coefficient. The first communication apparatus sends these dynamic parameters to the second communication apparatus, so that the second communication apparatus decodes a received code block.

It should be noted that, optionally, the dynamic parameter is carried in a to-be-encoded code block of a control channel or of a data channel. Alternatively, the dynamic parameter and compressed data of the first communication apparatus are carried in the to-be-encoded code block together. This is not specifically limited in this application.

It should be noted that, optionally, the first communication apparatus may explicitly indicate the data type of the first transport block to the second communication apparatus. For example, the first communication apparatus sends the data type of the first transport block and the dynamic parameter to the second communication apparatus. Alternatively, the first communication apparatus may implicitly indicate the data type of the first transport block to the second communication apparatus. For example, the first communication apparatus performs transmission of data of the first transport block by using a predetermined time-frequency resource, to implicitly indicate the data type of the first transport block by using the time-frequency resource. For example, a time-frequency resource 1 corresponds to data of the data type 1, and a time-frequency resource 2 corresponds to data of the data type 2.

In this embodiment of this application, optionally, the second communication apparatus selects, based on the data type of the first transport block, a scheduling manner for scheduling the first communication apparatus to send the data of the first transport block.

The following describes several possible scheduling manners.

### 1. Dynamic scheduling manner

One scheduling instruction corresponds to sending of one group of compressed data. For example, the second communication apparatus sends a scheduling instruction to the first communication apparatus once, and the first communication apparatus feeds back one group of compressed data according to the scheduling instruction.

For example, the first communication apparatus is a terminal device, and the second communication apparatus is a network device. The network device sends scheduling signaling to the terminal device once. The terminal device feeds back compressed data once. The compressed data may be sent separately, or may be sent after being multiplexed with other uplink data of the terminal device.

### 2. Semi-persistent scheduling manner

One scheduling instruction triggers sending of a plurality of groups of compressed data. The first communication apparatus sends the plurality of groups of compressed data by using a time-frequency resource indicated by the scheduling instruction. Alternatively, the first communication apparatus determines, based on RRC signaling that is received in advance, a time-frequency resource for sending the plurality of groups of compressed data.

For example, the first communication apparatus is a terminal device, and the second communication apparatus is a network device. The terminal device triggers the terminal device to feed back compressed data by using one piece of scheduling signaling (for example, downlink control information (downlink control information, DCI)) or a MAC trigger (MAC trigger). The terminal device may periodically feed back a plurality of groups of compressed data before the terminal device receives indication information for stopping the feedback. Alternatively, when a quantity of times that the terminal device feeds back compressed data reaches a maximum quantity of feedbacks, the terminal device stops feeding back the compressed data to the network device.

### 3. Pre-scheduling manner

The second communication apparatus may schedule, by using scheduling signaling, the first terminal device to send compressed data to the second communication apparatus by using a periodic time-frequency resource.

Different scheduling manners may be used for different data types. For example, for positioning data, the second communication apparatus may schedule, in the pre-scheduling manner, the first communication apparatus to periodically report the positioning data. For sensing data, the second communication apparatus may schedule, in the dynamic scheduling manner, the first communication apparatus to report the sensing data.

In this embodiment of this application, optionally, this application provides two possible configuration manners in which physical layer compression is disabled, and the configuration manners are separately described below.

The following describes a configuration manner 1 with reference to Table 5.

**Table 5**

| Configuration Manner 1 | |
|---|---|
| 1 | Sixth processing mode: action: (none) |
| 2 | First screening mode: action: (select all) |
| 3 | Disabling of entropy encoding |
| 4 | Second mapping mode: action: information blocks are in one-to-one correspondence with third transport blocks |

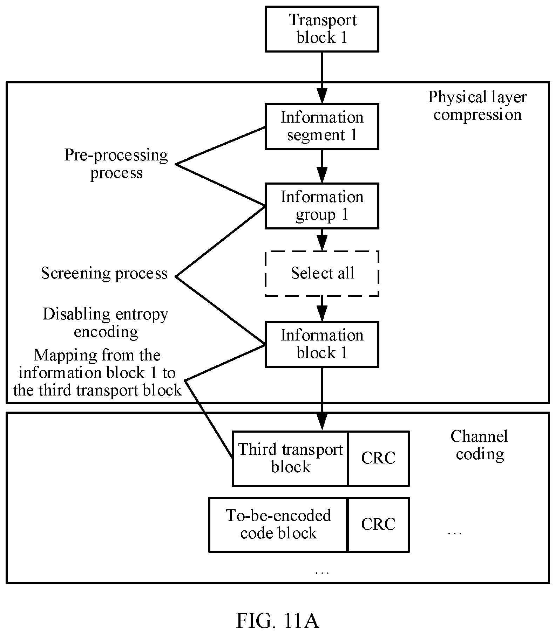

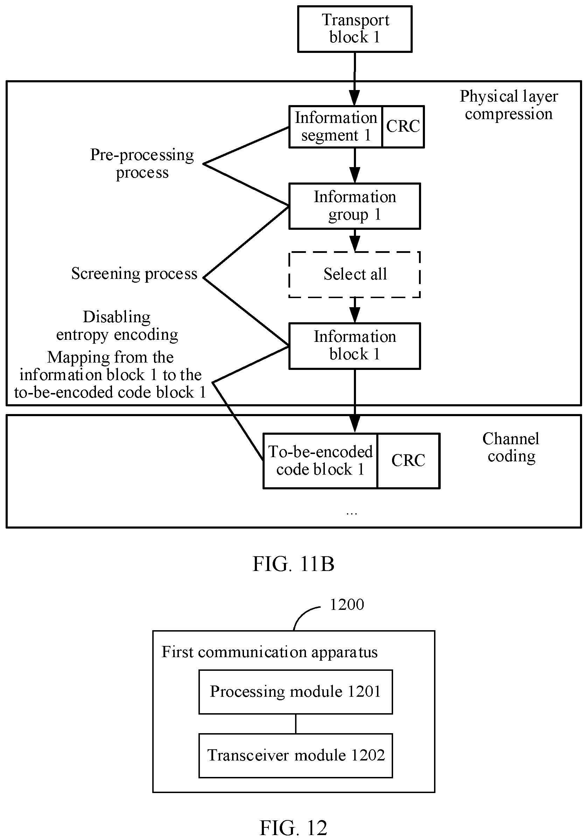

Based on the configuration manner 1, as shown in FIG. 11A, the action of the first communication apparatus in a pre-processing process is none (none). That is, there is only one information segment. In a screening process, the first communication apparatus selects all bits or symbols in an information segment 1 to an information group 1. In a process of mapping the information block 1 to the transport block, the first communication apparatus directly maps the information block 1 to a third transport block.

The following describes a configuration manner 2 with reference to Table 6.

**Table 6**

| Configuration Manner 2 | |
|---|---|
| 1 | Sixth processing mode: action: (attach a CRC) |
| 2 | First screening mode: action: (select all) |
| 3 | Disabling of entropy encoding |
| 4 | First mapping mode: action: information blocks are in one-to-one correspondence with to-be-encoded code blocks |

Based on the configuration manner 2, as shown in FIG. 11B, the action of the first communication apparatus in a pre-processing process is attaching the CRC. To be specific, an action of attaching the CRC to the transport block in original channel coding is omitted, and the CRC is attached to an information segment in the pre-processing process. In a process of mapping an information block 1 to a to-be-encoded code block, the first communication apparatus directly maps the information block to a to-be-encoded code block 1. That is, a transport block in the original channel coding is omitted.

The following describes the first communication apparatus provided in embodiments of this application. FIG. 12 is a schematic of a structure of a first communication apparatus according to an embodiment of this application. The first communication apparatus 1200 may be configured to perform a step performed by the first communication apparatus in the embodiment shown in FIG. 2. For details, refer to the related descriptions in the foregoing method embodiment.

The first communication apparatus 1200 includes a processing module 1201 and a transceiver module 1202. The transceiver module 1202 may implement a corresponding communication function, and the transceiver module 1202 may also be referred to as a communication interface or a communication module. The processing module 1201 is configured to perform a processing operation.

Optionally, the first communication apparatus 1200 may further include a storage module. The storage module may be configured to store instructions and/or data. The processing module 1201 may read the instructions and/or data in the storage module, to enable the first communication apparatus 1200 to implement the method embodiment shown in FIG. 2.

Optionally, the transceiver module 1202 may include a sending module and a receiving module. The sending module is configured to perform a sending operation in the method embodiment shown in FIG. 2. The receiving module is configured to perform a receiving operation in the method embodiment shown in FIG. 2.

It should be noted that the first communication apparatus 1200 may include the sending module, but does not include the receiving module. Alternatively, the first communication apparatus 1200 may include the receiving module, but does not include the sending module. This may be specifically determined depending on whether the foregoing solution performed by the first communication apparatus 1200 includes a sending action and a receiving action.

The first communication apparatus 1200 may be configured to perform an action performed by the first communication apparatus in the foregoing method embodiment. The first communication apparatus 1200 may be the first communication apparatus or a component that may be disposed in the first communication apparatus.

The transceiver module 1202 is configured to perform a receiving-related operation of the first communication apparatus side in the foregoing method embodiment, and the processing module 1201 is configured to perform a processing-related operation of the first communication apparatus side in the foregoing method embodiment.

Specifically, the first communication apparatus 1200 may be configured to perform the following solutions:

The processing module 1201 is configured to: obtain a first transport block; convert the first transport block into S information segments, where S is an integer greater than or equal to 1; perform pre-processing on the S information segments based on X processing modes, to obtain G information groups, where each of the G information groups corresponds to one of the X processing modes, G is an integer greater than or equal to 1, and X is an integer greater than or equal to 1; determine C to-be-encoded code blocks based on the G information groups, where C is an integer greater than or equal to 1, and a sum of sizes of the C to-be-encoded code blocks is less than a size of the first transport block; and perform channel coding on the C to-be-encoded code blocks, to obtain an encoded code block.

The transceiver module 1202 is configured to output the encoded code block.

In a possible implementation, the processing mode corresponding to each of the G information groups is determined based on at least one of data locations, data types, data importance, data correlation, and data similarities that are of the S information segments;
the processing mode corresponding to each of the G information groups is pre-configured; or
the processing mode corresponding to each of the G information groups is indicated by a second communication apparatus.

In another possible implementation, the pre-processing includes at least one of segmentation processing, recombination processing, clustering processing, DCT, octree transform, K-dimensional tree transform, wavelet transform, weighting, residual calculation, FFT, IFFT, and quantization processing.

In another possible implementation, a first information group corresponds to a first processing mode, the first information group is one of the G information groups, and the first processing mode includes: the first information group corresponds to one of the S information segments; and the first communication apparatus 1200 performs the pre-processing on the one of the S information segments to obtain the first information group.

In another possible implementation, a first information group corresponds to a second processing mode, the first information group is one of the G information groups, and the second processing mode includes: the first information group corresponds to a plurality of information segments in the S information segments; and the first communication apparatus 1200 performs the pre-processing on the plurality of information segments to obtain the first information group.

In another possible implementation, in the second processing mode, the plurality of information segments in the S information segments include a basic information segment and a reference information segment.

In another possible implementation, a first information group corresponds to a third processing mode, the first information group is one of the G information groups, and the third processing mode includes: the first information group corresponds to one of the S information segments and one or more information groups, and the one or more information groups belong to the G information groups; and the first communication apparatus 1200 performs the pre-processing on the one or more information groups and the one of the S information segments to obtain the first information group.

In another possible implementation, in the third processing mode, the one of the S information segments is a basic information segment, and the one or more information groups are a reference information group.

In another possible implementation, a first information group corresponds to a fourth processing mode, the first information group is one of the G information groups, and the fourth processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus 1200 and the second communication apparatus; and the first communication apparatus 1200 performs the pre-processing on the one of the S information segments and the one or more information segments or the one or more information groups corresponding to the first information group, to obtain the first information group.

In another possible implementation, in the fourth processing mode, the one or more information segments are also from the S information segments.

In another possible implementation, a first information group corresponds to a fifth processing mode, the first information group is one of the G information groups, and the fifth processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus 1200 and the second communication apparatus; and the first communication apparatus 1200 performs the pre-processing on the one of the S information segments and the at least one of the one or more information segments and the one or more information groups, to obtain the first information group.

In another possible implementation, in the fifth processing mode, the one or more information segments are also from the S information segments.

In another possible implementation, the transceiver module 1202 is further configured to:
receive first indication information from the second communication apparatus, where the first indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, and an index of a transport block corresponding to the G information groups.

In another possible implementation, the processing module 1201 is specifically configured to:
screen the G information groups based on Y screening modes to obtain B information blocks, where each of the B information blocks corresponds to one screening mode, B is an integer greater than or equal to 1, and Y is an integer greater than or equal to 1; and determine the C to-be-encoded code blocks based on the B information blocks.

In another possible implementation, a first information group corresponds to a sixth processing mode, the first information group is one of the G information groups, and the sixth processing mode includes: the first information group corresponds to one of the S information segments; and the first communication apparatus 1200 performs the pre-processing on the one of the S information segments to obtain the first information group.

In another possible implementation, a first information group corresponds to a seventh processing mode, the first information group is one of the G information groups, and the seventh processing mode includes: the first information group corresponds to a plurality of information segments in the S information segments; and the first communication apparatus 1200 performs the pre-processing on the plurality of information segments to obtain the first information group.

In another possible implementation, in the seventh processing mode, the plurality of information segments in the S information segments include a basic information segment and a reference information segment.

In another possible implementation, a first information group corresponds to an eighth processing mode, the first information group is one of the G information groups, and the eighth processing mode includes: the first information group corresponds to one of the S information segments and one or more information groups, and the one or more information groups belong to the G information groups; and the first communication apparatus 1200 performs the pre-processing on the one or more information groups and the one of the S information segments to obtain the first information group.

In another possible implementation, in the eighth processing mode, the one of the S information segments is a basic information segment, and the one or more information groups are a reference information group.

In another possible implementation, a first information group corresponds to a ninth processing mode, the first information group is one of the G information groups, and the ninth processing mode includes: the first information group corresponds to one of the S information segments and one or more information blocks, and the one or more information blocks belong to the B information blocks; and the first communication apparatus 1200 performs the pre-processing on the one or more information blocks and the one of the S information segments to obtain the first information group.

In another possible implementation, in the ninth processing mode, the one of the S information segments is a basic information segment, and the one or more information blocks are a reference information block.

In another possible implementation, a first information group corresponds to a tenth processing mode, the first information group is one of the G information groups, and the tenth processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus 1200 and the second communication apparatus; and the first communication apparatus 1200 performs the pre-processing on the one of the S information segments and the one or more information segments, the one or more information groups, or the one or more information blocks corresponding to the first information group, to obtain the first information group.

In another possible implementation, in the tenth processing mode, the one or more information segments are also from the S information segments.

In another possible implementation, a first information group corresponds to an eleventh processing mode, the first information group is one of the G information groups, and the eleventh processing mode includes: the first information group corresponds to one of the S information segments, and the first information group further corresponds to at least one of the following: one or more information segments, one or more information groups, and one or one information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus 1200 and the second communication apparatus; and the first communication apparatus 1200 performs the pre-processing on the one of the S information segments and the at least one of the one or more information segments, the one or more information groups, and the one or more information blocks, to obtain the first information group.

In another possible implementation, in the eleventh processing mode, the one or more information segments are also from the S information segments.

In another possible implementation, the transceiver module 1202 is further configured to:
receive second indication information from the second communication apparatus, where the second indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, an index of an information block corresponding to the G information groups, and an index of a transport block corresponding to the G information groups.

In another possible implementation, a first information block corresponds to a first screening mode, the first information block is one of the B information blocks, and the first screening mode includes: the first information block corresponds to one of the G information groups; and the first communication apparatus 1200 performs bit or symbol selection on the information group according to a first screening principle, to obtain the first information block.

In another possible implementation, a first information block corresponds to a second screening mode, the first information block is one of the B information blocks, and the second screening mode includes: the first information block corresponds to a plurality of information groups in the G information groups; and the first communication apparatus 1200 performs bit or symbol selection on the plurality of information groups according to a second screening principle, to obtain the first information block.

In another possible implementation, the transceiver module 1202 is further configured to:
receive third indication information from the second communication apparatus, where the third indication information indicates at least one of the following: sizes of the B information blocks, a screening mode, a screening principle, and an index of a corresponding information group.

In another possible implementation, the processing module 1201 is specifically configured to:
determine a mapping mode corresponding to the B information blocks; and
map the B information blocks to the C to-be-encoded code blocks in the mapping mode.

In another possible implementation, the B information blocks correspond to a first mapping mode, and the first mapping mode includes: the first communication apparatus 1200 maps the B information blocks to the C to-be-encoded code blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

In another possible implementation, the B information blocks correspond to a second mapping mode, and the second mapping mode includes: the first communication apparatus 1200 maps the B information blocks to Q third transport blocks based on a second mapping relationship, where Q is an integer greater than or equal to 1. The second mapping relationship includes: the B information blocks are in one-to-one correspondence with the Q third transport blocks, and B is equal to C; each of the Q third transport blocks corresponds to a plurality of information blocks in the B information blocks; or each of the B information blocks corresponds to a plurality of third transport blocks in the Q third transport blocks. The first communication apparatus 1200 maps the Q third transport blocks to the C to-be-encoded code blocks.

In another possible implementation, the transceiver module 1202 is further configured to:
receive fourth indication information of the second communication apparatus, where the fourth indication information indicates at least one of the following: the mapping mode corresponding to the B information blocks and the sizes of the C to-be-encoded code blocks.

In another possible implementation, the processing module 1201 is further configured to:
perform entropy encoding on each of the B information blocks, to obtain B entropy-encoded information blocks; and
the processing module 1201 is specifically configured to:
   determine the C to-be-encoded code blocks based on the B entropy-encoded information blocks.

In another possible implementation, the transceiver module 1202 is further configured to:
receive fifth indication information from the second communication apparatus, where the fifth indication information indicates at least one of the following: enabling of the entropy encoding by the first communication apparatus 1200 and an operation corresponding to the entropy encoding.

In another possible implementation, the processing module 1201 is specifically configured to:
segment the first transport block into the S information segments according to a segmentation criterion.

In another possible implementation, the transceiver module 1202 is further configured to:
receive sixth indication information from the second communication apparatus, where the sixth indication information indicates at least one of the following: segmenting the first transport block in a segmentation manner and a segmentation parameter.

In another possible implementation, the processing module 1201 is specifically configured to:
recombine the first transport block into the S information segments according to a recombination criterion.

In another possible implementation, the processing module 1201 is specifically configured to:
recombine the first transport block into the S information segments according to a transform criterion.

In another possible implementation, the transceiver module 1202 is further configured to:
receive seventh indication information from the second communication apparatus, where the seventh indication information indicates the first communication apparatus 1200 to enable the step of converting, by the processing module, the first transport block into S information segments.

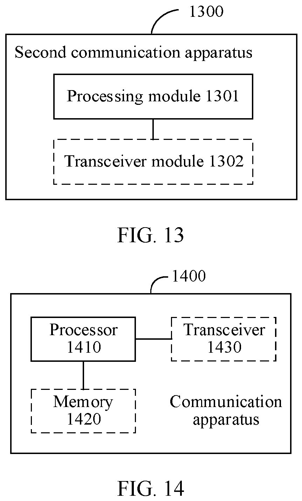

The following describes the second communication apparatus provided in embodiments of this application. FIG. 13 is a schematic of a structure of a second communication apparatus according to an embodiment of this application. The second communication apparatus 1300 may be configured to perform a step performed by the second communication apparatus in the embodiment shown in FIG. 2. For details, refer to the related descriptions in the foregoing method embodiment.

The second communication apparatus 1300 includes a processing module 1301. Optionally, the second communication apparatus further includes a transceiver module 1302.

The transceiver module 1302 may implement a corresponding communication function, and the transceiver module 1302 may also be referred to as a communication interface or a communication module. The processing module 1301 is configured to perform a processing operation.

Optionally, the second communication apparatus 1300 may further include a storage module. The storage module may be configured to store instructions and/or data. The processing module 1301 may read the instructions and/or data in the storage module, to enable the second communication apparatus to implement the method embodiment shown in FIG. 2.

Optionally, the transceiver module 1302 may include a sending module and a receiving module.

The sending module is configured to perform a sending operation in the method embodiment shown in FIG. 2. The receiving module is configured to perform a receiving operation in the method embodiment shown in FIG. 2.

It should be noted that the second communication apparatus 1300 may include the sending module, but does not include the receiving module. Alternatively, the second communication apparatus 1300 may include the receiving module, but does not include the sending module. This may be specifically determined depending on whether the foregoing solution performed by the second communication apparatus 1300 includes a sending action and a receiving action.

The second communication apparatus 1300 may be configured to perform an action performed by the second communication apparatus in the foregoing method embodiment. The second communication apparatus 1300 may be the second communication apparatus or a component that may be disposed in the second communication apparatus.

The transceiver module 1302 is configured to perform a receiving-related operation of the second communication apparatus side in the foregoing method embodiment, and the processing module 1301 is configured to perform a processing-related operation of the second communication apparatus side in the foregoing method embodiment.

Specifically, the second communication apparatus 1300 may be configured to perform the following solutions:

The processing module 1301 is configured to: obtain an encoded code block of a first communication apparatus; perform channel decoding on the encoded code block to obtain C to-be-encoded code blocks, where C is an integer greater than or equal to 1; determine G information groups based on the C to-be-encoded code blocks, where G is an integer greater than or equal to 1; perform inverse processing on the G information groups based on X' inverse processing modes, to obtain S information segments, where each of the G information groups corresponds to one of the X' inverse processing modes, and S is an integer greater than or equal to 1; and determine a first transport block based on the S information segments, where a sum of sizes of the C to-be-encoded code blocks is less than a size of the first transport block.

In a possible implementation, the processing module 1301 is further configured to:
determine an inverse processing mode corresponding to each of the G information groups.

In another possible implementation, a first information group corresponds to a first inverse processing mode, the first information group is one of the G information groups, and the first inverse processing mode includes: the first information group corresponds to one of the S information segments; and the second communication apparatus 1300 performs the inverse processing on the first information group to obtain the information segment.

In another possible implementation, a first information group corresponds to a second inverse processing mode, the first information group is one of the G information groups, the first information group corresponds to the second inverse processing mode, and the second inverse processing mode includes: the first information group corresponds to a plurality of information segments in the S information segments; and the second communication apparatus 1300 performs the inverse processing on the first information group to obtain at least one information segment in the plurality of information segments.

In another possible implementation, a first information group corresponds to a third inverse processing mode, the first information group is one of the G information groups, and the third inverse processing mode includes: the first information group corresponds to one of the S information segments and one or more information groups, and the one or more information groups belong to the G information groups; and the second communication apparatus 1300 performs the inverse processing on the first information group to obtain the one of the S information segments.

In another possible implementation, a first information group corresponds to a fourth inverse processing mode, the first information group is one of the G information groups, and the fourth inverse processing mode includes: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus 1300; and the second communication apparatus 1300 performs the inverse processing on the first information group to obtain the one of the S information segments.

In another possible implementation, in the fourth inverse processing mode, the one or more information segments are also from the S information segments.

In another possible implementation, a first information group corresponds to a fifth inverse processing mode, and the first information group is one of the G information groups; and the fifth inverse processing mode includes: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus 1300; and the second communication apparatus 1300 performs the inverse processing on the first information group to obtain the one of the S information segments.

In another possible implementation, in the fifth inverse processing mode, the one or more information segments are also from the S information segments.

In another possible implementation, the second communication apparatus 1300 further includes the transceiver module 1302.

The transceiver module 1302 is configured to send first indication information to the first communication apparatus.

The first indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, and an index of a transport block corresponding to the G information groups.

In another possible implementation, the processing module 1301 is further configured to:
determine B information blocks based on the C to-be-encoded code blocks, where B is an integer greater than or equal to 1; and
restore the B information blocks to the G information groups based on Z restoration modes, where each of the B information blocks corresponds to one of the Z restoration modes, and Z is an integer greater than or equal to 1.

In another possible implementation, a first information group corresponds to a sixth inverse processing mode, the first information group is one of the G information groups, and the sixth inverse processing mode includes: the first information group corresponds to one of the S information segments; and the second communication apparatus 1300 performs the inverse processing on the first information group to obtain the information segment.

In another possible implementation, a first information group corresponds to a seventh inverse processing mode, the first information group is one of the G information groups, the first information group corresponds to the seventh inverse processing mode, and the seventh inverse processing mode includes: the first information group corresponds to a plurality of information segments in the S information segments; and the second communication apparatus 1300 performs the inverse processing on the first information group to obtain at least one information segment in the plurality of information segments.

In another possible implementation, a first information group corresponds to an eighth inverse processing mode, the first information group is one of the G information groups, and the eighth inverse processing mode includes: the first information group corresponds to one of the S information segments and one or more information groups, and the one or more information groups belong to the G information groups; and the second communication apparatus 1300 performs the inverse processing on the first information group to obtain the one of the S information segments.

In another possible implementation, a first information group corresponds to a fourth inverse processing mode, the first information group is one of the G information groups, and a ninth inverse processing mode includes: the first information group corresponds to one of the S information segments and one or more information blocks, and the one or more information blocks belong to the B information blocks; and the second communication apparatus 1300 performs the inverse processing on the first information group to obtain the one of the S information segments.

In another possible implementation, a first information group corresponds to a tenth inverse processing mode, and the first information group is one of the G information groups; and the tenth inverse processing mode includes: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus 1300; and the second communication apparatus 1300 performs the inverse processing on the first information group to obtain the one of the S information segments.

In another possible implementation, in the tenth inverse processing mode, the one or more information segments are also from the S information segments.

In another possible implementation, a first information group corresponds to an eleventh inverse processing mode, the first information group is one of the G information groups, and the eleventh inverse processing mode includes: the first information group corresponds to one of the S information segments, and the first information group further corresponds to at least one of the following: one or more information segments, one or more information groups, and one or more information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus 1300; and the second communication apparatus 1300 performs the inverse processing on the first information group to obtain the one of the S information segments.

In another possible implementation, in the eleventh inverse processing mode, the one or more information segments are also from the S information segments.

In another possible implementation, the second communication apparatus 1300 further includes the transceiver module 1302.

The transceiver module 1302 is configured to send second indication information to the first communication apparatus. The second indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, an index of an information block corresponding to the G information groups, and an index of a transport block corresponding to the G information groups.

In another possible implementation, a first information block corresponds to a first restoration mode, the first information block is one of the B information blocks, and the first restoration mode includes: the first information block corresponds to one of the G information groups; and the second communication apparatus 1300 performs bit or symbol restoration on the first information block according to a first restoration principle, to obtain all or a part of bits or symbols of the information group.

In another possible implementation, a first information block corresponds to a second restoration mode, the first information block is one of the B information blocks, and the second restoration mode includes: the first information block corresponds to a plurality of information groups in the G information groups; and the second communication apparatus 1300 performs bit or symbol restoration on the first information block according to a second restoration principle, to obtain all or a part of bits or symbols of the plurality of information groups.

In another possible implementation, the second communication apparatus 1300 further includes the transceiver module 1302.

The transceiver module 1302 is configured to send third indication information to the first communication apparatus. The third indication information indicates at least one of the following: sizes of the B information blocks, a screening mode, a screening principle, and an index of a corresponding information group.

In another possible implementation, the processing module 1301 is specifically configured to:
determine an inverse mapping mode corresponding to the C to-be-encoded code blocks; and
inversely mapping the C to-be-encoded code blocks to the B information blocks in the inverse mapping mode.

In another possible implementation, the C to-be-encoded code blocks correspond to a first inverse mapping mode. The first inverse mapping mode includes: the second communication apparatus 1300 inversely maps the C to-be-encoded code blocks to the B information blocks based on a first mapping relationship. The first mapping relationship includes: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

In another possible implementation, the C to-be-encoded code blocks correspond to a second inverse mapping mode. The second inverse mapping mode includes: the second communication apparatus 1300 inversely maps the C to-be-encoded code blocks to Q third transport blocks based on a second mapping relationship, where Q is an integer greater than or equal to 1. The second communication apparatus 1300 inversely maps the Q third transport blocks to the B information blocks.

In another possible implementation, the second communication apparatus 1300 further includes the transceiver module 1302.

The transceiver module 1302 is configured to send fourth indication information to the first communication apparatus. The fourth indication information indicates at least one of the following: a mapping mode of the B information blocks and the sizes of the C to-be-encoded code blocks.

In another possible implementation, the processing module 1301 is further configured to:
perform entropy decoding on the B information blocks to obtain B entropy-decoded information blocks.

In another possible implementation, the second communication apparatus 1300 further includes the transceiver module 1302.

The transceiver module 1302 is configured to send fifth indication information to the first communication apparatus. The fifth indication information indicates at least one of the following: enabling of entropy encoding by the first communication apparatus and an operation corresponding to the entropy encoding.

In another possible implementation, the processing module 1301 is specifically configured to:
combine the S information segments into the first transport block according to a combination criterion.

In another possible implementation, the second communication apparatus 1300 further includes the transceiver module 1302.

The transceiver module 1302 is configured to send sixth indication information to the first communication apparatus. The sixth indication information indicates at least one of the following: segmenting the first transport block in a segmentation manner and a segmentation parameter.

In another possible implementation, the second communication apparatus 1300 further includes the transceiver module 1302.

The transceiver module 1302 is configured to send seventh indication information to the first communication apparatus. The seventh indication information indicates the first communication apparatus to enable a step of converting, by the first communication apparatus, the first transport block into the S information segments.

An embodiment of this application further provides a communication apparatus 1400. Refer to FIG. 14. The communication apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, to perform the method in the foregoing method embodiment.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 and the processor 1410 may be integrated together, or separately disposed.

Optionally, as shown in FIG. 14, the communication apparatus 1400 may further include a transceiver 1430. The transceiver 1430 is configured to receive a signal and/or send a signal. For example, the processor 1410 is configured to control the transceiver 1430 to receive the signal and/or send the signal.

In a solution, the communication apparatus 1400 is configured to perform an operation performed by the first communication apparatus in the foregoing method embodiment.

For example, the processor 1410 is configured to perform a processing-related operation performed by the first communication apparatus in the foregoing method embodiment, and the transceiver 1430 is configured to perform a receiving/sending-related operation performed by the first communication apparatus in the foregoing method embodiment.

When the communication apparatus 1400 is a chip, the chip includes an input/output circuit and a communication interface. The processor is a processor, a microprocessor, or an integrated circuit integrated on the chip. A sending operation of the first communication apparatus in the foregoing method embodiment may be understood as an output of the chip, and a receiving operation of the first communication apparatus in the foregoing method embodiment may be understood as an input of the chip.

In a solution, the communication apparatus 1400 is configured to perform an operation performed by the second communication apparatus in the foregoing method embodiment.

For example, the processor 1410 is configured to perform a processing-related operation performed by the second communication apparatus in the foregoing method embodiment, and the transceiver 1430 is configured to perform a receiving/sending-related operation performed by the second communication apparatus in the foregoing method embodiment.

When the communication apparatus 1400 is a chip, the chip includes an input/output circuit and a communication interface. The processor is a processor, a microprocessor, or an integrated circuit integrated on the chip. A sending operation of the second communication apparatus in the foregoing method embodiment may be understood as an output of the chip, and a receiving operation of the second communication apparatus in the foregoing method embodiment may be understood as an input of the chip.

An embodiment of this application further provides a communication apparatus 1500. The communication apparatus 1500 may be a terminal device or may be a chip. The communication apparatus 1500 may be configured to perform an operation performed by the first communication apparatus or the second communication apparatus in the foregoing method embodiment.

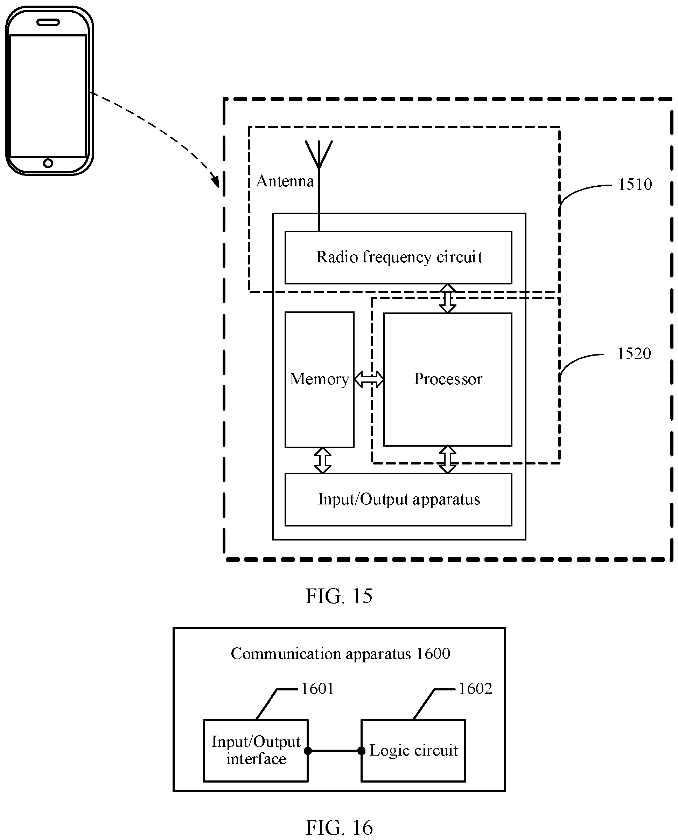

When the communication apparatus 1500 is a terminal device, FIG. 15 is a simplified schematic of a structure of the terminal device. For ease of understanding and convenience of figure illustration, an example in which the terminal device is a mobile phone is used in FIG. 15. As shown in FIG. 15, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and the data. The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data entered by a user and output data to the user.

It should be noted that some types of terminal devices may have no input/output apparatus.

When needing to send data, after performing baseband processing on the to-be-sent data, the processor outputs a baseband signal to the radio frequency circuit. The radio frequency circuit performs radio frequency processing on the baseband signal, and sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 15 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device. As shown in FIG. 15, the terminal device includes a transceiver module 1510 and a processing module 1520. The transceiver module may also be referred to as a transceiver, a transceiver machine, a transceiver apparatus, or the like. The processing module may also be referred to as a processor, a processing board, a processing module, a processing apparatus, or the like.

Optionally, a component for implementing the receiving function in the transceiver module 1510 may be considered as a receiving module, and a component for implementing the sending function in the transceiver module 1510 may be considered as a sending module. In other words, the transceiver module 1510 includes the receiving module and the sending module. The transceiver module may also be sometimes referred to as a transceiver machine, a transceiver, a transceiver circuit, or the like. The receiving module may also be sometimes referred to as a receiving machine, a receiver, a receiving circuit, or the like. The sending module may also be sometimes referred to as a transmitting machine, a transmitter, a transmitting circuit, or the like.

It should be understood that the transceiver module 1510 is configured to perform a sending operation and a receiving operation that are of the first communication apparatus or the second communication apparatus in the foregoing method embodiment, and the processing module 1520 is configured to perform an operation other than the receiving and sending operations of the first communication apparatus or the second communication apparatus in the foregoing method embodiment.

When the terminal device is a chip, the chip includes the transceiver module and the processing module. The transceiver module may be an input/output circuit or a communication interface. The processing module is a processor, a microprocessor, an integrated circuit, or a logic circuit integrated on the chip.

This application further provides another communication apparatus. FIG. 16 is another schematic of a structure of a communication apparatus according to this application. The communication apparatus 1600 includes an input/output interface 1601 and a logic circuit 1602.

In a possible implementation, the communication apparatus 1600 may be configured to perform a part or all of the steps performed by the first communication apparatus in the embodiment shown in FIG. 2.

Optionally, the input/output interface 1601 may have a function of the transceiver module 1202 in the embodiment shown in FIG. 12. The logic circuit 1602 may have a function of the processing module 1201 in the embodiment shown in FIG. 12.

Optionally, the input/output interface 1601 may be configured to perform a sending or receiving operation performed by the first communication apparatus in the foregoing communication method, and the logic circuit 1602 may be configured to perform a processing operation performed by the first communication apparatus in the foregoing communication method.

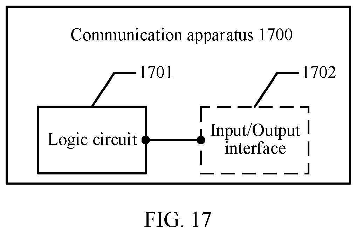

This application further provides another communication apparatus. FIG. 17 is another schematic of a structure of a communication apparatus according to this application. The communication apparatus 1700 includes a logic circuit 1701. Optionally, the communication apparatus further includes an input/output interface 1702.

In a possible implementation, the communication apparatus 1700 may be configured to perform a part or all of the steps performed by the second communication apparatus in the embodiment shown in FIG. 2.

Optionally, the input/output interface 1702 may have a function of the transceiver module 1302 in the embodiment shown in FIG. 13. The logic circuit 1701 may have a function of the processing module 1301 in the embodiment shown in FIG. 13.

Optionally, the input/output interface 1702 may be configured to perform a sending or receiving operation performed by the second communication apparatus in the foregoing communication method, and the logic circuit 1701 may be configured to perform a processing operation performed by the second communication apparatus in the foregoing communication method.

An embodiment of this application further provides a computer-readable storage medium. The computer-readable storage medium stores computer instructions used to implement the method performed by the first communication apparatus or the method performed by the second communication apparatus in the foregoing method embodiment.

For example, when a computer program is executed by a computer, the computer is enabled to implement the method performed by the first communication apparatus or the method performed by the second communication apparatus in the foregoing method embodiment.

An embodiment of this application further provides a computer program product including instructions. When the instructions are executed by a computer, the computer is enabled to implement the method performed by the first communication apparatus or the method performed by the second communication apparatus in the foregoing method embodiment.

An embodiment of this application further provides a communication system. The communication system includes the first communication apparatus and the second communication apparatus in the foregoing embodiments.

An embodiment of this application further provides a chip apparatus, including a processor, configured to invoke a computer degree or computer instructions stored in a memory, to enable the processor to perform the method in the embodiment shown in FIG. 2.

In a possible implementation, an input of the chip apparatus corresponds to a receiving operations in the embodiment shown in FIG. 2, and an output of the chip apparatus corresponds to a sending operations in the embodiment shown in FIG. 2.

Optionally, the processor is coupled to the memory through an interface, or the processor is integrated with the memory.

Optionally, the chip apparatus further includes the memory, and the memory stores the computer degree or the computer instructions.

The processor mentioned above may be a general-purpose central processing unit, a microprocessor, an application-specific integrated circuit (application-specific integrated circuit, ASIC), or one or more integrated circuits for controlling program execution of the method in the embodiment shown in FIG. 2. The memory mentioned above may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for explanations of related content and beneficial effects in any of the foregoing provided communication apparatuses, refer to a corresponding method embodiment provided above. Details are not described herein again.

It may be clearly understood by persons skilled in the art that, for the purpose of convenient and brief description, for detailed working processes of the foregoing system, apparatus, and module, refer to corresponding processes in the foregoing method embodiment, and details are not described herein again.

In the several embodiments provided in this application, it should be understood that the disclosed system, apparatus, and method may be implemented in other manners. For example, the apparatus embodiments described above are merely examples. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. A par or all of the modules may be selected based on actual requirements to achieve the objectives of the solutions of embodiments.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, for example, a USB flash disk, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An encoding method, wherein the method comprises:
obtaining, by a first communication apparatus, a first transport block;
converting, by the first communication apparatus, the first transport block into S information segments, wherein S is an integer greater than or equal to 1;
performing, by the first communication apparatus, pre-processing on the S information segments based on X processing modes, to obtain G information groups, wherein each of the G information groups corresponds to one of the X processing modes, G is an integer greater than or equal to 1, and X is an integer greater than or equal to 1;
determining, by the first communication apparatus, C to-be-encoded code blocks based on the G information groups, wherein C is an integer greater than or equal to 1, and a sum of sizes of the C to-be-encoded code blocks is less than a size of the first transport block;
performing, by the first communication apparatus, channel coding on the C to-be-encoded code blocks, to obtain an encoded code block; and
outputting, by the first communication apparatus, the encoded code block.

2. The method according to claim 1, wherein the processing mode corresponding to each of the G information groups is determined based on at least one of data locations, data types, data importance, data correlation, and data similarities that are of the S information segments;
the processing mode corresponding to each of the G information groups is pre-configured; or the processing mode corresponding to each of the G information groups is indicated by a second communication apparatus.

3. The method according to claim 1 or 2, wherein the pre-processing comprises at least one of segmentation processing, recombination processing, clustering processing, discrete cosine transform DCT, octree transform, K-dimensional tree transform, wavelet transform, weighting, residual calculation, fast Fourier transform FFT, inverse fast Fourier transform IFFT, and quantization processing.

4. The method according to any one of claims 1 to 3, wherein
a first information group corresponds to a first processing mode, the first information group is one of the G information groups, and the first processing mode comprises: the first information group corresponds to one of the S information segments; and the first communication apparatus performs the pre-processing on the one of the S information segments to obtain the first information group;
a first information group corresponds to a second processing mode, the first information group is one of the G information groups, and the second processing mode comprises: the first information group corresponds to a plurality of information segments in the S information segments; and the first communication apparatus performs the pre-processing on the plurality of information segments to obtain the first information group;
a first information group corresponds to a third processing mode, the first information group is one of the G information groups, and the third processing mode comprises: the first information group corresponds to one of the S information segments and one or more information groups, and the one or more information groups belong to the G information groups; and the first communication apparatus performs the pre-processing on the one or more information groups and the one of the S information segments to obtain the first information group;
a first information group corresponds to a fourth processing mode, the first information group is one of the G information groups, and the fourth processing mode comprises: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the first communication apparatus performs the pre-processing on the one of the S information segments and the one or more information segments or the one or more information groups corresponding to the first information group, to obtain the first information group; or
a first information group corresponds to a fifth processing mode, the first information group is one of the G information groups, and the fifth processing mode comprises: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the first communication apparatus performs the pre-processing on the one of the S information segments and the at least one of the one or more information segments and the one or more information groups, to obtain the first information group.

5. The method according to claim 4, wherein in the fifth processing mode, the one or more information segments are also from the S information segments.

6. The method according to any one of claims 1 to 5, wherein the method further comprises:
receiving, by the first communication apparatus, first indication information from the second communication apparatus, wherein the first indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, and an index of a transport block corresponding to the G information groups.

7. The method according to any one of claims 1 to 3, wherein the determining, by the first communication apparatus, C to-be-encoded code blocks based on the G information groups comprises:
screening, by the first communication apparatus, the G information groups based on Y screening modes, to obtain B information blocks, wherein each of the B information blocks corresponds to one screening mode, B is an integer greater than or equal to 1, and Y is an integer greater than or equal to 1; and
determining, by the first communication apparatus, the C to-be-encoded code blocks based on the B information blocks.

8. The method according to claim 7, wherein
a first information group corresponds to a sixth processing mode, the first information group is one of the G information groups, and the sixth processing mode comprises: the first information group corresponds to one of the S information segments; and the first communication apparatus performs the pre-processing on the one of the S information segments to obtain the first information group;
a first information group corresponds to a seventh processing mode, the first information group is one of the G information groups, and the seventh processing mode comprises: the first information group corresponds to a plurality of information segments in the S information segments; and the first communication apparatus performs the pre-processing on the plurality of information segments to obtain the first information group;
a first information group corresponds to an eighth processing mode, the first information group is one of the G information groups, and the eighth processing mode comprises: the first information group corresponds to one of the S information segments and one or more information groups, and the one or more information groups belong to the G information groups; and the first communication apparatus performs the pre-processing on the one or more information groups and the one of the S information segments to obtain the first information group;
a first information group corresponds to a ninth processing mode, the first information group is one of the G information groups, and the ninth processing mode comprises: the first information group corresponds to one of the S information segments and one or more information blocks, and the one or more information blocks belong to the B information blocks; and the first communication apparatus performs the pre-processing on the one or more information blocks and the one of the S information segments to obtain the first information group;
a first information group corresponds to a tenth processing mode, the first information group is one of the G information groups, and the tenth processing mode comprises: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the first communication apparatus performs the pre-processing on the one of the S information segments and the one or more information segments, the one or more information groups, or the one or more information blocks corresponding to the first information group, to obtain the first information group; or
a first information group corresponds to an eleventh processing mode, the first information group is one of the G information groups, and the eleventh processing mode comprises: the first information group corresponds to one of the S information segments, and the first information group further corresponds to at least one of the following: one or more information segments, one or more information groups, and one or one information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the first communication apparatus performs the pre-processing on the one of the S information segments and the at least one of the one or more information segments, the one or more information groups, and the one or more information blocks, to obtain the first information group.

9. The method according to claim 8, wherein in the eleventh processing mode, the one or more information segments are also from the S information segments.

10. The method according to any one of claims 7 to 9, wherein the method further comprises:
receiving, by the first communication apparatus, second indication information from the second communication apparatus, wherein the second indication information indicates at least one of the following: sizes of the S information segments, the processing mode corresponding to each of the G information groups, an operation corresponding to the pre-processing, an index of an information segment corresponding to the G information groups, an index of an information group corresponding to the G information groups, an index of an information block corresponding to the G information groups, and an index of a transport block corresponding to the G information groups.

11. The method according to any one of claims 7 to 10, wherein a first information block corresponds to a first screening mode, the first information block is one of the B information blocks, and the first screening mode comprises: the first information block corresponds to one of the G information groups; and the first communication apparatus performs bit or symbol selection on the information group according to a first screening principle, to obtain the first information block; or
a first information block corresponds to a second screening mode, the first information block is one of the B information blocks, and the second screening mode comprises: the first information block corresponds to a plurality of information groups in the G information groups; and the first communication apparatus performs bit or symbol selection on the plurality of information groups according to a second screening principle, to obtain the first information block.

12. The method according to any one of claims 7 to 11, wherein the method further comprises:
receiving, by the first communication apparatus, third indication information from the second communication apparatus, wherein the third indication information indicates at least one of the following: sizes of the B information blocks, a screening mode, a screening principle, and an index of a corresponding information group.

13. The method according to any one of claims 7 to 12, wherein the determining, by the first communication apparatus, the C to-be-encoded code blocks based on the B information blocks comprises:
determining, by the first communication apparatus, a mapping mode corresponding to the B information blocks; and
mapping, by the first communication apparatus, the B information blocks to the C to-be-encoded code blocks in the mapping mode.

14. The method according to claim 13, wherein the B information blocks correspond to a first mapping mode, and the first mapping mode comprises:
mapping, by the first communication apparatus, the B information blocks to the C to-be-encoded code blocks based on a first mapping relationship, wherein
the first mapping relationship comprises that the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

15. The method according to claim 13 or 14, wherein the method further comprises:
receiving, by the first communication apparatus, fourth indication information of the second communication apparatus, wherein the fourth indication information indicates at least one of the following: the mapping mode corresponding to the B information blocks and the sizes of the C to-be-encoded code blocks.

16. The method according to any one of claims 7 to 15, wherein the method further comprises:
performing, by the first communication apparatus, entropy encoding on each of the B information blocks, to obtain B entropy-encoded information blocks; and
the determining, by the first communication apparatus, the C to-be-encoded code blocks based on the B information blocks comprises:
determining, by the first communication apparatus, the C to-be-encoded code blocks based on the B entropy-encoded information blocks.

17. The method according to claim 16, wherein the method further comprises:
receiving, by the first communication apparatus, fifth indication information from the second communication apparatus, wherein the fifth indication information indicates at least one of the following: enabling of the entropy encoding by the first communication apparatus and an operation corresponding to the entropy encoding.

18. The method according to any one of claims 1 to 17, wherein the converting, by the first communication apparatus, the first transport block into S information segments comprises:
segmenting, by the first communication apparatus, the first transport block into the S information segments according to a segmentation criterion.

19. The method according to claim 18, wherein the method further comprises:
receiving, by the first communication apparatus, sixth indication information from the second communication apparatus, wherein the sixth indication information indicates at least one of the following: segmenting the first transport block in a segmentation manner, and a segmentation parameter.

20. A decoding method, wherein the method comprises:
obtaining, by a second communication apparatus, an encoded code block of a first communication apparatus;
performing, by the second communication apparatus, channel decoding on the encoded code block to obtain C to-be-encoded code blocks, wherein C is an integer greater than or equal to 1;
determining, by the second communication apparatus, G information groups based on the C to-be-encoded code blocks, wherein G is an integer greater than or equal to 1;
performing, by the second communication apparatus, inverse processing on the G information groups based on X' inverse processing modes, to obtain S information segments, wherein each of the G information groups corresponds to one of the X' inverse processing modes, and S is an integer greater than or equal to 1; and
determining, by the second communication apparatus, a first transport block based on the S information segments, wherein a sum of sizes of the C to-be-encoded code blocks is less than a size of the first transport block.

21. The method according to claim 20, wherein the method further comprises:
determining, by the second communication apparatus, the inverse processing mode corresponding to each of the G information groups.

22. The method according to claim 20 or 21, wherein
a first information group corresponds to a first inverse processing mode, the first information group is one of the G information groups, and the first inverse processing mode comprises: the first information group corresponds to one of the S information segments; and the second communication apparatus performs the inverse processing on the first information group to obtain the information segment;
a first information group corresponds to a second inverse processing mode, the first information group is one of the G information groups, the first information group corresponds to the second inverse processing mode, and the second inverse processing mode comprises: the first information group corresponds to a plurality of information segments in the S information segments; and the second communication apparatus performs the inverse processing on the first information group to obtain at least one information segment in the plurality of information segments;
a first information group corresponds to a third inverse processing mode, the first information group is one of the G information groups, and the third inverse processing mode comprises: the first information group corresponds to one of the S information segments and one or more information groups, and the one or more information groups belong to the G information groups; and the second communication apparatus performs the inverse processing on the first information group to obtain the one of the S information segments;
a first information group corresponds to a fourth inverse processing mode, the first information group is one of the G information groups, and the fourth inverse processing mode comprises: the first information group corresponds to one of the S information segments, and the first information group further corresponds to one or more information segments or one or more information groups; the one or more information segments are from an information segment corresponding to a second transport block, and the one or more information groups are from an information group corresponding to the second transport block; the second transport block is a transport block between the first communication apparatus and the second communication apparatus; and the second communication apparatus performs the inverse processing on the first information group to obtain the one of the S information segments; or
a first information group corresponds to a fifth inverse processing mode, the first information group is one of the G information groups, and the fifth inverse processing mode comprises: the first information group corresponds to one of the S information segments, and the first information group further corresponds to at least one of the following: one or more information segments and one or more information groups; the one or more information segments are from an information segment corresponding to a second transport block, and the one or more information groups are from an information group corresponding to the first transport block and/or an information group corresponding to the second transport block; the second transport block is a transport block between the first communication apparatus and the second communication apparatus; and the second communication apparatus performs the inverse processing on the first information group to obtain the one of the S information segments.

23. The method according to claim 22, wherein in the fifth inverse processing mode, the one or more information segments are also from the S information segments.

24. The method according to any one of claims 20 to 23, wherein the method further comprises:
sending, by the second communication apparatus, first indication information to the first communication apparatus, wherein the first indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, and an index of a transport block corresponding to the G information groups.

25. The method according to claim 20 or 21, wherein the determining, by the second communication apparatus, G information groups based on the C to-be-encoded code blocks comprises:
determining, by the second communication apparatus, B information blocks based on the C to-be-encoded code blocks, wherein B is an integer greater than or equal to 1; and
restoring, by the second communication apparatus, the B information blocks to the G information groups based on Z restoration modes, wherein each of the B information blocks corresponds to one of the Z restoration modes, and Z is an integer greater than or equal to 1.

26. The method according to claim 25, wherein a first information group corresponds to a sixth inverse processing mode, the first information group is one of the G information groups, and the sixth inverse processing mode comprises: the first information group corresponds to one of the S information segments; and the second communication apparatus performs the inverse processing on the first information group to obtain the information segment;
a first information group corresponds to a seventh inverse processing mode, the first information group is one of the G information groups, the first information group corresponds to the seventh inverse processing mode, and the seventh inverse processing mode comprises: the first information group corresponds to a plurality of information segments in the S information segments; and the second communication apparatus performs the inverse processing on the first information group to obtain at least one information segment in the plurality of information segments;
a first information group corresponds to an eighth inverse processing mode, the first information group is one of the G information groups, and the eighth inverse processing mode comprises: the first information group corresponds to one of the S information segments and one or more information groups, and the one or more information groups belong to the G information groups; and the second communication apparatus performs the inverse processing on the first information group to obtain the one of the S information segments;
a first information group corresponds to a ninth inverse processing mode, the first information group is one of the G information groups, and the ninth inverse processing mode comprises: the first information group corresponds to one of the S information segments and one or more information blocks, and the one or more information blocks belong to the B information blocks; and the second communication apparatus performs the inverse processing on the first information group to obtain the one of the S information segments;
a first information group corresponds to a tenth inverse processing mode, the first information group is one of the G information groups, and the tenth inverse processing mode comprises: the first information group corresponds to one of the S information segments, and the first information group further corresponds to one or more information segments, one or more information groups, or one or more information blocks; the one or more information segments are from an information segment corresponding to a second transport block, the one or more information groups are from an information group corresponding to the second transport block, and the one or more information blocks are from an information block corresponding to the second transport block; the second transport block is a transport block between the first communication apparatus and the second communication apparatus; and the second communication apparatus performs the inverse processing on the first information group to obtain the one of the S information segments; or
a first information group corresponds to an eleventh inverse processing mode, the first information group is one of the G information groups, and the eleventh inverse processing mode comprises: the first information group corresponds to one of the S information segments, and the first information group further corresponds to at least one of the following: one or more information segments, one or more information groups, and one or more information blocks; the one or more information segments are from an information segment corresponding to a second transport block, the one or more information groups are from an information group corresponding to the first transport block and/or an information group corresponding to the second transport block, and the one or more information blocks are from an information block corresponding to the first transport block and/or an information block corresponding to the second transport block; the second transport block is a transport block between the first communication apparatus and the second communication apparatus; and the second communication apparatus performs the inverse processing on the first information group to obtain the one of the S information segments.

27. The method according to claim 26, wherein in the eleventh inverse processing mode, the one or more information segments are also from the S information segments.

28. The method according to any one of claims 25 to 27, wherein the method further comprises:
sending, by the second communication apparatus, second indication information to the first communication apparatus, wherein the second indication information indicates at least one of the following: sizes of the S information segments, a processing mode corresponding to each of the G information groups, an operation corresponding to pre-processing, an index of an information segment corresponding to the G information groups, an index of an information group corresponding to the G information groups, an index of an information block corresponding to the G information groups, and an index of a transport block corresponding to the G information groups.

29. The method according to any one of claims 25 to 28, wherein
a first information block corresponds to a first restoration mode, the first information block is one of the B information blocks, and the first restoration mode comprises: the first information block corresponds to one of the G information groups; and the second communication apparatus performs bit or symbol restoration on the first information block according to a first restoration principle, to obtain all or a part of bits or symbols of the information group; or
a first information block corresponds to a second restoration mode, the first information block is one of the B information blocks, and the second restoration mode comprises: the first information block corresponds to a plurality of information groups in the G information groups;
and the second communication apparatus performs bit or symbol restoration on the first information block according to a second restoration principle, to obtain all or a part of bits or symbols of the plurality of information groups.

30. The method according to any one of claims 25 to 29, wherein the method further comprises:
sending, by the second communication apparatus, third indication information to the first communication apparatus, wherein the third indication information indicates at least one of the following: sizes of the B information blocks, a screening mode, a screening principle, and an index of a corresponding information group.

31. The method according to any one of claims 25 to 30, wherein the determining, by the second communication apparatus, B information blocks based on the C to-be-encoded code blocks comprises:
determining, by the second communication apparatus, an inverse mapping mode corresponding to the C to-be-encoded code blocks; and
inversely mapping, by the second communication apparatus, the C to-be-encoded code blocks to the B information blocks in the inverse mapping mode.

32. The method according to claim 31, wherein the C to-be-encoded code blocks correspond to a first inverse mapping mode, and the first inverse mapping mode comprises:
inversely mapping, by the second communication apparatus, the C to-be-encoded code blocks to the B information blocks based on a first mapping relationship, wherein
the first mapping relationship comprises: the B information blocks are in one-to-one correspondence with the C to-be-encoded code blocks, and B is equal to C; each of the C to-be-encoded code blocks corresponds to a plurality of information blocks in the B information blocks; or each of the B information blocks corresponds to a plurality of to-be-encoded code blocks in the C to-be-encoded code blocks.

33. The method according to claim 31 or 32, wherein the method further comprises:
sending, by the second communication apparatus, fourth indication information to the first communication apparatus, wherein the fourth indication information indicates at least one of the following: a mapping mode of the B information blocks and the sizes of the C to-be-encoded code blocks.

34. The method according to any one of claims 25 to 33, wherein the method further comprises:
performing, by the second communication apparatus, entropy decoding on the B information blocks, to obtain B entropy-decoded information blocks.

35. The method according to claim 34, wherein the method further comprises:
sending, by the second communication apparatus, fifth indication information to the first communication apparatus, wherein the fifth indication information indicates at least one of the following: enabling of entropy encoding by the first communication apparatus and an operation corresponding to the entropy encoding.

36. The method according to any one of claims 20 to 35, wherein the determining, by the second communication apparatus, a first transport block based on the S information segments comprises:
combining, by the second communication apparatus, the S information segments into the first transport block according to a combination criterion.

37. The method according to claim 36, wherein the method further comprises:
sending, by the second communication apparatus, sixth indication information to the first communication apparatus, wherein the sixth indication information indicates at least one of the following: segmenting the first transport block in a segmentation manner and a segmentation parameter.

38. A communication apparatus, wherein the communication apparatus comprises a processing module and a transceiver module; and
the processing mode is configured to perform the processing operation according to any one of claims 1 to 19, and the transceiver module is configured to perform the sending/receiving operation according to any one of claims 1 to 19; or
the processing mode is configured to perform the processing operation according to any one of claims 20 to 37, and the transceiver module is configured to perform the sending/receiving operation according to any one of claims 20 to 37.

39. A communication apparatus, wherein the communication apparatus comprises an input/output interface and a logic circuit; and
the input/output interface is configured to perform an input or output operation in the method according to any one of claims 1 to 19, and the logic circuit is configured to perform a processing operation according to any one of claims 1 to 19; or
the logic circuit is configured to perform the processing operation according to any one of claims 20 to 37, and the input/output interface is configured to perform an input or output operation of the method according to any one of claims 20 to 37.

40. A communication apparatus, wherein the communication apparatus comprises a processor, and the processor is configured to execute a computer program or computer instructions in a memory, to perform the method according to any one of claims 1 to 19, or perform the method according to any one of claims 20 to 37.

41. The communication apparatus according to claim 40, wherein the communication apparatus further comprises the memory.

42. A computer-readable storage medium, wherein the computer-readable storage medium stores a computer program, and when the computer program is executed by a communication apparatus, the communication apparatus is enabled to perform the method according to any one of claims 1 to 19, or the communication apparatus is enabled to perform the method according to any one of claims 20 to 37.

43. A communication system, comprising a first communication apparatus that performs the method according to any one of claims 1 to 19, and a second communication apparatus that performs the method according to any one of claims 20 to 37.
